(19) Europäisches Patentamt
European Patent Office
Office européen des brevets

(11) EP 4 227 807 A1

(12) **EUROPEAN PATENT APPLICATION**
published in accordance with Art. 153(4) EPC

(43) Date of publication:
**16.08.2023 Bulletin 2023/33**

(21) Application number: **21891122.0**

(22) Date of filing: **10.11.2021**

(51) International Patent Classification (IPC):
***G06F 9/54*** *(2006.01)*

(52) Cooperative Patent Classification (CPC):
**G06F 9/54; G06F 40/106; G06F 40/279; H04M 1/72403; H04M 1/72436**

(86) International application number:
**PCT/CN2021/129728**

(87) International publication number:
**WO 2022/100602 (19.05.2022 Gazette 2022/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2020 CN 202011268409**

(71) Applicant: **Huawei Technologies Co., Ltd.**
**Shenzhen, Guangdong 518129 (CN)**

(72) Inventors:
- **ZHAO, Yilin**
  **Shenzhen, Guangdong 518129 (CN)**
- **HONG, Fangyu**
  **Shenzhen, Guangdong 518129 (CN)**
- **WANG, Zhiyuan**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD FOR DISPLAYING INFORMATION ON ELECTRONIC DEVICE, AND ELECTRONIC DEVICE**

(57) This application discloses a method for displaying information on an electronic device and an electronic device that are applied to the field of optical character recognition in the field of artificial intelligence (Artificial Intelligence, AI). The method includes: detecting, on a display interface of a first application, a first operation performed by a user on first text information displayed on the interface, where the first text information includes a jump code sequence, and the first text information is generated by a second application; obtaining first information related to the jump code sequence from the second application based on the first operation; and displaying preview information related to the jump code sequence based on the first information. In this way, the user can view the preview information related to the jump code sequence in the first text information generated by the second application without opening the second application, thereby saving time of the user, reducing complexity of operations performed by the user on the electronic device, improving interaction efficiency of the electronic device, and improving user experience.

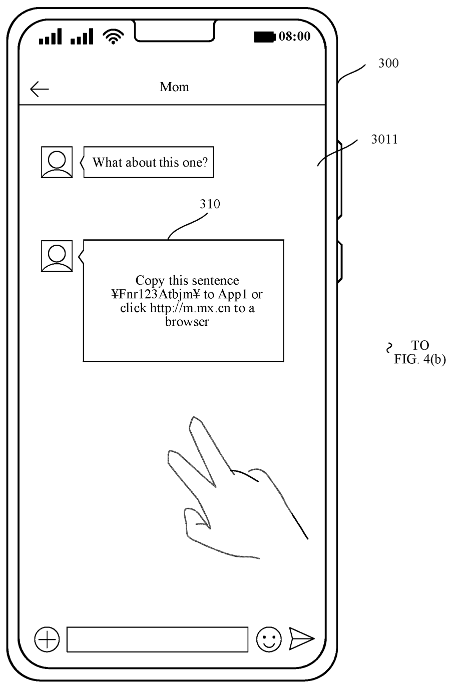


FIG. 4(a)

EP 4 227 807 A1

## Description

This application claims priority to Chinese Patent Application No. 202011268409.3, filed with the China National Intellectual Property Administration on November 13, 2020 and entitled "METHOD FOR DISPLAYING INFORMATION ON ELECTRONIC DEVICE AND ELECTRONIC DEVICE", which is incorporated herein by reference in its entirety.

## TECHNICAL FIELD

This application relates to the field of artificial intelligence, and more specifically, to a method for displaying information on an electronic device and an electronic device.

## BACKGROUND

When text information (the text information is generated by a second application) with a jump code sequence is displayed on an interface of a first application that is currently displayed on an electronic device, and if a user wants to open an interface corresponding to the text information, the user needs to first manually copy the text information with the jump code sequence to a clipboard; and then the user needs to open the second application, that is, the user needs to switch an interface displayed by the electronic device from the interface of the first application to an interface of the second application, and the second application reads content copied in the clipboard, parses the content copied in the clipboard, and jumps to the interface corresponding to the text information with the jump code sequence. The process is complex and highly time-consuming.

In addition, because a shielding mechanism is set for applications on some electronic devices, there is a case that a user cannot copy text information that is generated by some applications and that carries jump code sequences to a clipboard. Consequently, the user cannot open an interface corresponding to the text information that carries the jump code sequences, resulting in poor user experience.

## SUMMARY

This application provides a method and an apparatus for displaying information on an electronic device. On an interface of a first application currently opened by an electronic device, preview information corresponding to an interface that is generated by a second application and that corresponds to text information including a jump code sequence may be displayed based on an operation of a user, so that time of the user can be saved, complexity of operations of the user on the electronic device can be reduced, interaction efficiency of the electronic device can be improved, and user experience can be improved.

According to a first aspect, a method for displaying information on an electronic device is provided, where the method includes: detecting a first operation performed, on an interface of a first application, on first text information displayed on the interface, where the first text information includes a jump code sequence, and the first text information is generated by a second application; obtaining first information related to the jump code sequence from the second application based on the first operation; and displaying preview information related to the jump code sequence based on the first information.

A specific form of the first text information is not limited in embodiments of this application.

For example, the first text information indicates a link to a commodity, or the first text information indicates a link to adding a friend, or the first text information indicates a link to receiving a red envelope, or the first text information indicates an assistance link.

For example, the assistance link may be an assistance link to grabbing a red envelope, an assistance link to grabbing a ticket, or an upgrade assistance link.

A display format of the first text information is not limited in embodiments of this application.

For example, the display format of the first text information may be a picture format or a text format.

The first application and the second application are different applications.

For example, the first application is a chat application, and the second application is a shopping application or the second application is another chat application.

For example, the first application is an application for viewing a picture, and the second application is a shopping application or the second application is a chat application.

Elements in the jump code sequence are arranged according to a specific rule. That is, the jump code sequence is formed by arranging a plurality of characters according to the specific rule.

For example, a first element of the jump code sequence and a last element of the jump code sequence are a same character.

For example, the elements in the jump code sequence may be arranged according to an enclosure character, numbers and/or English characters, and an enclosure character.

For example, the jump code sequence may be "¥Fnr123Atbjm¥". ¥ is the enclosure character.

For another example, the jump code sequence may be "8EnLtb80h8". 8 is the enclosure character.

A specific form of the first operation is not limited in embodiments of this application.

For example, the first operation may include at least one of the following: a double-finger pressing operation, a single-finger touching and holding operation, an operation of one or more times of tapping performed through a knuckle, or a circle-selection operation performed through a finger or a knuckle.

In embodiments of this application, first text information generated by a second application is displayed on an interface of a first application, where the first text information includes a jump code sequence, first information related to the jump code sequence included in the first text information is obtained from the second application based on a first operation on the first text information, and preview information related to the jump code sequence included in the first text information is displayed based on the first information. In this way, a user can view the preview information related to the jump code sequence in the first text information generated by the second application without opening the second application, thereby saving time of the user, reducing complexity of operations performed by the user on the electronic device, improving interaction efficiency of the electronic device, and improving user experience.

With reference to the first aspect, in some implementations of the first aspect, before the obtaining first information related to the jump code sequence from the second application, the method further includes: recognizing the first text information to obtain jump code sequence information, where the jump code sequence information includes N jump code sequences, and N is a positive integer greater than or equal to 1; and sending a request message to the second application, where the request message includes the jump code sequence information, and the request message is used to request the first information.

The first text information is recognized to obtain the jump code sequence information including the N jump code sequences, which can overcome a sentence accuracy bottleneck of recognizing a jump code sequence to a great extent, and improve accuracy of jumping to a target interface. In addition, a request message for requesting the first information related to the jump code sequence is sent to the second application, where the request message includes the jump code sequence information, so that the first information can be obtained from the second application. In this way, the user can obtain the first information related to the jump code sequence in the first text information generated by the second application without opening the second application, thereby saving time of the user, reducing complexity of operations performed by the user on the electronic device, improving interaction efficiency of the electronic device, and improving user experience.

With reference to the first aspect, in some implementations of the first aspect, the first text information further includes content other than the jump code sequence, and the recognizing the first text information to obtain jump code sequence information includes: performing text region detection on the first text information to obtain a text region in the first text information; performing text recognition on the text region in the first text information to obtain a first recognition result sequence; and determining the jump code sequence information from the first recognition result sequence according to a jump code sequence rule.

For example, the first text information may be "copy this sentence ¥Fnr123Atbjm¥ to App1 or click http://m.mx.cn to a browser". The "copy this sentence" and "to App1 or click http://m.mx.cn to a browser" are content other than the jump code sequence in the first text information.

For example, the first text information may be "copy this password 8EnLtb80h8 and open App4 to search, to add me as a friend". "Copy this password" and "Open App4 to search, to add me as a friend" are content other than the jump code sequence in the first text information.

It should be understood that the jump code sequence rule is an arrangement rule of the jump code sequence.

In some embodiments, the jump code sequence rule may be a simple rule.

For example, the jump code sequence rule includes: A first element of the jump code sequence and a last element of the jump code sequence are a same character; and/or a quantity of elements in the jump code sequence and the elements in the jump code sequence may be formed by specific characters; and/or the elements in the jump code sequence are arranged according to an enclosure character, numbers and/or English characters, and an enclosure character.

In some other embodiments, the jump code sequence rule may be a specific arrangement rule.

For example, the jump code sequence rule includes a plurality of jump code sequences.

The text region detection and the text recognition are sequentially performed on the first text information to obtain the first recognition result sequence, and the jump code sequence information is determined from the first recognition result sequence according to the jump code sequence rule, that is, the jump code sequence is extracted from the first text information, so that the second application needs to recognize only the jump code sequence of the first text information to obtain the first information related to the jump code sequence, to improve accuracy of recognizing the first text information.

With reference to the first aspect, in some implementations of the first aspect, the first text information further includes content other than the jump code sequence, and the recognizing the first text information to obtain jump code sequence information includes: performing text region detection on the first text information to obtain a text region in the first text information; performing text recognition on the text region in the first text information to obtain a first recognition result sequence; determining a text region of a jump code from the text region in the first text information based on a jump code table and a mapping relationship between the first recognition result sequence and the text region in the first text information; performing text recognition on the text region of the jump code to obtain a third recognition result sequence; and determining the jump code sequence information from the third recognition result sequence according to a jump code sequence rule.

In some embodiments, the jump code table may include a plurality of characters. Each of the plurality of characters may be an element in the jump code sequence.

For example, the jump code table may be a Chinese-English code word table, an American standard code for information interchange (American standard code for information interchange, ASCII) table, or the like.

For example, if downsampling is a, the first recognition result sequence is obtained based on the text region in the first text information and by using the downsampling rate a. In this case, the mapping relationship between the first recognition result sequence and the text region in the first text information is that each element of the first recognition result sequence corresponds to a range covered by a pixels in the text region in the first text information.

Coarse-precision text recognition is first performed on the first text information, to extract the text region of the jump code from the text region in the first text information based on the jump code table, then fine-precision text recognition is performed on the extracted text region of the jump code, and the jump code sequence information is determined from a text recognition result of the text region of the jump code according to the jump code rule, so that the second application needs to recognize only the jump code sequence of the first text information to obtain the first information related to the jump code sequence, to improve accuracy of recognizing the first text information.

With reference to the first aspect, in some implementations of the first aspect, the determining a text region of a jump code from the text region in the first text information based on a jump code table and a mapping relationship between the first recognition result sequence and the text region in the first text information includes: mapping, based on the jump code table, each character that is in the first recognition result sequence and that is not included in the jump code table to a first character, where the first character is not included in the jump code table; removing the first character from the first recognition result sequence to obtain a second recognition result sequence; and determining the text region of the jump code from the text region in the first text information based on the second recognition result sequence and a mapping relationship between the second recognition result sequence and the text region in the first text information.

For example, the first character is a "#" character, a " *" character, or the like.

First, a character that is in the first text information and that is not included in the jump code table is mapped to a first character, and then the first character in the first text information is removed, to obtain a jump code in the first text information. In this way, a jump code sequence is subsequently extracted from the jump code, to improve accuracy of extracting the jump code sequence in the first text information.

With reference to the first aspect, in some implementations of the first aspect, before the performing text recognition on the text region of the jump code, the method further includes: increasing a resolution of the text region of the jump code.

Before the text recognition is performed on the text region of the jump code sequence, a resolution of the text region of the jump code sequence is increased, to improve accuracy of recognizing the jump code sequence.

With reference to the first aspect, in some implementations of the first aspect, the jump code sequence information further includes confidence levels respectively corresponding to the N jump code sequences, and the first information includes first information related to a jump code sequence with a highest confidence level in the N jump code sequences.

With reference to the first aspect, in some implementations of the first aspect, the interface of the first application further includes second text information, the first information includes first information related to the N jump code sequences, and the method further includes: recognizing the second text information to obtain text content of the second text information; and performing matching on the text content of the second text information and the first information related to the N jump code sequences, and using first information related to a jump code sequence with a highest matching degree in the N jump code sequences as the first information.

In some embodiments, the recognizing the second text information may include: first performing text region detection on the second text information, and performing text recognition on a detected text region in the second text information.

With reference to content indicated by another text information on the interface of the first application, the first information related to the jump code sequence in the first text information can be more accurately obtained from the first information related to the plurality of jump code sequences.

With reference to the first aspect, in some implementations of the first aspect, the second application is an application in a target application list, and the target application list includes an identifier of at least one application.

By setting the target application list, the second application can be quickly determined, to shorten time for recognizing the first text information and improve efficiency of recognizing the first text information.

With reference to the first aspect, in some implementations of the first aspect, the method further includes: recognizing the content other than the jump code sequence in the first text information, to obtain the second application information, where the second application information indicates an identifier of the second application; and determining the second application based on the second application information.

With reference to content other than the jump code sequence in the first text information, the second application can be more accurately determined, to improve efficiency of the first text information and a recognition rate of the first text information.

With reference to the first aspect, in some implementations of the first aspect, the determining the second application based on the second application information includes: matching, in the target application list, a second application indicated by the second application information; and determining, when the second application indicated by the second application information is successfully matched in the target application list, the second application indicated by the second application information as the second application.

With reference to the target application list and the second application indicated by the second application information, the second application can be more accurately determined, to improve efficiency of recognizing the first text information and a recognition rate of the first text information.

With reference to the first aspect, in some implementations of the first aspect, the method further includes: displaying a prompt window, where the prompt window includes identifiers of a plurality of applications; detecting a third operation performed on the prompt window; and determining, based on the third operation, an application corresponding to the third operation as the second application.

The user selects the second application via the prompt window, so that the efficiency of recognizing the first text information and the recognition rate of the first text information can be improved, to save time of the user

With reference to the first aspect, in some implementations of the first aspect, before the recognizing the first text information to obtain jump code sequence information, the method further includes: obtaining a picture corresponding to the first text information; and the recognizing the first text information to obtain jump code sequence information includes: recognizing the picture corresponding to the first text information to obtain the jump code sequence information.

With reference to the first aspect, in some implementations of the first aspect, a plurality of pieces of first text information are displayed on the interface of the first application, and the displaying preview information related to the jump code sequence based on the first information includes: displaying, based on the first information, preview information related to a jump code sequence included in each piece of first text information.

In some embodiments, the plurality of pieces of first text information may be all generated by a same application (for example, the second application). In some other embodiments, at least two pieces of first text information in the plurality of pieces of first text information may be generated by different applications (for example, the second application and a third application).

A display format of the plurality of pieces of second text information is not limited in embodiments of this application.

The preview information related to the jump code sequence included in each piece of first text information may be displayed through the first operation, so that the user does not need to perform a plurality of operations, thereby saving time of the user, reducing complexity of operations performed by the user on the electronic device, improving interaction efficiency of the electronic device, and improving user experience.

With reference to the first aspect, in some implementations of the first aspect, the method further includes: detecting a second operation performed on the preview information; and invoking the second application based on the second operation, and displaying an interface related to the preview information.

With reference to the first aspect, in some implementations of the first aspect, the preview information includes preview information of the commodity; and/or the preview information includes the identifier of the second application; and/or the preview information includes an identifier of a third application; and/or the preview information includes menu options respectively corresponding to the plurality of applications; and/or the first operation includes at least one of the following: a double-finger pressing operation, a single-finger touching and holding operation, an operation of one or more times of tapping performed through a knuckle, or a circle-selection operation performed through a finger or a knuckle; and/or the second application is a shopping application; and/or the first information includes detailed information related to the jump code sequence; and/or the first character is a "#" character or a "*" character; and/or a first element of the jump code sequence and a last element of the jump code sequence are a same character.

According to a second aspect, an apparatus is provided. The apparatus is included in an electronic device, and the apparatus has a function of implementing the first aspect or any one of the implementations in the first aspect. The function may be implemented by hardware, or may be implemented by executing corresponding software by hardware. The hardware or the software includes one or more modules or units corresponding to the foregoing function.

According to a third aspect, an electronic device is provided, including one or more processors, a memory, and one or more computer programs. The one or more computer programs are stored in the memory. The one or more computer programs include instructions. When the instructions are executed by the electronic device, the electronic device is enabled to perform the method for displaying information on an electronic device in the first aspect or any one of the implementations in the first aspect.

According to a fourth aspect, a computer program product including instructions is provided. When the computer program product is run on an electronic device, the electronic device is enabled to perform the method for displaying information on an electronic device in the first aspect or any one of the implementations in the first aspect.

According to a fifth aspect, a computer-readable storage medium is provided, including instructions. When the instructions are run on an electronic device, the electronic device is enabled to perform the method for displaying information on an electronic device in the first aspect or any one of the implementations in the first aspect.

It should be noted that all or some of the computer program code may be stored in a first storage medium. The first storage medium may be encapsulated together with a processor, or may be encapsulated separately from a processor. This is not specifically limited in embodiments of this application.

According to a sixth aspect, a chip is provided. The chip includes a processor and a data interface, and the processor reads, through the data interface, instructions stored in a memory, to perform the method for displaying information on an electronic device in the first aspect or any one of the implementations in the first aspect.

Optionally, in an implementation, the chip may further include a memory. The memory stores instructions, and the processor is configured to execute the instructions stored in the memory. When the instructions are executed, the processor is configured to perform the method for displaying information on an electronic device in the first aspect or any one of the implementations in the first aspect.

## BRIEF DESCRIPTION OF DRAWINGS

FIG. 1 is a schematic diagram of a hardware structure of an electronic device according to an embodiment of this application;

FIG. 2 is a block diagram of a software structure according to an embodiment of this application;

FIG. 3 is a schematic diagram of an example of recognizing speech information in the conventional technology;

FIG. 4(a) to FIG. 4(f) are a group of graphical user interfaces according to an embodiment of this application;

FIG. 5(a) to FIG. 5(e) are another group of graphical user interfaces according to an embodiment of this application;

FIG. 6 is an exemplary flowchart of an example of recognizing first text information according to an embodiment of this application;

FIG. 7 is a schematic diagram of obtaining text content of first text information according to an embodiment of this application;

FIG. 8 is a schematic diagram of an example of obtaining a jump code in first text information according to an embodiment of this application;

FIG. 9(e) to FIG. 9(f) are another group of graphical user interfaces according to an embodiment of this application;

FIG. 10 is an exemplary flowchart of another example of recognizing first text information according to an embodiment of this application;

FIG. 11 is still another group of graphical user interfaces according to an embodiment of this application;

FIG. 12 is an exemplary flowchart of another example of recognizing first text information according to an embodiment of this application;

FIG. 13(a) to FIG. 13(e) are still another group of graphical user interfaces according to an embodiment of this application;

FIG. 14 is an exemplary flowchart of still another example of recognizing first text information according to an embodiment of this application;

FIG. 15(a) to FIG. 15(e) are still another group of graphical user interfaces according to an embodiment of this application;

FIG. 16 is an exemplary flowchart of still another example of recognizing first text information according to an embodiment of this application;

FIG. 17(a) to FIG. 17(f) are still another group of graphical user interfaces according to an embodiment of this application;

FIG. 18 is an exemplary flowchart of still another example of recognizing first text information according to an embodiment of this application;

FIG. 19 is an exemplary flowchart of a method for displaying information on an electronic device according to an embodiment of this application;

FIG. 20 is an exemplary flowchart of an example of a recognition method according to an embodiment of this application;

FIG. 21 is an exemplary diagram of a structure of an example of an electronic device according to an embodiment of this application; and

FIG. 22 is an exemplary diagram of a structure of another example of an electronic device according to an embodiment of this application.

## DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description in embodiments of this application, "a plurality of" means two or more than two.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more

A method provided in embodiments of this application may be applied to an electronic device, for example, a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules illustrated in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs, which execute program instructions to generate or change display information.

The NPU is a neural-network (neural-network, NN) computing processor. The NPU quickly processes input information based on a structure of a biological neural network, for example, based on a transfer mode between human brain neurons; and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) created during use of the electronic device 100, and the like. In addition, the internal memory 121 may include a high-speed random access memory, or may include a nonvolatile memory such as at least one disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor,

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100.

FIG. 2 is a block diagram of a software structure of the electronic device 100 according to this embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display screen, determine whether there is a status bar, perform screen locking, take a screenshot, and the like.

The content provider is configured to store and obtain data, and enable the data to be accessed by an application program. The data may include a video, an image, an audio, calls that are made and answered, a browsing history and bookmarks, an address book, and the like.

The view system includes visual controls such as a control for displaying a text and a control for displaying an image. The view system may be configured to construct an application program. A display interface may include one or more views. For example, a display interface including an SMS message notification icon may include a text display view and an image display view.

The phone manager is configured to provide a communication function for the electronic device 100, for example, management of call statuses (including answering, declining, and the like).

The resource manager provides various resources such as a localized character string, an icon, an image, a layout file, and a video file for an application program.

The notification manager enables an application program to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, an OpenGL ES), and a 2D graphics engine (for example, an SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The method provided in embodiments of this application relates to interaction between the application framework layer and the system library.

An instruction for implementing the method provided in embodiments of this application runs at the application program framework layer.

For ease of understanding, the following first describes related terms and concepts of a neural network that may be used in embodiments of this application.

(1) Neural network

The neural network may include a neuron. The neuron may be an operation unit that uses $x_s$ and an intercept of 1 as input. Output of the operation unit may be as follows:

$$h_{W,b}(x) = f(W^T x) = f(\sum_{s=1}^{n} W_s x_s + b)$$

s=1, 2, ..., or n, n is a natural number greater than 1, $W_s$ is a weight of $x_s$, and b is a bias of the neural unit. f is an activation function (activation function) of the neural unit, and is used to introduce a nonlinear feature into the neural network, to convert an input signal in the neural unit into an output signal. The output signal of the activation function may be used as an input of a next convolutional layer, and the activation function may be a sigmoid function. The neural network is a network constituted by connecting a plurality of single neurons together. To be specific, an output of a neuron may be an input to another neuron. An input of each neuron may be connected to a local receptive field of a previous layer to extract a feature of the local receptive field. The local receptive field may be a region including several neurons.

(2) Deep neural network

A deep neural network (deep neural network, DNN), also referred to as a multi-layer neural network, may be understood as a neural network having a plurality of hidden layers. The DNN is divided based on locations of different layers, so that the neural network in the DNN can be divided into three types: an input layer, hidden layers, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer.

Although the DNN seems to be complex, the DNN is actually not complex in terms of work at each layer, and is simply expressed as the following linear relationship expression: $\vec{y} = \alpha(W \cdot \vec{x} + \vec{b})$, where $\vec{x}$ is an input vector, $\vec{y}$ is an output vector, $\vec{b}$ is an offset vector, $W$ is a weight matrix (which is also referred to as a coefficient), and $\alpha()$ is an activation function. At each layer, the output vector $\vec{y}$ is obtained by performing such a simple operation on the input vector $\vec{x}$. Because the DNN has a large quantity of layers, there are also large quantities of coefficients $W$ and offset vectors $\vec{b}$. These parameters are defined in the DNN as follows: The coefficient $W$ is used as an example. It is assumed that in a DNN having three layers, a linear coefficient from a fourth neuron at a second layer to a second neuron at a third layer is defined as $W_{24}^{3}$. The superscript 3 represents a number of a layer in which the coefficient $W$ is located, and the subscript corresponds to an index 2 of the third layer as an output and an index 4 of the second layer as an input.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that there is no parameter $W$ at an input layer. In the deep neural network, more hidden layers make the network more capable of describing a complex case in the real world. Theoretically, a model with more parameters indicates higher complexity and a larger "capacity", and indicates that the model can be used to complete a more complex learning task. A process of training the deep neural network is a process of learning a weight matrix. An ultimate objective thereof is to obtain a weight matrix for all layers of a trained deep neural network (a weight matrix includes vectors $W$ of a plurality of layers).

(3) Convolutional neural network

A convolutional neural network (convolutional neuron network, CNN) is a deep neural network with a convolutional structure. The convolutional neural network includes a feature extractor that includes a convolutional layer and a sampling sublayer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neural units that are in a rectangular arrangement. Neural units at a same feature plane share a weight, and the weight shared herein is a convolution kernel. Weight sharing may be understood as that an image information extraction manner is irrelevant to a location. The convolution kernel may be initialized in a form of a matrix of a random size. In a training process of the convolutional neural network, the convolution kernel may obtain a reasonable weight through learning. In addition, a direct benefit of weight sharing is to reduce connections between the layers of the convolutional neural network while reducing a risk of overfitting.

(4) Optical character recognition (optical character recognition, OCR)

A text in an image can be converted into a text format through an OCR technology. The OCR may be divided into two steps: Step 1: Text region detection, that is, detecting where is a text region in an image; and step 2: Text content recognition, that is, recognizing content of a text in the text region.

The OCR is an important application scenario in the field of computer vision (computer vision, CV). The OCR is also a basic capability of a plurality of applications such as augmented reality (augmented reality, AR) and translation and understanding of image semantics.

(5) Connectionist temporal classification (connectionist temporal classification, CTC)

CTC is a loss (loss) calculation method, which is mainly applied to sequence recognition models such as a text recognition model and speech recognition model. Most sequence recognition models adopt a CNN structure, a recurrent neural network (recurrent neural network, RNN) structure, and a CTC structure. A Softmax loss is replaced with the CTC loss without requiring to align training samples. There are following two features:

(a) Blank (blank) characters are introduced to resolve a problem that there are no characters at some locations.
(b) A gradient is quickly calculated through recursion.

In embodiments of this application, a CTC sequence is mainly used, and a correspondence between the CTC sequence and a text recognition result or a speech recognition result is shown in FIG. 3. ∈ represents blank, and is a placeholder for distinguishing repeated characters. To be specific, repeated characters, for example, "w" and "r" in FIG. 3, between two blanks are combined into one character.

In the conventional technology, when text information (the text information is generated by a second application) with a jump code sequence is displayed on an interface of a first application that is currently displayed on an electronic device, and if a user wants to open an interface corresponding to the text information, the user needs to first manually copy the text information with the jump code sequence to a clipboard; and then the user needs to open the second application, that is, the user needs to switch an interface displayed by the electronic device from the interface of the first application to an interface of the second application, and the second application reads content copied in the clipboard, parses the content copied in the clipboard, and jumps to the interface corresponding to the text information with the jump code sequence. The process is complex and highly time-consuming.

In addition, because a shielding mechanism is set for applications on some electronic devices, there is a case that a user cannot copy texts that are generated by some applications and that carry jump code sequences to a clipboard. Consequently, the user cannot open an interface corresponding to text information that carries the jump code sequence. As a result, user experience is poor.

It can be learned that the solution in the conventional technology mainly has the following disadvantages.

(1) Complex operations

The solution based on the clipboard requires the user to perform complex manual operations, and needs to copy text information with a jump code sequence, which consumes a large amount of time.

(2) Low robustness

Due to competition between enterprises, a shielding mechanism is set for some social applications. As a result, text information with jump code sequences of some third-party applications cannot be copied to the clipboard, and the function is completely invalid.

(3) Poor visibility

Web page content of the text information with the jump code sequence cannot be previewed, and the user may be directed to a page that is not as expected.

(4) Low efficiency

For a case that a plurality of pieces of text information with jump code sequences exist, the existing solution can only process the text information one by one, which is low efficient.

Therefore, this application provides a method for displaying information on an electronic device. On an interface of a first application currently opened by an electronic device, preview information corresponding to an interface that is generated by a second application and that corresponds to text information including a jump code sequence may be displayed based on an operation of a user, so that time of the user can be saved, complexity of operations of the user on the electronic device can be reduced, interaction efficiency of the electronic device can be improved, and user experience can be improved.

For ease of understanding, in the following embodiments of this application, the method for displaying information on an electronic device in embodiments of this application is specifically described with reference to the accompanying drawings and application scenarios through an electronic device with the structures shown in FIG. 1 and FIG. 2 as an example.

FIG. 4(a) to FIG. 4(f), FIG. 5(a) to FIG. 5(e), FIG. 9(e) to FIG. 9(f), FIG. 11, FIG. 13(a) to FIG. 13(e), FIG. 15(a) to FIG. 15(e), and FIG. 17(a) to FIG. 17(f) are used as an example below to describe a graphical user interface (graphical user interface, GUI) provided in embodiments of this application.

A jump code sequence is displayed on an interface of a mobile phone 300 shown in FIG. 4(a) to FIG. 4(f), FIG. 5(a) to FIG. 5(e), FIG. 9(e) to FIG. 9(f), and FIG. 11, and the jump code sequence is presented by using a message. Two jump code sequences are displayed on an interface of the mobile phone 300 shown in FIG. 13(a) to FIG. 13(e), FIG. 15(a) to FIG. 15(e), and FIG. 17(a) to FIG. 17(f), and the two jump code sequences are presented by using different messages.

FIG. 4(a) to FIG. 4(f) are a group of GUIs according to an embodiment of this application.

Referring to FIG. 4(a), the GUI is a chat interface 3011 of a user with a mother when the user uses a chat application program of the mobile phone 300. In this case, the user receives a message 310 (in a text format) sent by the mother. The message 310 may correspond to a link to a commodity, and the message 310 may include a jump code sequence. Elements in the jump code sequence may be arranged according to an enclosure character, numbers and/or English characters, and an enclosure character. For example, as shown in FIG. 4(a), the jump code sequence is "¥Fnr123Atbjm¥", where ¥is the enclosure character. The message 310 further includes other content. For example, as shown in FIG. 4(a), the message 310 further includes "copy this sentence" and "to App1 or click http://rn.mx.cn to a browser". App1 is an application program that generates the message 310.

In some embodiments, the content indicated by the message 310 may be referred to as a password, and the password is used to jump to a target interface. For example, if the application program that generates the content indicated by the message 310 is a Taobao application program, the content indicated by the message 310 may be referred to as a Taobao password, and the Taobao password is used to jump to a commodity details interface. A total quantity of numbers and English characters in a jump code sequence included in the Taobao password is 9 to 15. For example, as shown in FIG. 4(a), the Taobao password is "copy this sentence ¥Fnr123Atbjm¥ to App1 or click http://rn.mx.cn to a browser".

In some embodiments, the content indicated by the message 310 may also be referred to as a link code. For example, the content indicated by the message 310 may be referred to as a commodity link code, a payment link code, a shopping link code, an assistance link code, a bargain link code, or the like.

In this case, the user may trigger, through a first operation, the mobile phone 300 to recognize text information on the current interface 3011 of the mobile phone 300.

Recognizing the text information on the current interface 3011 of the mobile phone 300 may be understood as obtaining a details page of a commodity corresponding to the jump code sequence in the text information on the current interface 3011 of the mobile phone 300.

A specific form of the first operation is not limited in embodiments of this application.

For example, the first operation may include an operation of pressing the current interface of the mobile phone 300 by using two fingers of the user, an operation of tapping a screen of the mobile phone 300 one or more times by using a knuckle of the user, an operation of touching and holding the current interface of the mobile phone 300 by using a single finger of the user (or in combination with another operation), an operation of circle-selection performed by using a finger or a knuckle of the user, or the like.

For example, as shown in FIG. 4(a), the user performs the operation of pressing the screen of the mobile phone 300 by using two fingers, to trigger the mobile phone 300 to recognize the text information on the current interface 3011 of the mobile phone 300.

After the mobile phone 300 detects the recognition operation performed by the user on the text information on the current interface 3011 of the mobile phone 300, the mobile phone 300 may recognize the text information on the current interface 3011 of the mobile phone 300. Specifically, FIG. 6 is a schematic diagram of an example in which the mobile phone 300 recognizes a text on the current interface 3011 of the mobile phone 300.

The following describes, with reference to FIG. 6, a process of recognizing the text information on the current interface 3011 of the mobile phone 300, which specifically includes S1 to S7. For other parts that are not described, refer to the following related descriptions of a method 1000. Details are not described herein again.

S1: A screenshot A shown in (a) in FIG. 6 is a full-screen screenshot that is of the current interface 3011 of the mobile phone 300 and that is obtained through the operation of pressing by using two fingers shown in FIG. 4(a).

S2: Perform text region detection on the screenshot A shown in (a) in FIG. 6, to obtain text regions of the screenshot A shown in (b) in FIG. 6. The text regions of the screenshot A include a text region 3101 to a text region 3107.

In addition, text region information of the screenshot A may be further obtained. For example, as shown in (b) in FIG. 6, the text region information of the screenshot A may include $a_1$ coordinates and $a_2$ coordinates in a rectangular box of the text region 3101, and a confidence level corresponding to the rectangular box of the text region 3101; as coordinates and $a_4$ coordinates in a rectangular box of the text region 3102, and a confidence level corresponding to the rectangular box of the text region 3102; as coordinates and as coordinates in a rectangular box of the text region 3103, and a confidence level corresponding to the rectangular box 3103 of the text region 3103; $a_7$ coordinates and as coordinates in a rectangular box of the text region 3104, and a confidence level corresponding to the rectangular box of the text region 3104; $a_9$ coordinates and $a_{10}$ coordinates in a rectangular box of the text region 3105, and a confidence level corresponding to the rectangular box of the text region 3105; an coordinates and $a_{12}$ coordinates in a rectangular box of the text region 3106, and a confidence level corresponding to the rectangular box of the text region 3106; and $a_{13}$ coordinates and $a_{14}$ coordinates in a rectangular box of the text region 3107, and a confidence level corresponding to the rectangular box of the text region 3107.

Optionally, image processing may be further performed on the text region of the screenshot A. For example, the rectangular boxes of the text regions included in the text region information of the screenshot A are corrected based on the coordinates of the rectangular boxes of the text regions included in the text region information of the screenshot A.

S3: Perform text recognition on the text region of the screenshot A shown in (b) in FIG. 6, for example, as shown in FIG. 7, directly perform window sliding on a feature map at the last layer through 8-times downsampling, to obtain a first recognition result sequence of the screenshot A; parse the first recognition result sequence according to a specific rule, to obtain text content of the screenshot A; and map each character that in the text content of the screenshot A and that is not included in a jump code table to a "#" character based on the jump code table, to obtain content shown in (c) in FIG. 6.

S4: Remove text regions occupied by the "#" characters in the text regions of the screenshot A shown in (b) in FIG. 6 with reference to the text regions of the screenshot A shown in (b) in FIG. 6 and the text content of the screenshot A shown in (c) in FIG. 6, to obtain a text region 3101 of a jump code and a text region 3104 of a jump code to a text region 3107 of a jump code shown in (d) in FIG. 6.

S5: Splice the text regions of the plurality of jump codes shown in (d) in FIG. 6 to form a text region of an entire jump code shown in (e) in FIG. 6.

S6: Perform text recognition on the text region of the jump code shown in (e) in FIG. 6 to obtain a third recognition result sequence; parse the third recognition result sequence according to a specific rule to obtain text content of the text region of the jump code shown in (e) in FIG. 6; and remove, according to a jump code sequence rule, a character that is in the text content of the text region of the jump code shown in (e) in FIG. 6 and that is not included in the jump code table, to obtain jump code sequence information shown in (f) in FIG. 6, where the jump code sequence information includes four (N=4) jump code sequences, and the four jump code sequences are respectively ¥FnrL23Atbjm¥, ¥Fnr123Atbjm¥, ¥FnrI23Atbjm¥, and ¥FnII23Atbjm¥. A confidence level corresponding to ¥Fnr123Atbjm¥, a confidence level corresponding to ¥FnrL23Atbjm¥, a confidence level corresponding to ¥FnrI23Atbjm¥, and a confidence level corresponding to ¥FnII23Atbjm¥ decrease sequentially.

For example, FIG. 8 is a schematic diagram of performing text recognition on the text region of the jump code shown in (e) in FIG. 6 to obtain the text content of the text region of the jump code shown in (e) in FIG. 6.

First, as shown in (b) in FIG. 8, a text region shown in (a) in FIG. 8 is input into a network model (which may be, for example, a network model corresponding to a CNN+CTC algorithm), and a predicted distribution diagram shown in (c) in FIG. 8 of the text region shown in (a) in FIG. 8 may be output through the network model; and then TOP four (N=4) prediction distributions shown in (d) in FIG. 8 are extracted based on the predicted distribution diagram, for example, text content corresponding to TOP 1 is "800¥FnrL23Atbjm¥App1httpmmxcn", and text content corresponding to TOP 2 is "800¥Fnr123Atbjm¥App1httpmmxcn".

S7: Successively invoke an interface of a second application, to recognize the jump code sequences in a sequence of ¥FnrL23Atbjm¥, ¥Fnr123Atbjm¥, ¥FnrI23Atbjm¥, and ¥FnII23Atbjm¥ shown in (f) in FIG. 6, and stop the recognition process when first information related to the jump code sequence is obtained. As shown in (f) in FIG. 6, ¥Fnr123Atbjm¥ is first recognized, and no detailed information related to ¥FnrL23Atbjm¥ is obtained. Then, ¥Fnr123Atbjm¥ continues to be recognized, detailed information related to ¥Fnr123Atbjm¥ is obtained (as shown in (g) in FIG. 6), and the recognition process is stopped, that is, ¥FnrI23Atbjm¥ and ¥FnII23Atbjm¥ do not need to be recognized

For how the electronic device determines the second application, refer to the following manner a, manner b, or manner c. Details are not described herein again.

The mobile phone 300 presents preview information related to the jump code sequence on a display interface of the mobile phone 300.

In a possible implementation, the second application may send the preview information related to the jump code sequence to a current application through an interface, and the current application may process the preview information related to the jump code sequence (for example, recombine content included in the preview information related to the jump code sequence), and present the processed information on the display interface of the mobile phone 300.

In another possible implementation, the second application may send the preview information related to the jump code sequence to the current application through the interface, and the current application directly presents, on the display interface of the mobile phone 300, the preview information related to the jump code sequence sent by the second application.

For example, referring to FIG. 4(b), a preview card 311 corresponding to the jump code sequence "¥Fnr123Atbjm¥" is displayed on the display interface 3011 of the mobile phone 300. The preview card 311 may include a recognition type (password recognition or text recognition) of the message 310, an information source (for example, App1 and App2) of the preview card, a preview brief diagram of an interface that corresponds to a link corresponding to the jump code sequence and that corresponds to the information source or a preview brief diagram of a commodity corresponding to the link, or the like.

As shown in FIG. 4(b), the recognition type of the message 310 may be presented through different child windows.

In some embodiments, as shown in FIG. 4(b), when it is recognized that there is a password on a current interface of the mobile phone 300, a child window of the password recognition may be preferentially presented.

In some embodiments, preview information that is related to jump code sequences and that is obtained from different second applications may be presented through different child windows.

For example, as shown in FIG. 4(b), preview information 3111 that is related to a jump code sequence, that corresponds to the message 310, and that is obtained from App1 is presented through a child window in the preview card 311. In this case, an information source of the preview information 3111 is App1. As shown in (e) in FIG. 14, preview information 3112 that is related to a jump code sequence, that corresponds to the message 310, and that is obtained from App2 is presented through another child window in the preview card 311. In this case, an information source of the preview information 3112 is App2.

After the user taps a preview brief diagram in the preview card 311, the mobile phone 300 may further invoke an interface of a corresponding application program (for example, an application program App 1), and display, on a display interface of the mobile phone 300, a details page (which may also be understood as an interface corresponding to a link corresponding to the message 310, and the interface may be understood as a details page of a commodity corresponding to the link corresponding to the message 310) corresponding to the preview brief diagram tapped by the user. For example, referring to FIG. 4(c), a details page corresponding to a T-shirt corresponding to the message 310 is displayed on a display interface 3013 of the mobile phone 300.

In this case, as shown in FIG. 4(c), the user may further switch, through a return control, the display interface of the mobile phone 300 to the interface 3011 on which the preview card 311 is displayed.

The user may also view, by tapping application program icons listed in the information source, preview information related to jump code sequences that are obtained from different application programs.

For example, as shown in FIG. 4(d), the user taps an identifier of App2, and can view the preview information that is related to the jump code sequence, that corresponds to the message 310, and that is obtained from App2. The preview information that is related to the jump code sequence, that corresponds to the message 310, and that is obtained from App2 is shown in FIG. 4(e).

After the user taps a preview brief diagram presented by App2 in the preview card 311, the mobile phone 300 may further invoke an interface of App2, and display, on a display interface 3013 of the mobile phone 300, a details page corresponding to the preview brief diagram tapped by the user. For example, referring to FIG. 4(f), a details page corresponding to a T-shirt corresponding to the message 310 is displayed on the display interface 3013 of the mobile phone 300.

FIG. 5(a) to FIG. 5(e) are another group of GUIs according to an embodiment of this application.

A difference from FIG. 4(a) to FIG. 4(f) lies in that, in FIG. 5(a) to FIG. 5(e), preview information (for example, as shown in FIG. 5(b)) that is related to jump code sequences and that is obtained from a plurality of second applications is presented through a child window.

In this case, the user may view preview brief diagrams corresponding to different information sources by sliding up and down the child window.

The user may also tap a preview brief diagram presented by a corresponding App in the child window to view a details page corresponding to the preview brief diagram.

For example, as shown in FIG. 5(b), the user taps a preview brief diagram 3121 presented by App1, and can view a details page corresponding to the preview brief diagram 3121 presented by App1, for example, content presented by the interface 3012 shown in FIG. 5(c).

For example, as shown in FIG. 5(d), the user taps a preview brief diagram 3122 presented by App2, and can view a details page 3122 corresponding to the preview brief diagram presented by App2, for example, content presented by the interface 3013 shown in FIG. 5(e).

For content that is not described in FIG. 5(a) to FIG. 5(e), refer to the related descriptions of FIG. 4(a) to FIG. 4(f). Details are not described herein again.

For a process in which the mobile phone 300 recognizes a text on the current interface 3011 of the mobile phone 300 in FIG. 5(a) to FIG. 5(e), refer to the descriptions in FIG. 6. Details are not described herein again.

FIG. 9(e) to FIG. 9(f) are another group of GUIs according to an embodiment of this application.

A link to a commodity corresponding to a message 320 in FIG. 9(e) to FIG. 9(f) is the same as the link to the commodity corresponding to the message 310 in FIG. 4(a) to FIG. 4(f), and a difference from the message 310 in FIG. 4(a) to FIG. 4(f) lies in that a format of the message 320 in FIG. 9(e) to FIG. 9(f) is a picture format.

As shown in FIG. 9(b), preview information 3211 that is related to a jump code sequence, that corresponds to the message 320, and that is obtained from App1 is presented through a child window in a preview card 321. As shown in FIG. 9(e), preview information 3212 that is related to a jump code sequence, that corresponds to the message 320, and that is obtained from App2 is presented through another child window in the preview card 321.

For content that is not described in FIG. 9(e) to FIG. 9(f), refer to the related descriptions of FIG. 4(a) to FIG. 4(f). Details are not described herein again.

For a process in which the mobile phone 300 recognizes a text on the current interface 3011 of the mobile phone 300 in FIG. 9(e) to FIG. 9(f), refer to FIG. 10. For related descriptions of FIG. 10, refer to the related descriptions of FIG. 6. Details are not described herein again.

FIG. 11 is still another group of GUIs according to an embodiment of this application.

A difference from FIG. 4(a) to FIG. 4(f) lies in that a message 330 (in a text format) in FIG. 11 corresponds to a link to adding a friend. For example, as shown in (a) in FIG. 11, a jump code sequence is "8EnLtb80h8". The message 330 further includes "copy this message" and "open App4 to search, to add me as a friend".

In this case, preview information that is related to the jump code sequence and that corresponds to the message 330 is presented in a preview card 331.

For related descriptions of FIG. 11, refer to the related descriptions of FIG. 4(a) to FIG. 4(f). Details are not described herein again.

For a process in which the mobile phone 300 recognizes a text on the current interface 3011 of the mobile phone 300 in FIG. 11, refer to FIG. 12.

Obtained jump code sequence information includes two (N=2) jump code sequences, where the two jump code sequences are respectively ₴EnLtb8Oh₴ and ₴EnLtb80h₴.

For example, preview information related to the jump code sequence "₴EnLtb80h₴" is shown in (g) in FIG. 12. In addition, no jump code sequence recognition needs to be performed on the jump code sequence "₴EnLtb8O₴".

For related descriptions of FIG. 12, refer to the related descriptions of FIG. 6. Details are not described herein again.

FIG. 13(a) to FIG. 13(e) are still another group of GUIs according to an embodiment of this application.

A difference from FIG. 9(e) to FIG. 9(f) lies in that, in addition to including the message 320, a current interface 3041 of the mobile phone 300 shown in FIG. 13(a) to FIG. 13(e) further includes a message 340 (in a picture format). In addition, the message 340 also corresponds to a link to a commodity. For example, as shown in FIG. 13(a), a jump code sequence is "¥Aq6nr8Cbjm¥", where ¥ is an enclosure character.

In this case, because the current interface 3051 of the mobile phone 300 includes two jump code sequences, the mobile phone 300 may separately display preview information that is related to the jump code sequence and that corresponds to each message.

In some embodiments, the preview information that is related to the jump code sequence and that corresponds to each message may be presented through a child window.

For example, as shown in FIG. 13(b), preview information 3411 that is related to a jump code sequence and that corresponds to the message 320 and preview information 3412 that is related to a jump code sequence and that corresponds to the message 340 are presented through a child window in a preview card 341. In addition, an information source of the preview information 3511 is App1, and an information source of the preview information 3512 is App2.

For descriptions of other related figures in FIG. 15(a) to FIG. 15(e), refer to the related descriptions of FIG. 4(a) to FIG. 4(f). Details are not described herein again.

For a process in which the mobile phone 300 recognizes text information on the current interface 3051 of the mobile phone 300 in FIG. 15(a) to FIG. 15(e), refer to FIG. 16.

Obtained jump code sequence information includes six (N=6) jump code sequences, and the six jump code sequences are respectively ¥FnrL23Atbjm¥, ¥Fnr123Atbjm¥, ¥FnrI23Atbjm¥, ¥FnII23Atbjm¥, ¥Aq6nr8Cbjm¥, and ¥Aq6m8Cbjm¥.

No related preview information is obtained for the jump code sequence ¥FnrL23Atbjm¥. For example, preview information related to the jump code sequence ¥Fnr123Atbjm ¥ is shown in (g) in FIG. 14. In addition, no jump code sequence recognition needs to be performed on the jump code sequence ¥FnrI23Atbjm¥ and the jump code sequence ¥FnII23Atbjm¥.

For example, preview information related to the jump code sequence ¥Aq6nr8Cbjm¥ is shown in (h) in FIG. 14. In addition, no jump code sequence recognition needs to be performed on the jump code sequence ¥Aq6m8Cbjm¥ .

For descriptions of other related figures in FIG. 16, refer to the related descriptions of FIG. 6. Details are not described herein again.

FIG. 15(a) to FIG. 15(e) are still another group of GUIs according to an embodiment of this application.

A difference from FIG. 4(a) to FIG. 4(f) lies in that, in addition to including the message 310, a current interface 3051 of the mobile phone 300 shown in FIG. 15(a) to FIG. 15(e) further includes a message 350 (in a text format), and the message 350 also corresponds to a link to a commodity. For example, as shown in FIG. 15(a), a jump code sequence of content indicated in the message 350 is "¥Anr223Ctbjm¥". The message 350 further includes other content. For example, as shown in FIG. 15(a), the message 350 further includes "copy this sentence" and "to App1 or click http://rn.mx.cn to a browser". App1 is an application program that generates the message 310.

In this case, because the current interface 3051 of the mobile phone 300 includes two jump code sequences, the mobile phone 300 may separately display preview information that is related to the jump code sequence and that corresponds to each message.

In some embodiments, the preview information that is related to the jump code sequence and that corresponds to each message may be presented through a child window.

For example, as shown in FIG. 15(b), preview information 3511 that is related to a jump code sequence and that corresponds to the message 310 and preview information 3512 that is related to a jump code sequence and that corresponds to the message 350 are presented through a child window in a preview card 351. In addition, information sources of both the preview information 3511 and the preview information 3512 are App1.

In this case, the user may view preview brief diagrams corresponding to different information sources by sliding up and down the child window.

The user may also tap a preview brief diagram presented by a corresponding App in the child window to view a details page corresponding to the preview brief diagram.

For descriptions of other related figures in FIG. 15(a) to FIG. 15(e), refer to the related descriptions of FIG. 4(a) to FIG. 4(f). Details are not described herein again.

For a process in which the mobile phone 300 recognizes text information on the current interface 3051 of the mobile phone 300 in FIG. 15(a) to FIG. 15(e), refer to FIG. 16.

Obtained jump code sequence information includes six (N=6) jump code sequences, and the six jump code sequences are respectively ¥FnrL23Atbjm¥, ¥Fnr123Atbjm¥, ¥FnrI23Atbjm¥, ¥FnII23Atbjm¥, ¥Anr223Ctbjm¥, and ¥Anr223Otbjm¥.

No related preview information is obtained for the jump code sequence ¥FnrL23Atbjm¥. For example, preview information related to the jump code sequence ¥Fnr123Atbjm ¥ is shown in (g) in FIG. 16. In addition, no jump code sequence recognition needs to be performed on the jump code sequence ¥FnrI23Atbjm¥ and the jump code sequence ¥FnII23Atbjm¥.

For example, preview information related to the jump code sequence ¥Anr223Ctbjm¥ is shown in (h) in FIG. 16. In addition, no jump code sequence recognition needs to be performed on the jump code sequence ¥Anr223Otbjm¥.

For descriptions of other related figures in FIG. 16, refer to the related descriptions of FIG. 6. Details are not described herein again.

FIG. 17(a) to FIG. 17(f) are still another group of GUIs according to an embodiment of this application.

A difference from FIG. 15(a) to FIG. 15(e) lies in that, in addition to including the message 310, a current interface 3061 of the mobile phone 300 shown in FIG. 17(a) to FIG. 17(f) further includes a message 360 (in a text format), and the message 360 also corresponds to a link to adding a friend. For example, as shown in FIG. 17(a), a jump code sequence of content indicated in the message 360 is "8EnLtb80h8".

In this case, because the current interface 3051 of the mobile phone 300 includes two jump code sequences, the mobile phone 300 may separately display preview information that is related to the jump code sequence and that corresponds to each message.

In some embodiments, the preview information that is related to the jump code sequence and that corresponds to each message may be presented through different child windows.

For example, as shown in FIG. 17(b), preview information 3611 that is related to a jump code sequence and that corresponds to the message 310 is presented through a child window in a preview card 361. In this case, an information source of the preview information 3611 is App1. As shown in FIG. 17(d), preview information 3612 that is related to a jump code sequence and that corresponds to the message 360 is presented through another child window in the preview card 361. In this case, an information source of the preview information 3612 is App2.

In this case, the user may also view, by tapping application program icons listed in the information source, preview information related to jump code sequences that are obtained from different application programs.

For related descriptions of FIG. 17(a) to FIG. 17(f), refer to the related descriptions of FIG. 15(a) to FIG. 15(e). Details are not described herein again.

For a process in which the mobile phone 300 recognizes text information on the current interface 3061 of the mobile phone 300 in FIG. 17(a) to FIG. 17(f), refer to FIG. 18.

Obtained jump code sequence information includes six (N=6) jump code sequences. The six jump code sequences are respectively ¥FnrL23Atbjm¥, ¥Fnr123Atbjm¥, ¥FnrI23Atbjm¥, ¥FnII23Atbjm¥, ₴EnLtb80h₴, and ₴EnLtb8Oh₴.

No related preview information is obtained for the jump code sequence ¥FnrL23Atbjm¥. For example, preview information related to the jump code sequence ¥Fnr123Atbjm ¥ is shown in (g) in FIG. 18. In addition, no jump code sequence recognition needs to be performed on the jump code sequence ¥FnrI23Atbjm¥ and the jump code sequence ¥FnII23Atbjm¥.

For example, preview information related to the jump code sequence 8EnLtb80h8 is shown in (h) in FIG. 18. In addition, no jump code sequence recognition needs to be performed on the jump code sequence ₴EnLtb8Oh₴.

For related descriptions of FIG. 18, refer to the related descriptions of FIG. 16. Details are not described herein again.

The following describes, with reference to FIG. 19 and FIG. 20, a method for displaying information on an electronic device according to an embodiment of this application.

FIG. 19 is a schematic flowchart of a method 900 for displaying information on an electronic device according to an embodiment of this application. As shown in FIG. 19, the method includes the following steps.

S910: An electronic device displays first text information on an interface of a first application, where the first text information includes a jump code sequence, and the first text information is generated by a second application.

In some embodiments, the first text information may be text information sent by another electronic device and received by the electronic device. For example, the message 310 (the first text information) shown in FIG. 4(a) to FIG. 4(f), the message 320 (the first text information) shown in FIG. 9(e) to FIG. 9(f), the message 330 (the first text information) shown in FIG. 11, the message 360 (the first text information) shown in FIG. 13(a) to FIG. 13(e), the message 310 and the message 350 (the first text information) shown in FIG. 15(a) to FIG. 15(e), and the message 310 and the message 360 (the first text information) shown in FIG. 17(a) to FIG. 17(f) are all text information sent by another electronic device and received by the electronic device 300 through a chat App.

In some other embodiments, the first text information may be text information already stored in the electronic device.

For example, the first text information may be a photo already stored in the electronic device.

In some embodiments of this application, content indicated by the first text information may be referred to as a password, and the password is used to jump to a target interface.

For example, the content indicated by the first text information may be referred to as a Taobao password, an Alipay password, or the like.

In some embodiments of this application, the content indicated by the first text information may also be referred to as a link code.

For example, the content indicated by the first text information may be referred to as a commodity link code, a payment link code, a shopping link code, an assistance link code, a bargain link code, or the like.

A specific form of the first text information is not limited in embodiments of this application.

In some embodiments, the first text information indicates a link to a commodity. For example, the message 310 shown in FIG. 4(a) to FIG. 4(f) indicates a link to a T-shirt.

In some other embodiments, the first text information indicates a link to adding a friend. For example, the message 370 shown in FIG. 11 indicates a link to adding a friend (Mr. Huang).

In some other embodiments, the first text information indicates a link to receiving a red envelope.

In some other embodiments, the first text information indicates an assistance link.

For example, the assistance link may be an assistance link to grabbing a red envelope, an assistance link to grabbing a ticket, or an upgrade assistance link.

The first application and the second application may be different applications.

For example, as shown in FIG. 4(a) to FIG. 4(f) and FIG. 9(e) to FIG. 9(f), the first application is a chat application, and the second application is a shopping application.

For another example, the first application is an application for viewing a picture, and the second application is a shopping application or a chat application.

The first application and the second application may be applications having some same functions.

For example, as shown in FIG. 11 and FIG. 13(a) to FIG. 13(e), the first application is a chat application, and the second application is a chat application that is different from the first application but has a same chat function as the first application.

Elements in the jump code sequence included in the first text information is arranged according to a specific rule. That is, the jump code sequence is formed by arranging a plurality of characters according to the specific rule.

For example, a first element of the jump code sequence and a last element of the jump code sequence are a same character.

For example, the elements in the jump code sequence may be arranged according to an enclosure character, numbers and/or English characters, and an enclosure character.

A specific character of the enclosure character is not limited in this application.

For example, as shown in FIG. 4(a) to FIG. 4(f) and FIG. 9(e) to FIG. 9(f), the jump code sequence may be "¥Fnr123Atbjm¥". ¥ is the enclosure character.

For another example, as shown in FIG. 11 and FIG. 13(a) to FIG. 13(e), the jump code sequence may be "8EnLtb80h8". 8 is the enclosure character.

In some embodiments, the first text information further includes content other than the jump code sequence.

A specific form of the content other than the jump code sequence is not limited in embodiments of this application.

For example, the content other than the jump code sequence may be a Chinese character.

For example, as shown in FIG. 4(a) to FIG. 4(f), the message 310 of the link to the commodity further includes "copy this sentence" and "to App1 or click http://m.mx.cn to a browser". App1 may be an application that generates the message 310 of the link to the commodity. For example, App1 may be a shopping application.

For another example, as shown in FIG. 11, the message 330 of the link to adding the friend further includes "copy this password" and "open App4 to search, to add me as a friend". App4 may be an application that generates the message 330 of the link to adding the friend. For example, App1 may be a chat application.

In some embodiments, the content other than the jump code sequence in the first text information may further include a character indicating a name of the second application.

A specific form of the character indicating the name of the second application involved in the first text information is not limited in embodiments of this application. For example, as shown in FIG. 15(a) to FIG. 15(e), the name of the second application is presented in both the message 310 and the message 350 through "Appl".

In some embodiments, the content other than the jump code sequence in the first text information may be further a character corresponding to another language.

A display format of the first text information is not limited in embodiments of this application.

In some embodiments, the first text information is in a picture format, for example, the message 320 shown in FIG. 9(e) to FIG. 9(f), and for another example, the message 360 shown in FIG. 13(a) to FIG. 13(e).

In some other embodiments, the first text information is in a text format, for example, the message 310 shown in FIG. 4(a) to FIG. 4(f), and for another example, the message 330 shown in FIG. 11.

In some embodiments, a plurality of pieces of first text information are displayed on the interface of the first application.

For example, the message 310 and the message 350 shown in FIG. 15(a) to FIG. 15(e) are two pieces of first text information displayed on a first interface of the first application. The message 310 includes the jump code sequence "¥Fnr123Atbjm¥", and the message 350 also includes the jump code sequence "¥Anr123Ctbjm¥".

For another example, the message 310 and the message 360 shown in FIG. 17(a) to FIG. 17(f) are two pieces of first text information displayed on the first interface of the first application. The message 310 includes the jump code sequence "¥Fnr123Atbjm¥" and the message 360 also includes the jump code sequence "8EnLtb80h8".

In a possible implementation, the plurality of pieces of first text information may be generated by a same application (for example, the second application).

For example, both the message 310 and the message 350 shown in FIG. 15(a) to FIG. 15(e) are generated by App1.

In another possible implementation, at least two pieces of first text information in the plurality of pieces of first text information may be generated by different applications (for example, the second application and a third application).

For example, the message 310 shown in FIG. 17(a) to FIG. 17(f) is generated by App1, and the message 360 is generated by App2.

Whether the plurality of pieces of first text information are specifically displayed in a same format or different formats is not limited in embodiments of this application.

For example, both the message 310 and the message 350 shown in FIG. 15(a) to FIG. 15(e) are displayed in the text format. For another example, the message 310 shown in FIG. 17(a) to FIG. 17(f) is displayed in the text format, and the message 350 is displayed in the picture format.

S920: The electronic device detects a first operation performed by a user on the first text information.

The first operation is an operation of recognizing the first text information.

A specific form of the first operation is not limited in embodiments of this application.

For example, the first operation may include at least one of the following: a double-finger pressing operation, a single-finger touching and holding operation, an operation of one or more times of tapping performed through a knuckle, or a circle-selection operation performed through a finger or a knuckle.

For example, as shown in FIG. 4(a) to FIG. 4(f), FIG. 9(a) to FIG. 9(f), FIG. 11, FIG. 13(a) to FIG. 13(e), FIG. 15(a) to FIG. 15(e), and FIG. 17(a) to FIG. 17(f), the first operation is an operation of pressing a screen of the mobile phone 300 by using two fingers.

S930: Obtain first information related to the jump code sequence based on the first operation.

S931: Obtain jump code sequence information based on the first operation. The jump code sequence information includes N jump code sequences, where N is a positive integer greater than or equal to 1.

It should be understood that the N jump code sequences included in the jump code sequence information may be recognition results of N possible jump code sequences obtained by performing text recognition on text regions of the jump code sequences.

In some embodiments, the N jump code sequences may be a result of recognizing one jump code sequence. In some other embodiments, the N jump code sequences may be results of recognizing a plurality of jump code sequences.

The following describes, by using manner (1) and manner (2) as an example, how to obtain the jump code sequence information based on the first operation.

Manner (1) is applicable to a case that the first operation is performed on only the first text information, or is applicable to a case that the first operation is performed on the entire electronic device. Manner (2) is only applicable to the case that the first operation is performed on only the first text information.

Manner (1): S931 is completed through interaction between a current application and the second application.

S931: The current application recognizes the first text information based on the first operation to obtain jump code sequence information. The jump code sequence information includes N jump code sequences, where N is a positive integer greater than or equal to 1.

In some embodiments, the jump code sequence information further includes confidence levels corresponding to the N jump code sequences.

For example, FIG. 20 is an example of a method 1000 for recognizing first text information according to an embodiment of this application. The method 1000 may specifically include S1010 to S1040, and the method 100 is mainly performed by a current application. The following describes the method 1000 in detail.

S1010: Obtain a picture corresponding to first text information based on a first operation.

In some embodiments, the picture corresponding to the first text information is a partial screenshot of an electronic device.

In a possible implementation, the electronic device may determine a region corresponding to a first operation of a user based on the first operation of the user, and obtain a screenshot corresponding to the region corresponding to the first operation on the electronic device.

For example, when the user recognizes a text on a current interface of the electronic device through a double-finger pressing operation (the first operation), a region where the two fingers press the electronic device is a region corresponding to the double-finger pressing operation. In this case, a screenshot that is of the current interface of the electronic device and that is generated by the electronic device is a screenshot corresponding to the region corresponding to the double-finger pressing operation.

In another possible implementation, the electronic device may determine a region corresponding to a first operation of a user based on the first operation of the user, correct the region corresponding to the first operation of the user to obtain a corrected region, and obtain a screenshot corresponding to the corrected region on the electronic device.

A manner of correcting the region corresponding to the first operation of the user is not limited in embodiments of this application.

For example, the manner of correcting the region corresponding to the first operation of the user may be: The region corresponding to the first operation of the user is magnified by b times by using a center of the region corresponding to the first operation of the user as a reference.

For another example, when the user recognizes the text on the current interface of the electronic device through the double-finger pressing operation (the first operation), a corrected region obtained by correcting the region where the two fingers press the electronic device is a region corresponding to the double-finger pressing operation. In this case, the picture corresponding to the first text information is a screenshot corresponding to the corrected region.

In some other embodiments, the picture corresponding to the first text information is a full-screen screenshot of the electronic device.

For example, a picture corresponding to the message 310 shown in (a) in FIG. 6 is a full-screen screenshot A of the current interface 3011 of the mobile phone 300 shown in FIG. 4(a).

S1020: Perform text region detection on the picture corresponding to the first text information to obtain a text region of the picture corresponding to the first text information.

The electronic device may invoke an OCR interface to perform text region detection on the picture corresponding to the first text information, to obtain a text region of the picture corresponding to the first text information.

For the text region of the picture corresponding to the first text information, refer to the text regions shown by the rectangular boxes of the text regions in the accompanying drawings, for example, the text region 3101 to the text region 3107 shown in (b) in FIG. 6, and for another example, the text region 3201 to the text region 3205 shown in (b) in FIG. 10.

In some embodiments, the text region detection is performed on the picture corresponding to the first text information, and parameter information of the text region can be further obtained.

The parameter information of the text region includes coordinates of a rectangular box of the text region and a confidence level value corresponding to the rectangular box of the text region.

The coordinates of the rectangular box of the text region include coordinates of at least two points, and the two points are diagonal points of the rectangular box.

For example, the coordinates of the rectangular box of the text region include coordinates of two points. The coordinates of the two points are respectively diagonal coordinates of the rectangular box.

For another example, the coordinates of the rectangular box of the region include coordinates of four points. The coordinates of the four points are coordinates of four vertexes of the rectangular box.

When there are a plurality of text regions, parameter information includes coordinates of rectangular boxes of the plurality of text regions and a confidence level corresponding to a rectangular box of each text region.

For example, as shown in (b) in FIG. 6, the text region information of the message 310 further includes $a_1$ coordinates and $a_2$ coordinates in a rectangular box of the text region 3101, and a confidence level corresponding to the rectangular box of the text region 3101; as coordinates and $a_4$ coordinates in a rectangular box of the text region 3102, and a confidence level corresponding to the rectangular box of the text region 3102; as coordinates and $a_6$ coordinates in a rectangular box of the text region 3103, and a confidence level corresponding to the rectangular box 3103 of the text region 3103; $a_7$ coordinates and $a_8$ coordinates in a rectangular box of the text region 3104, and a confidence level corresponding to the rectangular box of the text region 3104; as coordinates and $a_{10}$ coordinates in a rectangular box of the text region 3105, and a confidence level corresponding to the rectangular box of the text region 3105; $a_{11}$ coordinates and $a_{12}$ coordinates in a rectangular box of the text region 3106, and a confidence level corresponding to the rectangular box of the text region 3106; and $a_{13}$ coordinates and $a_{14}$ coordinates in a rectangular box of the text region 3107, and a confidence level corresponding to the rectangular box of the text region 3107.

S1030: Perform image processing on the text region of the picture corresponding to the first text information obtained in S1020.

For example, the image processing may include grayscale processing, text region rectangular box correction processing, and/or the like.

Correction processing may be performed on the rectangular box of the text region based on the coordinates of the rectangular box of the text region and the confidence level corresponding to the rectangular box of the text region.

After the image processing, useless information in the text region of the picture corresponding to the first text information may be filtered out. Therefore, a recognition rate and recognition efficiency of recognizing the first text information are improved.

Optionally, after S1020, S1030 may be performed or may not be performed.

S1040: Obtain jump code sequence information from the text region of the picture corresponding to the first text information.

The following describes, by using manner I and manner II as an example, how to obtain the jump code sequence information from the text region.

Manner I: Text recognition is first performed on the text region of the picture corresponding to the first text information to obtain a first recognition result sequence; and then the jump code sequence information is determined from the first recognition result sequence according to a jump code sequence rule.

It should be understood that the jump code sequence rule is an arrangement rule of the jump code sequence.

In some embodiments, the jump code sequence rule may be a simple rule.

For example, the jump code sequence rule includes: A first element of the jump code sequence and a last element of the jump code sequence are a same character; and/or a quantity of elements in the jump code sequence and the elements in the jump code sequence may be formed by specific characters; and/or the elements in the jump code sequence are arranged according to an enclosure character, numbers and/or English characters, and an enclosure character.

In some other embodiments, the jump code sequence rule may be a specific arrangement rule.

For example, the jump code sequence rule includes a plurality of jump code sequences.

For example, the text recognition may be performed on the text region of the picture corresponding to the first text information based on CNN+CTC, to obtain the first recognition result sequence (a CTC sequence).

The CNN is for feature extraction. The CTC is for sequence identification.

Specifically, after downsampling is performed at a times, window sliding is directly performed on a feature map at the last layer, to obtain the first recognition result sequence.

A jump code sequence is determined from the first recognition result sequence according to the jump code sequence rule, and the first recognition result sequence is parsed according to a specific rule to obtain the jump code sequence information.

Manner II: Text recognition is first performed on the text region of the picture corresponding to the first text information to obtain a first recognition result sequence; subsequently, a text region of a jump code is determined from the text region of the picture corresponding to the first text information based on a jump code table and a mapping relationship between the first recognition result sequence and the text region in the first text information; then a text region of a jump code sequence is determined from the text region of the jump code according to a jump code sequence rule; and finally the text recognition is performed on the text region of the jump code sequence to obtain the jump code sequence information. For details, refer to the following descriptions of S1041 to S1046.

In some embodiments, the jump code table may include a plurality of characters. Each of the plurality of characters may be an element in the jump code sequence. That is, an element in the jump code sequence is formed by a character included in the jump code table.

For example, the jump code table may be a Chinese-English code word table, an ASCII table, or the like.

S1041: Perform text recognition on the text region of the picture corresponding to the first text information to obtain a first recognition result sequence.

For example, the text recognition may be performed on the text region of the picture corresponding to the first text information based on CNN+CTC, to obtain the first recognition result sequence.

a is related to the CNN and CTC network structures. a may be preset.

In some embodiments, an RNN algorithm may be further added before a CTC algorithm.

S1042: Determine a text region of a jump code from the text region in the first text information based on a jump code table and a mapping relationship between the first recognition result sequence and the text region in the first text information.

The following describes, by using manner 1' and manner 2' as an example, how to determine the text region of the jump code from the text region in the first text information based on the jump code table and the mapping relationship between the first recognition result sequence and the text region in the first text information

Manner 1': Each character that is in the first recognition result sequence and that is not included in the jump code table is first mapped to a first character based on the jump code table, where the first character is not included in the jump code table; the first character is then removed from the first recognition result sequence to obtain a second recognition result sequence; and finally, the text region of the jump code is determined from the text region in the first text information based on the second recognition result sequence and a mapping relationship between the second recognition result sequence and the text region in the first text information.

In some embodiments, the jump code table may include a plurality of characters. Each of the plurality of characters may be an element in the jump code sequence.

Specifically, manner 1' may include the following steps.

Step 1: Parse the first recognition result sequence according to a specific rule to obtain text content of the text region in the first text information.

Step 2: Map, based on the jump code table, each character that is in the text content of the text region in the first text information and that is not included in the jump code table to the first character.

Step 3: Determine a boundary location of the first character, that is, determine location coordinates of a left boundary and location coordinates of a right boundary of the first character in the first recognition result sequence.

In some embodiments, the boundary location of the first character in the first recognition result sequence may be further reduced. In this way, it can be ensured that a subsequent jump code is not deleted by mistake. For example, a first threshold is added to the location coordinates of the left boundary of the first character in the first recognition result sequence, and/or a second threshold is subtracted from the location coordinates of the right boundary of the first character in the first recognition result sequence.

For example, the first threshold may be a range covered by a width of c pixels. For example, c may be equal to 0.5.

For example, the second threshold may also be the range covered by the width of the c pixels.

In some embodiments, the coordinates of the boundary location of the jump code may be stored in the parameter information.

Step 4: Remove the first character from the first recognition result sequence based on the boundary location of the first character, to obtain the second recognition result sequence.

Step 5: Determine the text region of the jump code from the text region in the first text information based on the second recognition result sequence and the mapping relationship between the second recognition result sequence and the text region in the first text information.

In some embodiments, step 3 may also be replaced with determining a boundary location of the jump code, that is, determining location coordinates of a left boundary and location coordinates of a right boundary of the jump code in the first recognition result sequence. Step 4 may also be replaced with removing the first character from the first recognition result sequence based on the boundary location of the jump code, to obtain the second recognition result sequence.

The reducing the boundary location of the first character in the first recognition result sequence may be replaced with expanding the boundary location of the jump code. For example, a third threshold is subtracted from the location coordinates of the left boundary of the jump code in the first recognition result sequence, and/or a fourth threshold is added to the location coordinates of the right boundary of the jump code in the first recognition result sequence.

For example, the third threshold may be the range covered by the width of the c pixels.

For example, the fourth threshold may be the range covered by the width of the c pixels.

Manner 2': The text region of the jump code is directly determined from the first recognition result sequence based on the jump code table and the mapping relationship between the first recognition result sequence and the text region in the first text information.

Specifically, manner 2' may include the following steps.

Step 1: Parse the first recognition result sequence according to a specific rule to obtain text content of the text region in the first text information.

Step 2: Determine a boundary location of the jump code based on the jump code table, that is, determine location coordinates of a left boundary and location coordinates of a right boundary of the jump code in the first recognition result sequence.

In some embodiments, the boundary location of the jump code may be further expanded. For example, a third threshold is subtracted from the location coordinates of the left boundary of the jump code in the first recognition result sequence, and/or a fourth threshold is added to the location coordinates of the right boundary of the jump code in the first recognition result sequence.

Step 3: Determine the text region of the jump code from the text region in the first text information based on the boundary location of the jump code and the mapping relationship between the first recognition result sequence and the text region in the first text information.

For example, the jump code table may be a Chinese-English code word table, an ASCII table, or the like.

For example, if downsampling is a, the first recognition result sequence is obtained based on the text region in the first text information and by using the downsampling rate a. In this case, the mapping relationship between the first recognition result sequence and the text region in the first text information is that each element of the first recognition result sequence corresponds to a range covered by a pixels in the text region in the first text information. The mapping relationship between the second recognition result sequence and the text region in the first text information is that each element of the second recognition result sequence corresponds to a range covered by a pixels in the text region in the first text information.

A specific form of the first character is not limited in embodiments of this application, provided that it is ensured that the first character is not included in the jump code table.

For example, the first character may be a "#" character, a "*" character, or the like.

When the text region of the jump code is not one text region, S1043 needs to be further performed.

S1043: Preprocess text regions of a plurality of jump codes.

For example, the preprocessing text regions of a plurality of jump codes includes: reducing a width of a text region of each jump code in the text regions of the plurality of jump codes in a width direction, so that the width of the text region input into a text recognition network model meets a requirement of an input width input into the text recognition network model; and/or splicing and/or filling (or filling a blank box) the text regions of the plurality of jump codes in a length direction, so that a length of the text region input into the text recognition network model meets a requirement of an input length input into the text recognition network model, for example, the process shown in FIG. 4(d) to FIG. 4(e), and for another example, the process shown in FIG. 4(d) to FIG. 4(e).

Optionally, S1043 may be performed or may not be performed.

S1044: Perform text recognition model inference on the text region of the jump code.

For example, the performing text recognition model inference on the text region of the jump code includes performing text recognition on the text region of the jump code, to obtain a third recognition result sequence.

The electronic device may invoke an OCR interface to perform text recognition on the text region of the jump code, to obtain the third recognition result sequence.

For example, the text recognition may be performed on the text region of the jump code based on CNN+CTC, to obtain the third recognition result sequence.

In some embodiments, before the text recognition is performed on the text region of the jump code, a resolution of the text region of the jump code may be further increased. In this way, the text recognition is subsequently performed on the increased text region of the jump code, thereby improving the recognition rate and the recognition efficiency.

An increased multiple of the resolution of the text region of the jump code sequence is not limited in this application.

S1045: Perform post-processing.

For example, the performing post-processing may include determining the jump code sequence information from the third recognition result sequence according to a jump code sequence rule.

Specifically, the performing post-processing may include the following steps.

Step 1: Parse the third recognition result sequence according to a specific rule to obtain text content of the text region of the jump code.

Step 2: Determine a boundary location of a jump code sequence according to the jump code sequence rule, that is, determine location coordinates of a left boundary and location coordinates of a right boundary of the jump code sequence in the third recognition result sequence.

In some embodiments, the boundary location of the jump code sequence may be further expanded. In this way, it can be ensured that a subsequent jump code sequence is not deleted by mistake. For example, a fifth threshold is subtracted from the location coordinates of the left boundary of the jump code sequence in the third recognition result sequence, and/or a sixth threshold is added to the location coordinates of the right boundary of the jump code sequence in the third recognition result sequence.

For example, the fifth threshold may be the range covered by the width of the c pixels.

For example, the sixth threshold may be the range covered by the width of the c pixels.

In some embodiments, the boundary location of the jump code sequence may be stored in the parameter information.

Step 3: Determine the jump code sequence information from the third recognition result sequence based on the boundary location of the jump code sequence.

In some embodiments, step 2 may also be replaced with determining a boundary location of a non-jump code sequence according to the jump code sequence rule, that is, determining location coordinates of a left boundary and location coordinates of a right boundary of the non-jump code sequence in the third recognition result sequence.

The expanding the boundary location of the jump code sequence may be replaced with reducing the boundary location of the non-jump code sequence. For example, a seventh threshold is added to the location coordinates of the left boundary of the non-jump code sequence in the third recognition result sequence, and/or an eighth threshold is subtracted from the location coordinates of the right boundary of the non-jump code sequence in the third recognition result sequence.

Manner (2): S931 is completed through interaction between a system and the first application and between the system and the second application.

In an embodiment in which the display format of the first text information is the text format, the first application copies the first text information to a clipboard of the first application based on the first operation, and a system of the electronic device reads the first text information in the clipboard of the first application, and determines the jump code sequence information from the first text information according to a jump code rule.

In an embodiment in which the display format of the first text information is the picture format, the first application recognizes the first text information based on the first operation to obtain text content of the first text information, and copies the text content of the first text information to the clipboard of the first application, and the system of the electronic device reads the text content of the first text information in the clipboard of the first application, and determines the jump code sequence information from the text content of the first text information according to the jump code rule.

In this embodiment in which the jump code sequence information is obtained in manner (1), the following steps (S932 to S934 and S940 to S960) are interaction between the system and the second application. In this embodiment in which the jump code sequence information is obtained in manner (2), the following steps (S932 to S934 and S940 to S960) are interaction between a current application and the second application.

The following uses an example in which the following steps are interaction between the current application and the second application for description. For that the following steps are interaction between the system and the second application, refer to related descriptions in which the steps are interaction between the current application and the second application. Details are not described herein again.

When a plurality of pieces of first text information are displayed on the interface of the first application, the N jump code sequences included in the jump code sequence information may correspond to the plurality of pieces of first text information, and the following S932 to S934 need to be performed for a jump code sequence corresponding to each piece of first text information.

For example, as shown in (a) in FIG. 16, the message 310 and the message 350 are displayed in a chat application with a mother, a screenshot E including the message 310 and the message 350 is recognized, to obtain a text region of two jump code sequences (¥Fnr123Atbjm¥ and ¥Anr123Ctbjm¥) shown in (e) in FIG. 16, and S932 to S934 need to be performed for a jump code sequence corresponding to each message.

S932: Determine a second application.

The following describes, by using manner a, manner b, and manner c as an example, how to determine the second application.

Manner a: Text recognition is performed on content other than the jump code sequence in the first text information, to obtain second application information, where the second application information indicates an identifier of the second application; and the second application is determined based on the second application information.

For example, as shown in FIG. 4(d), the first text information further includes "copy this sentence" and "to App1 or click http://m.mx.cn to a browser". The electronic device may further obtain the second application information based on a text recognition result of "copy this sentence" and "to App1 or click http://m.mx.cn to a browser" in the first text information. For example, the second application information may be an identifier of App1.

For another example, as shown in (d) in FIG. 11, the first text information further includes "copy this message" and "open App4 to search, to add me as a friend". The electronic device may further obtain the second application information based on a text recognition result of "copy this message" and "open App4 to search, to add me as a friend" in the first text information. For example, the second application information may be an identifier of App4.

In a possible implementation, the identifier of the second application indicated by the second application information is determined as the second application.

In another possible implementation, a second application indicated by the second application information is matched in a target application list, where the target application list includes an identifier of at least one application; and when the second application indicated by the second application information is successfully matched in the target application list, the second application indicated by the second application information is determined as the second application, and when the second application indicated by the second application information is not successfully matched in the target application list, the second application is re-determined. The target application list includes the identifier of the at least one application.

Manner b: The second application is any application in the target application list.

In some embodiments, the second application may be all applications in the target application list.

Manner c: The electronic device 100 may display a prompt window, where the prompt window includes identifiers of a plurality of applications; detect a third operation performed by the user on the prompt window; and determine, based on the third operation, an application corresponding to the third operation as the second application.

A specific form of the third operation is not limited in embodiments of this application.

For example, the third operation may be an operation of tapping an identifier of an application, an operation of touching and holding an identifier of an application, or the like.

For example, the plurality of applications included in the prompt window may be applications commonly used by the user; and/or the plurality of applications included in the prompt window may be applications in a default list; and/or the plurality of applications included in the prompt window may be applications in a default list.

In some embodiments, the identifiers of the plurality of applications included in the prompt window may be sequentially displayed in descending order of priorities.

There may be one or more determined second applications. An example in which there is one second application is used below for description. For a case that there are a plurality of second applications, S933 and S935 may be separately performed.

S933: Send a request message to the second application, where the request message includes the jump code sequence information, and the request message is used to request the second application to recognize the jump code sequence in the jump code sequence information.

In some embodiments, the request message further includes an identifier of a current application.

S934: The second application obtains detailed information related to the jump code sequence based on the jump code sequence information.

For example, the detailed information related to the jump code sequence may be a details interface of a link corresponding to the jump code sequence.

The following describes, by using manner 1 and manner 2 as an example, how to obtain the detailed information related to the jump code sequence based on the jump code sequence information.

Manner 1: A second application interface is invoked to recognize K jump code sequences, to obtain detailed information related to each jump code sequence, where 1≤K≤N, and the K jump code sequences are jump code sequences whose confidence levels rank the top K in the N jump code sequences.

In a possible implementation, the second application interface may be invoked successively in descending order of confidence levels of the K jump code sequences, to recognize the K jump code sequences.

Manner 2: A jump code sequence with the highest confidence level is first selected from the N jump code sequences, and then the second application interface is invoked to recognize the jump code sequence with the highest confidence level. If detailed information related to the jump code sequence with the highest confidence level may be obtained, recognition on other jump code sequences is stopped. In this case, the first information includes the detailed information related to the jump code sequence with the highest confidence level in the N jump code sequences. If the preview information related to the jump code sequence with the highest confidence level is not obtained, a jump code sequence with the second highest confidence level continues to be selected, and the jump code sequence with the second highest confidence level is recognized, and so on, until the detailed information related to the jump code sequence is obtained. In this case, the first information includes the finally obtained detailed information related to the jump code sequence.

S935: A current application obtains the first information related to the jump code sequence from the second application.

In some embodiments, the first information may include the detailed information related to the jump code sequence.

In a possible implementation, the detailed information related to the K jump code sequences obtained in manner 1 may be all carried in the first information.

In another possible implementation, detailed information related to at least one jump code sequence may be selected from the detailed information related to the K jump code sequences that is obtained in manner 1 and that is carried in the first information.

The following describes, by using manner A and manner B as an example, how to determine, based on the detailed information related to the K jump code sequences, that the detailed information in the first information is detailed information of which jump code sequence.

Manner A: Detailed information related to a target jump code sequence is carried in the first information.

For example, the target jump code sequence may be any one of the K jump code sequences.

For example, the target jump code sequence may alternatively be a jump code sequence with the highest confidence level in the K jump code sequences.

Manner B: When the opened interface of the first application further includes second text information, the electronic device may perform text region detection on the second text information to obtain a text region in the second text information; then perform text recognition on the text region in the second text information to obtain text content of the second text information; and perform matching on the text content of the second text information and the detailed information related to the K jump code sequences, and include detailed information related to a jump code sequence with the highest matching degree in the first information.

For example, as shown in FIG. 4(d) and FIG. 9(d), the opened interface of the first application further includes text information of "What about this one". The electronic device may further perform matching on a text recognition result of the text information of "What about this one" and preview information related to each jump code sequence, and include detailed information related to a jump code sequence with the highest matching degree in the first information.

For another example, as shown in (d) in FIG. 11 and FIG. 13(d), the opened interface of the first application further includes text information of "add a friend". The electronic device may further perform matching on a text recognition result of the text information of "add a friend" and detailed information related to each jump code sequence, and include detailed information related to a jump code sequence with the highest matching degree in the first information.

In still another possible implementation, the detailed information related to the jump code sequence obtained in manner 2 may be carried in the first information.

In some other embodiments, the first information may include preview information obtained after the second application processes the detailed information related to the jump code sequence.

For example, the preview information may include preview information corresponding to a link corresponding to the jump code sequence.

For example, the preview information may include preview information of a commodity corresponding to the jump code sequence.

In another possible implementation, the preview information of the commodity may further include an identifier of the commodity corresponding to the jump code sequence; and/or the preview information may further include a price of the commodity corresponding to the jump code sequence; and/or the preview information may further include a schematic diagram of the commodity corresponding to the jump code sequence.

In a possible implementation, the preview information may further include the identifier of the second application.

S940: Display preview information related to the jump code sequence based on the first information.

In some embodiments, the current application may process the first information (for example, recombine the detailed information or the preview information) to obtain preview information related to the jump code sequence, and display the preview information related to the jump code sequence on a display screen of the electronic device.

In a possible implementation, when the first information includes detailed information related to a plurality of jump code sequences on the current application, the current application may determine detailed information related to one jump code sequence from the detailed information related to the K jump code sequences in manner A and manner B, and process the detailed information related to the jump code sequence.

In a possible implementation, processing performed by the current application on the first information is recombining content included in the first information.

In some other embodiments, the current application directly uses the first information as preview information related to the jump code sequence, and displays the first information on the display screen of the electronic device.

An opened page of the first application is further displayed on a current display interface of the electronic device.

The preview information may also be referred to as a preview card.

In some embodiments, the preview information includes preview information of a commodity.

For example, the preview card may include a recognition type (for example, password recognition, text recognition, or picture recognition) of the first text information, an information source (for example, the identifier of the second application) of the preview card, a preview brief diagram of an interface that corresponds to a link corresponding to the jump code sequence and that corresponds to the information source or a preview brief diagram of a commodity corresponding to the link, or the like.

For example, as shown in FIG. 4(e), the opened interface 3011 of a chat application and the preview card 311 related to the jump code sequence are displayed on the current display interface of the electronic device 300.

For another example, as shown in FIG. 9(e), the opened interface 3021 of the chat application and the preview card 321 related to the jump code sequence are displayed on the current display interface of the electronic device 300.

For another example, as shown in (e) in FIG. 11, the opened interface 3031 of the chat application and the preview card 331 related to the jump code sequence are displayed on the current display interface of the electronic device 300.

For another example, as shown in FIG. 13(e), the opened interface 3041 of the chat application and the preview card 341 related to the jump code sequence are displayed on the current display interface of the electronic device 300.

In some embodiments, the recognition type of the first text information that is included in the preview card may be presented through different child windows or a same child window.

For example, as shown in FIG. 4(c), FIG. 9(c), (c) in FIG. 11, FIG. 13(c), FIG. 15(c), and FIG. 17(c), the password recognition and the text recognition are presented through different child windows.

In some embodiments, the information source included in the preview card may be presented through different child windows or a same child window.

For example, as shown in FIG. 4(c), FIG. 9(c), and (c) in FIG. 11, the information sources are presented through different child windows.

For another example, as shown in FIG. 13(c), the information sources are presented through a same child window.

In an embodiment in which there are a plurality of pieces of first text information, preview information that is related to a jump code sequence and that corresponds to each piece of first text information may be separately displayed.

In a possible implementation, the preview information that is related to the jump code sequence and that corresponds to each piece of first text information may be presented through a child window.

For example, as shown in FIG. 15(c), the opened interface 3051 of the chat application and the preview card 351 related to the jump code sequences are displayed on the current display interface of the electronic device 300. The preview card 351 includes two pieces of preview information, that is, the preview information 3511 related to the jump code sequence ¥Fnr123Atbjm¥ and the preview information 3512 related to the jump code sequence ¥Anr123Ctbjm¥, and the preview information 3511 and the preview information 3512 are presented through one child window.

In another possible implementation, the preview information that is related to the jump code sequence and that corresponds to each piece of first text information may be presented through different child windows.

For example, as shown in FIG. 17(c) and FIG. 17(e), the opened interface 3061 of the chat application and the preview card 361 related to the jump code sequence are displayed on the current display interface of the electronic device 300. The preview card 361 includes two pieces of preview information. As shown in FIG. 17(c), the preview card 361 includes the preview information 3611 related to the jump code sequence ¥Fnr123Atbjm¥. As shown in FIG. 17(e), the preview card 361 includes the preview information 3612 related to the jump code sequence 8EnLtb80h8. The preview information 3611 is presented through a child window corresponding to the information source of App1 in the interface, and the preview information 3612 is presented through a child window corresponding to the information source of App2 in the interface.

S950: Detect a second operation of the user for selecting the preview information related to the jump code sequence.

In some embodiments, the user may enter the second operation through the display interface of the electronic device.

For example, the second operation may be that the user taps, touches and holds, or double-taps the preview information related to the jump code sequence displayed on the display interface of the electronic device.

In some other embodiments, the user may enter the second operation by using speech information.

S960: Invoke a second application interface based on the second operation, and display an interface corresponding to the preview information related to the jump code sequence.

For example, as shown in FIG. 4(e), the user taps the preview card 311 to invoke an interface of App1, to display the interface 3012 shown in FIG. 4(f).

For another example, as shown in FIG. 9(e), the user taps the preview card 321 to invoke the interface of App1, to display the interface 3022 shown in FIG. 9(f). The interface 3022 is also an interface corresponding to the message 320 in App1.

For example, as shown in (e) in FIG. 11, the user taps the preview card 331 to invoke an interface of App4, to display the interface 3032 shown in (f) in FIG. 11.

For another example, as shown in FIG. 13(e), the user taps the preview card 341 to invoke the interface of App4, to display the interface 3042 shown in FIG. 13(f).

With reference to FIG. 1 to FIG. 20, the method for displaying information on an electronic device according to embodiments of this application is described above in detail. The following describes apparatus embodiments of this application in detail with reference to FIG. 21 and FIG. 22. It should be understood that the descriptions of the method embodiments correspond to descriptions of the apparatus embodiments. Therefore, for parts that are not described in detail, refer to the descriptions in the foregoing method embodiments.

FIG. 21 is a schematic block diagram of an apparatus according to an embodiment of this application. It should be understood that the apparatus 1100 may perform the methods shown in FIG. 19 and FIG. 20. The apparatus 1100 includes:

a processing unit 1110, configured to detect a first operation performed, on an interface of a first application, on first text information displayed on the interface, where the first text information includes a jump code sequence, and the first text information is generated by a second application, where

the processing unit 1110 is further configured to obtain first information related to the jump code sequence from the second application based on the first operation; and

a display unit 1120, configured to display preview information related to the jump code sequence based on the first information.

Optionally, before the displaying preview information related to the jump code sequence, the processing unit 1110 is further configured to: recognize the first text information to obtain jump code sequence information, where the jump code sequence information includes N jump code sequences, and N is a positive integer greater than or equal to 1; and send a request message to the second application, where the request message includes the jump code sequence information, and the request message is used to request the first information.

Optionally, the first text information further includes content other than the jump code sequence, and the processing unit 1110 is further specifically configured to: perform text region detection on the first text information to obtain a text region in the first text information; perform text recognition on the text region in the first text information to obtain a first recognition result sequence; and determine the jump code sequence information from the first recognition result sequence according to a jump code sequence rule.

Optionally, the first text information further includes content other than the jump code sequence, and the processing unit 1110 is further specifically configured to: perform text region detection on the first text information to obtain a text region in the first text information; perform text recognition on the text region in the first text information to obtain a first recognition result sequence; determine a text region of a jump code from the text region in the first text information based on a jump code table and a mapping relationship between the first recognition result sequence and the text region in the first text information; perform text recognition on the text region of the jump code to obtain a third recognition result sequence; and determine the jump code sequence information from the third recognition result sequence according to a jump code sequence rule.

Optionally, the processing unit 1110 is further specifically configured to: map, based on the jump code table, each character that is in the first recognition result sequence and that is not included in the jump code table to a first character, where the first character is not included in the jump code table; remove the first character from the first recognition result sequence to obtain a second recognition result sequence; and determine the text region of the jump code from the text region in the first text information based on the second recognition result sequence and a mapping relationship between the second recognition result sequence and the text region in the first text information.

Optionally, before the processing unit 1110 is configured to perform text recognition on the text region of the jump code, the processing unit 1110 is further configured to increase a resolution of the text region of the jump code.

Optionally, the jump code sequence information further includes confidence levels respectively corresponding to the N jump code sequences, and the first information includes first information related to a jump code sequence with a highest confidence level in the N jump code sequences.

Optionally, the interface of the first application further includes second text information, the first information includes first information related to the N jump code sequences, and the processing unit 1110 is further configured to: recognize the second text information to obtain text content of the second text information; and perform matching on the text content of the second text information and the first information related to the N jump code sequences, and use first information related to a jump code sequence with a highest matching degree in the N jump code sequences as the first information.

Optionally, the second application is an application in a target application list, and the target application list includes an identifier of at least one application.

Optionally, the processing unit 1110 is further configured to: recognize the content other than the jump code sequence in the first text information, to obtain the second application information, where the second application information indicates an identifier of the second application; and determine the second application based on the second application information.

Optionally, the processing unit 1110 is further specifically configured to: match, in the target application list, a second application indicated by the second application information; and determine, when the second application indicated by the second application information is successfully matched in the target application list, the second application indicated by the second application information as the second application.

Optionally, the processing unit 1110 is further configured to: display a prompt window, where the prompt window includes identifiers of a plurality of applications; detect a third operation performed on the prompt window; and determine, based on the third operation, an application corresponding to the third operation as the second application.

Optionally, before the processing unit 1110 is configured to recognize the first text information to obtain the jump code sequence information and the preview information related to the jump code sequence, the processing unit 1110 is further configured to: obtain a picture corresponding to the first text information; and the recognizing the first text information to obtain jump code sequence information and the performing text region detection on the first text information to obtain a text region in the first text information includes: performing text region detection and recognition on the picture corresponding to the first text information to obtain the jump code sequence information and the text region in the picture corresponding to the first text information.

Optionally, a plurality of pieces of first text information are displayed in the interface of the first application, and the processing unit 1110 is further specifically configured to: display, based on the first information, preview information related to a jump code sequence included in each piece of first text information.

Optionally, the processing unit 1110 is further configured to detect a second operation performed on the preview information. The display unit 1120 is further configured to invoke the second application based on the second operation, and display an interface related to the preview information.

Optionally, a display format of the first text information is a picture format or a text format.

Optionally, the first text information indicates a link to a commodity; or the first text information indicates a link to adding a friend; or the first text information indicates a link to receiving a red envelope; or the first text information indicates an assistance link.

Optionally, the preview information includes preview information of the commodity; and/or the preview information includes the identifier of the second application; and/or the preview information includes an identifier of a third application; and/or the preview information includes menu options respectively corresponding to the plurality of applications; and/or the first operation includes at least one of the following: a double-finger pressing operation, a single-finger touching and holding operation, an operation of one or more times of tapping performed through a knuckle, or a circle-selection operation performed through a finger or a knuckle; and/or the second application is a shopping application; and/or the first information includes detailed information related to the jump code sequence; and/or the first character is a "#" character or a "*" character; and/or a first element of the jump code sequence and a last element of the jump code sequence are a same character.

Optionally, the apparatus 1100 may further include a storage unit 1130, where the storage unit 1130 is configured to store information. For example, the storage unit 1130 is configured to store the first text information.

FIG. 22 is a schematic diagram of a hardware structure of an electronic device according to an embodiment of this application. The electronic device 1200 shown in FIG. 22 includes one or more memories 1210, one or more processors 1220, and a display 1230.

The one or more memories 1210 store one or more computer programs, and the one or more computer programs include instructions.

In a possible implementation, when the instructions are run by the one or more processors 1220, the electronic device 1200 is enabled to perform the technical solutions in the foregoing embodiments.

In another possible implementation, the processor 1220 includes a central processing unit (Central Processing Unit, CPU) and a neural network processing unit (Neural-network Processing Unit, NPU). When the instructions are run by the NPU, the electronic device 1200 is enabled to perform the technical solutions in the foregoing embodiments. For example, when the instructions are run by the NPU, the NPU may perform the solution of recognizing the first text information in the foregoing embodiments. The display 1230 is configured to display the information. For example, the display 1230 is configured to display the first text information, the preview information, and the like in the foregoing embodiments.

An embodiment of this application further provides a chip. The chip includes a transceiver unit and a processing unit. The transceiver unit may be an input/output circuit or a communication interface. The processing unit is a processor, a microprocessor, or an integrated circuit integrated on the chip. The chip may perform the method in the foregoing method embodiments.

An embodiment of this application further provides a computer-readable storage medium. The computer-readable storage medium stores instructions. When the instructions are executed, the method in the foregoing method embodiments is performed.

An embodiment of this application further provides a computer program product including instructions. When the instructions are executed, the method in the foregoing method embodiments is performed.

It should also be understood that in embodiments of this application, the memory may include a read-only memory and a random access memory, and provide an instruction and data to the processor A part of the processor may further include a non-volatile random access memory. For example, the processor may further store information of a device type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional modules in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for displaying information on an electronic device, wherein the method comprises:

   detecting a first operation performed, on an interface of a first application, on first text information displayed on the interface, wherein the first text information comprises a jump code sequence, and the first text information is generated by a second application;
   obtaining first information related to the jump code sequence from the second application based on the first operation; and
   displaying preview information related to the jump code sequence based on the first information.

2. The method according to claim 1, wherein before the obtaining first information related to the jump code sequence from the second application, the method further comprises:

   recognizing the first text information to obtain jump code sequence information, wherein the jump code sequence information comprises N jump code sequences, and N is a positive integer greater than or equal to 1; and
   sending a request message to the second application, wherein the request message comprises the jump code sequence information, and the request message is used to request the first information.

3. The method according to claim 2, wherein the first text information further comprises content other than the jump code sequence, and the recognizing the first text information to obtain jump code sequence information comprises:

   performing text region detection on the first text information to obtain a text region in the first text information;
   performing text recognition on the text region in the first text information to obtain a first recognition result sequence;and
   determining the jump code sequence information from the first recognition result sequence according to a jump code sequence rule.

4. The method according to claim 2, wherein the first text information further comprises content other than the jump code sequence, and the recognizing the first text information to obtain jump code sequence information comprises:

   performing text region detection on the first text information to obtain a text region in the first text information;
   performing text recognition on the text region in the first text information to obtain a first recognition result sequence;
   determining a text region of a jump code from the text region in the first text information based on a jump code table and a mapping relationship between the first recognition result sequence and the text region in the first text information;
   performing text recognition on the text region of the jump code to obtain a third recognition result sequence; and
   determining the jump code sequence information from the third recognition result sequence according to a jump code sequence rule.

5. The method according to claim 4, wherein the determining a text region of a jump code from the text region in the first text information based on a jump code table and a mapping relationship between the first recognition result sequence and the text region in the first text information comprises:

   mapping, based on the jump code table, each character that is in the first recognition result sequence and that is not comprised in the jump code table to a first character, wherein the first character is not comprised in the jump code table;
   removing the first character from the first recognition result sequence to obtain a second recognition result sequence;and
   determining the text region of the jump code from the text region in the first text information based on the second recognition result sequence and a mapping relationship between the second recognition result sequence and the text region in the first text information.

6. The method according to claim 4 or 5, wherein before the performing text recognition on the text region of the jump code, the method further comprises:
   increasing a resolution of the text region of the jump code.

7. The method according to any one of claims 2 to 6, wherein the jump code sequence information further comprises confidence levels respectively corresponding to the N jump code sequences; and
   the first information comprises first information related to a jump code sequence with a highest confidence level in the N jump code sequences.

8. The method according to any one of claims 2 to 7, wherein the interface of the first application further comprises second text information, the first information comprises first information related to the N jump code sequences, and the method further comprises:

recognizing the second text information to obtain text content of the second text information; and

performing matching on the text content of the second text information and the first information related to the N jump code sequences, and using first information related to a jump code sequence with a highest matching degree in the N jump code sequences as the first information.

**9.** The method according to any one of claims 1 to 8, wherein the second application is an application in a target application list, and the target application list comprises an identifier of at least one application.

**10.** The method according to any one of claims 1 to 9, wherein the method further comprises:

recognizing the content other than the jump code sequence in the first text information, to obtain the second application information, wherein the second application information indicates an identifier of the second application; and

determining the second application based on the second application information.

**11.** The method according to claim 10, wherein the determining the second application based on the second application information comprises:

matching, in the target application list, a second application indicated by the second application information; and

determining, when the second application indicated by the second application information is successfully matched in the target application list, the second application indicated by the second application information as the second application.

**12.** The method according to any one of claims 1 to 8, wherein the method further comprises:

displaying a prompt window, wherein the prompt window comprises identifiers of a plurality of applications;

detecting a third operation performed on the prompt window; and

determining, based on the third operation, an application corresponding to the third operation as the second application.

**13.** The method according to any one of claims 2 to 12, wherein before the recognizing the first text information to obtain jump code sequence information, the method further comprises:

obtaining a picture corresponding to the first text information; and

the recognizing the first text information to obtain jump code sequence information comprises:

recognizing the picture corresponding to the first text information to obtain the jump code sequence information.

**14.** The method according to any one of claims 1 to 13, wherein a plurality of pieces of first text information are displayed on the interface of the first application, and the displaying preview information related to the jump code sequence based on the first information comprises:

displaying, based on the first information, preview information related to a jump code sequence comprised in each piece of first text information.

**15.** The method according to any one of claims 1 to 14, wherein the method further comprises:

detecting a second operation performed on the preview information; and

invoking the second application based on the second operation, and displaying an interface related to the preview information.

**16.** The method according to any one of claims 1 to 15, wherein a display format of the first text information is a picture format or a text format.

**17.** The method according to any one of claims 1 to 16, wherein the first text information indicates a link to a commodity; or

the first text information indicates a link to adding a friend; or

the first text information indicates a link to receiving a red envelope; or

the first text information indicates an assistance link.

**18.** The method according to any one of claims 1 to 17, wherein the method further comprises at least one of the following:

the preview information comprises preview information of the commodity; and/or

the preview information comprises the identifier of the second application; and/or

the preview information comprises an identifier of a third application; and/or

the preview information comprises menu options respectively corresponding to the plurality of applications; and/or

the first operation comprises at least one of the following: a double-finger pressing operation, a single-finger touching and holding operation, an operation of one or more times of tapping performed through a knuckle, or a circle-selection operation performed through a finger or a knuckle; and/or
the second application is a shopping application; and/or
the first information comprises detailed information related to the jump code sequence; and/or
the first character is a "#" character or a "*" character; and/or
a first element of the jump code sequence and a last element of the jump code sequence are a same character.

**19.** An electronic device, comprising a display screen, one or more processors, and one or more memories, wherein the one or more memories store one or more computer programs, the one or more computer programs comprise instructions, and when the instructions are executed by the one or more processors, the electronic device is enabled to perform the method for displaying information on an electronic device according to any one of claims 1 to 18.

**20.** A computer-readable storage medium, comprising computer instructions, wherein when the computer instructions are run on an electronic device, the electronic device is enabled to perform the method for displaying information on an electronic device according to any one of claims 1 to 18.

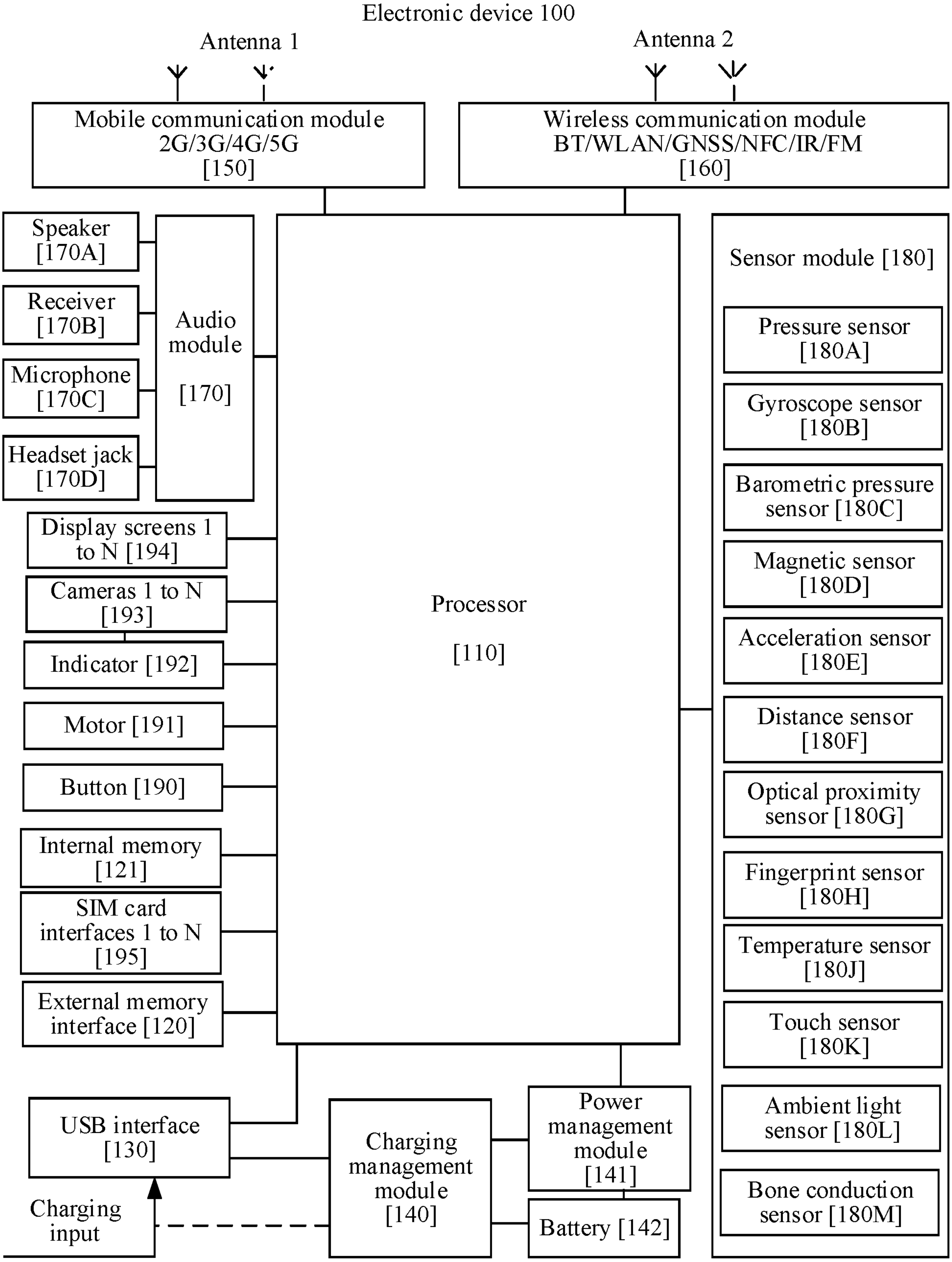
Electronic device 100
Antenna 1
Antenna 2
Mobile communication module 2G/3G/4G/5G [150]
Wireless communication module BT/WLAN/GNSS/NFC/IR/FM [160]
Speaker [170A]
Receiver [170B]
Microphone [170C]
Headset jack [170D]
Audio module [170]
Display screens 1 to N [194]
Cameras 1 to N [193]
Indicator [192]
Motor [191]
Button [190]
Internal memory [121]
SIM card interfaces 1 to N [195]
External memory interface [120]
Processor [110]
Sensor module [180]
Pressure sensor [180A]
Gyroscope sensor [180B]
Barometric pressure sensor [180C]
Magnetic sensor [180D]
Acceleration sensor [180E]
Distance sensor [180F]
Optical proximity sensor [180G]
Fingerprint sensor [180H]
Temperature sensor [180J]
Touch sensor [180K]
Ambient light sensor [180L]
Bone conduction sensor [180M]
USB interface [130]
Charging input
Charging management module [140]
Power management module [141]
Battery [142]

FIG. 1

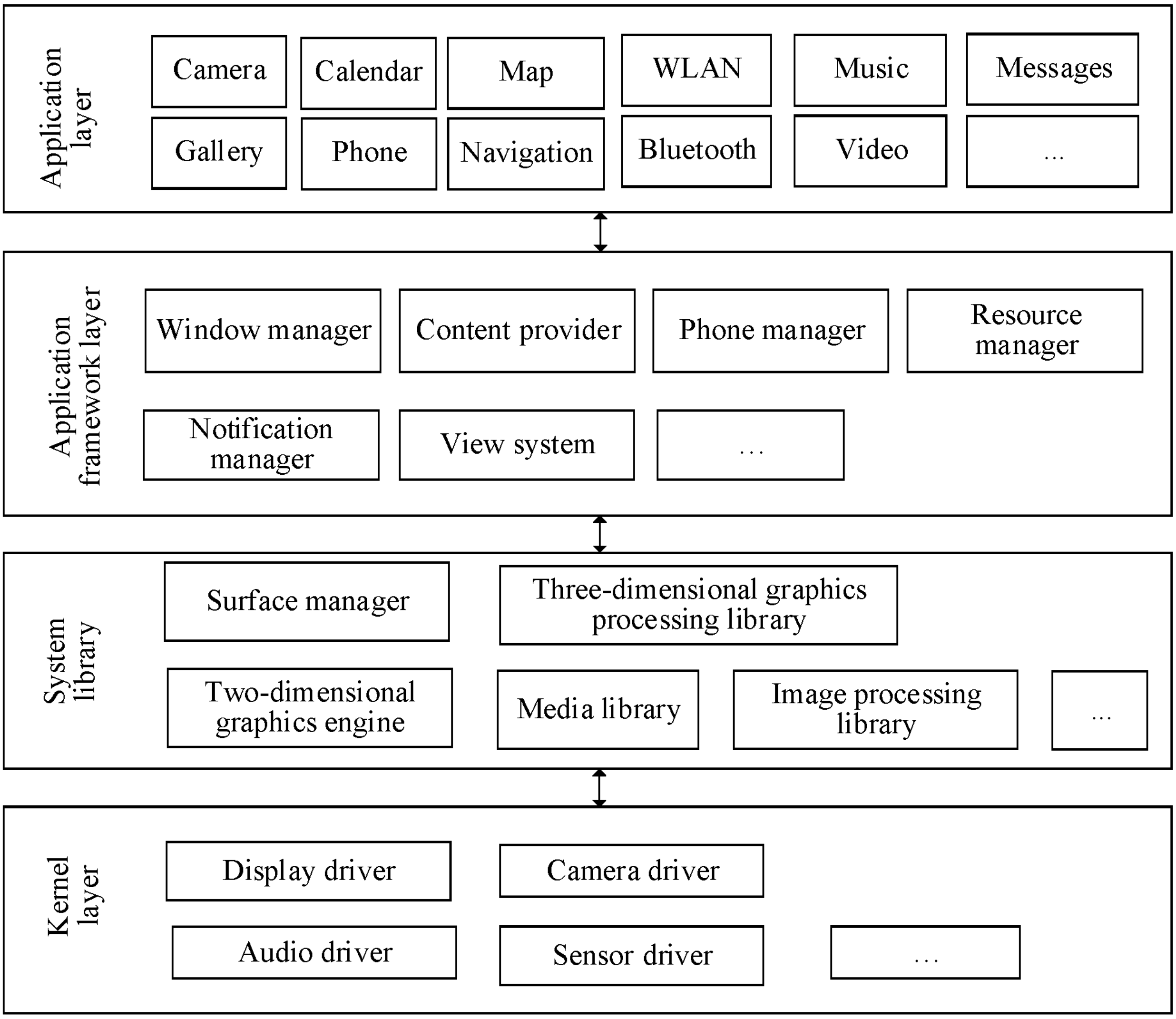
Application layer
Camera
Calendar
Map
WLAN
Music
Messages
Gallery
Phone
Navigation
Bluetooth
Video
...
Application framework layer
Window manager
Content provider
Phone manager
Resource manager
Notification manager
View system
...
System library
Surface manager
Three-dimensional graphics processing library
Two-dimensional graphics engine
Media library
Image processing library
...
Kernel layer
Display driver
Camera driver
Audio driver
Sensor driver
...

FIG. 2

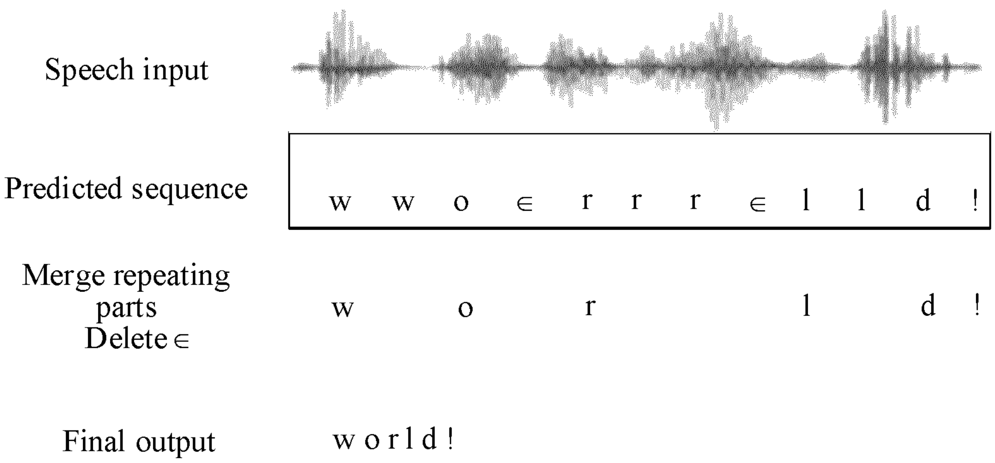
Speech input
Predicted sequence
w w o ∈ r r r ∈ l l d !
Merge repeating parts
Delete ∈
w o r l d !
Final output
w o r l d !

FIG. 3

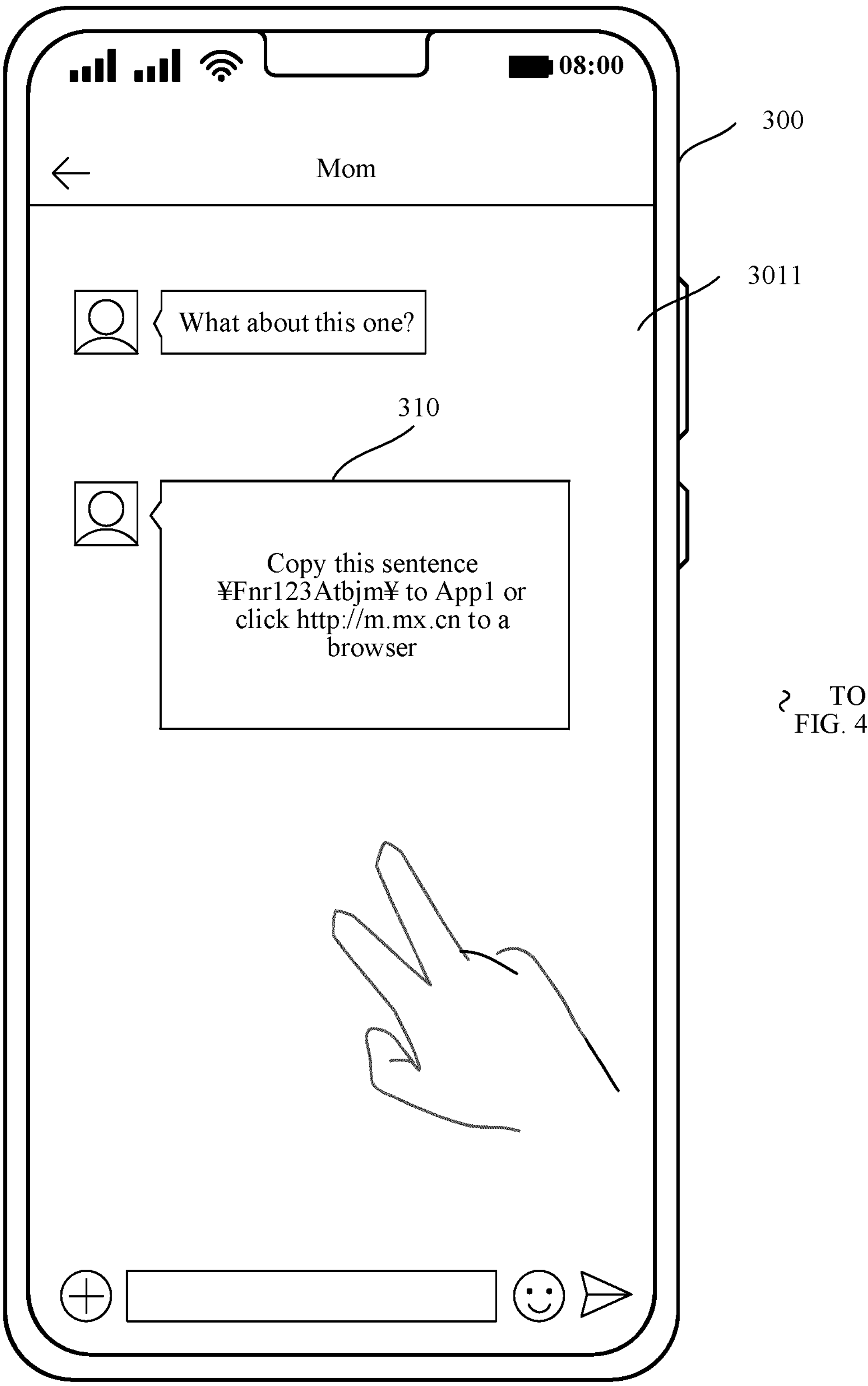


TO FIG. 4(b)

FIG. 4(a)

CONT.
FROM
FIG. 4(a)

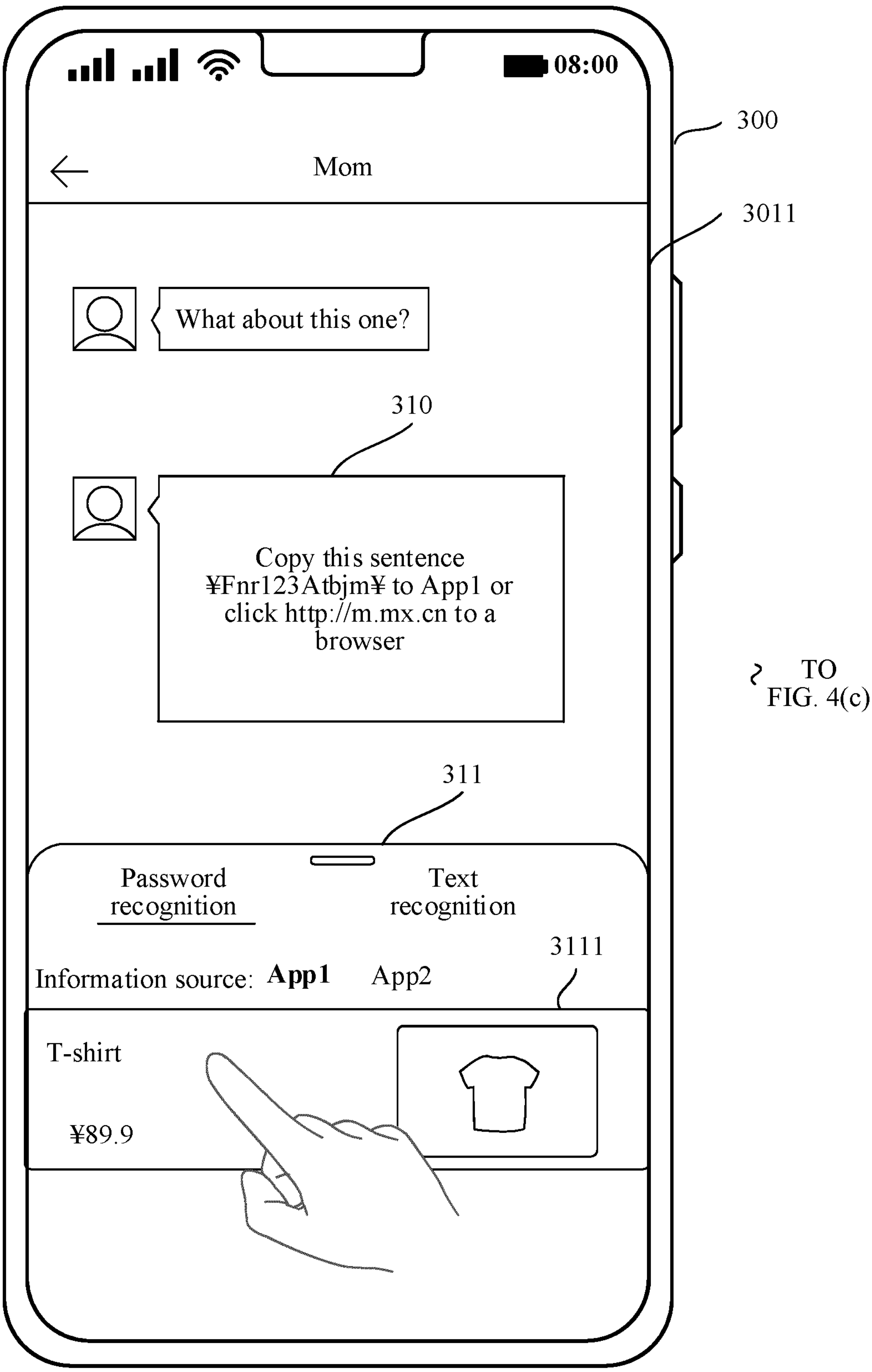


TO
FIG. 4(c)

FIG. 4(b)

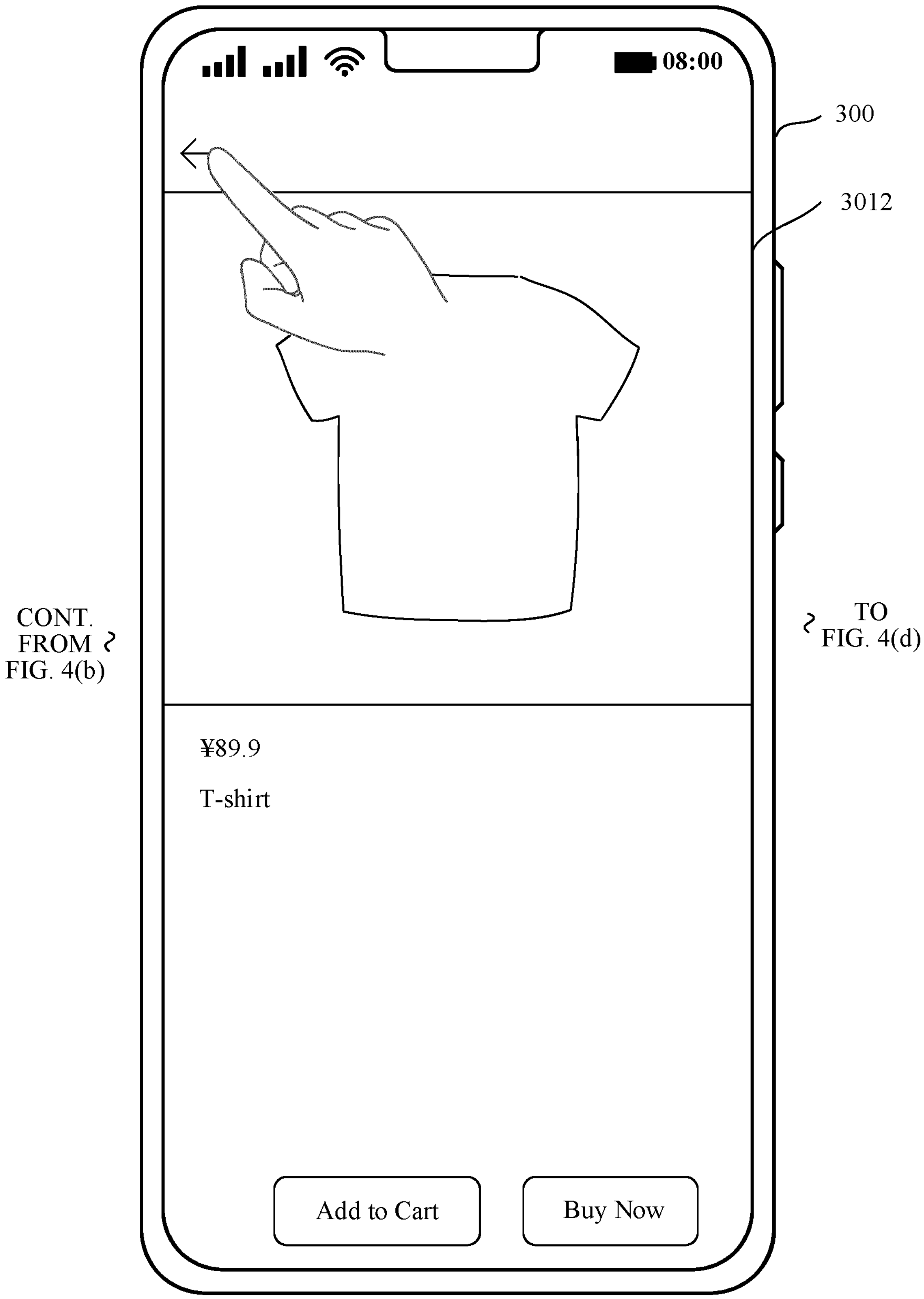
08:00
300
3012
CONT.
FROM
FIG. 4(b)
TO
FIG. 4(d)
¥89.9
T-shirt
Add to Cart
Buy Now

FIG. 4(c)

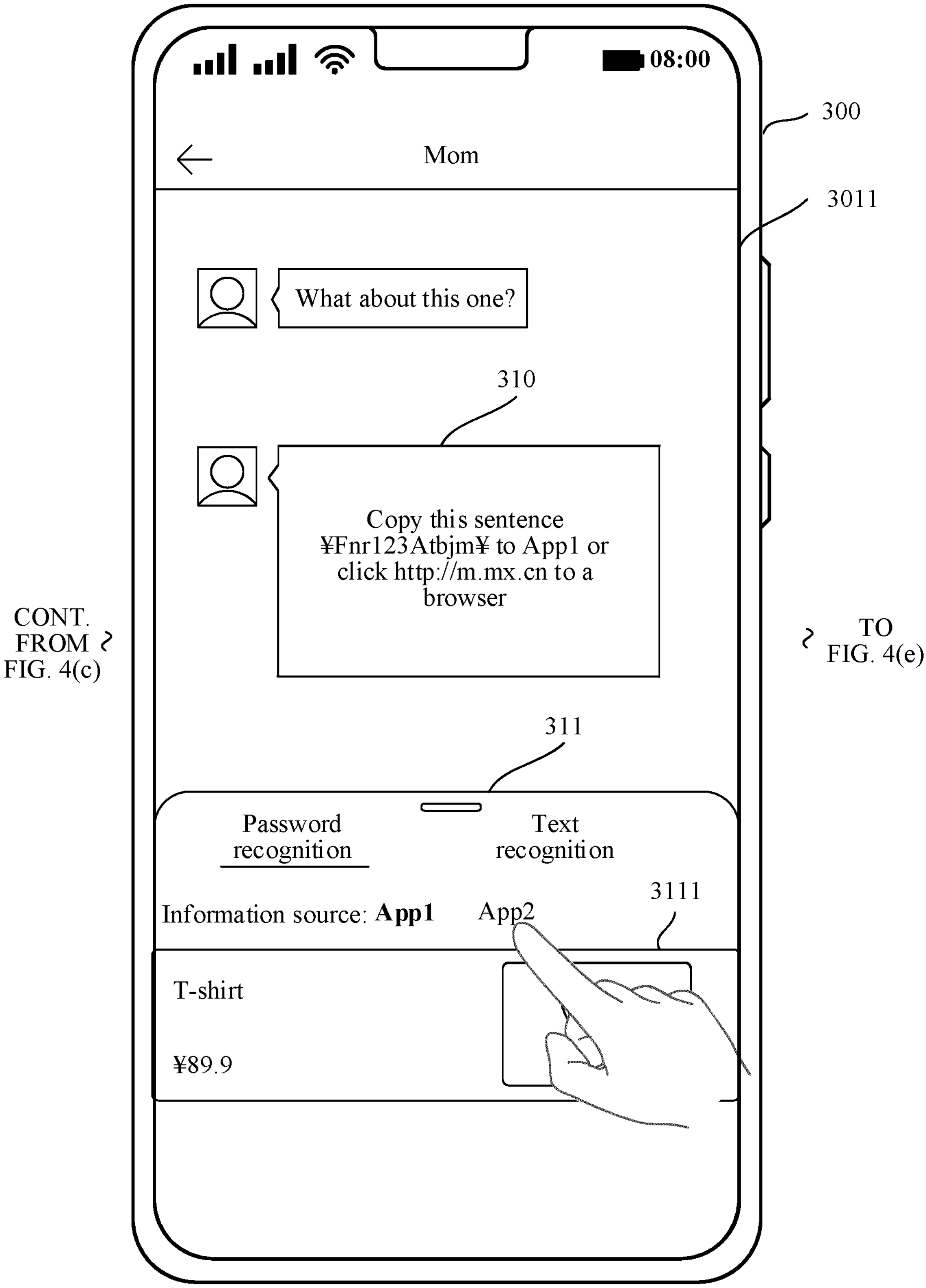
08:00
300
Mom
3011
What about this one?
310
Copy this sentence ¥Fnr123Atbjm¥ to App1 or click http://m.mx.cn to a browser
CONT. FROM FIG. 4(c)
TO FIG. 4(e)
311
Password recognition
Text recognition
3111
Information source: **App1** App2
T-shirt
¥89.9

FIG. 4(d)

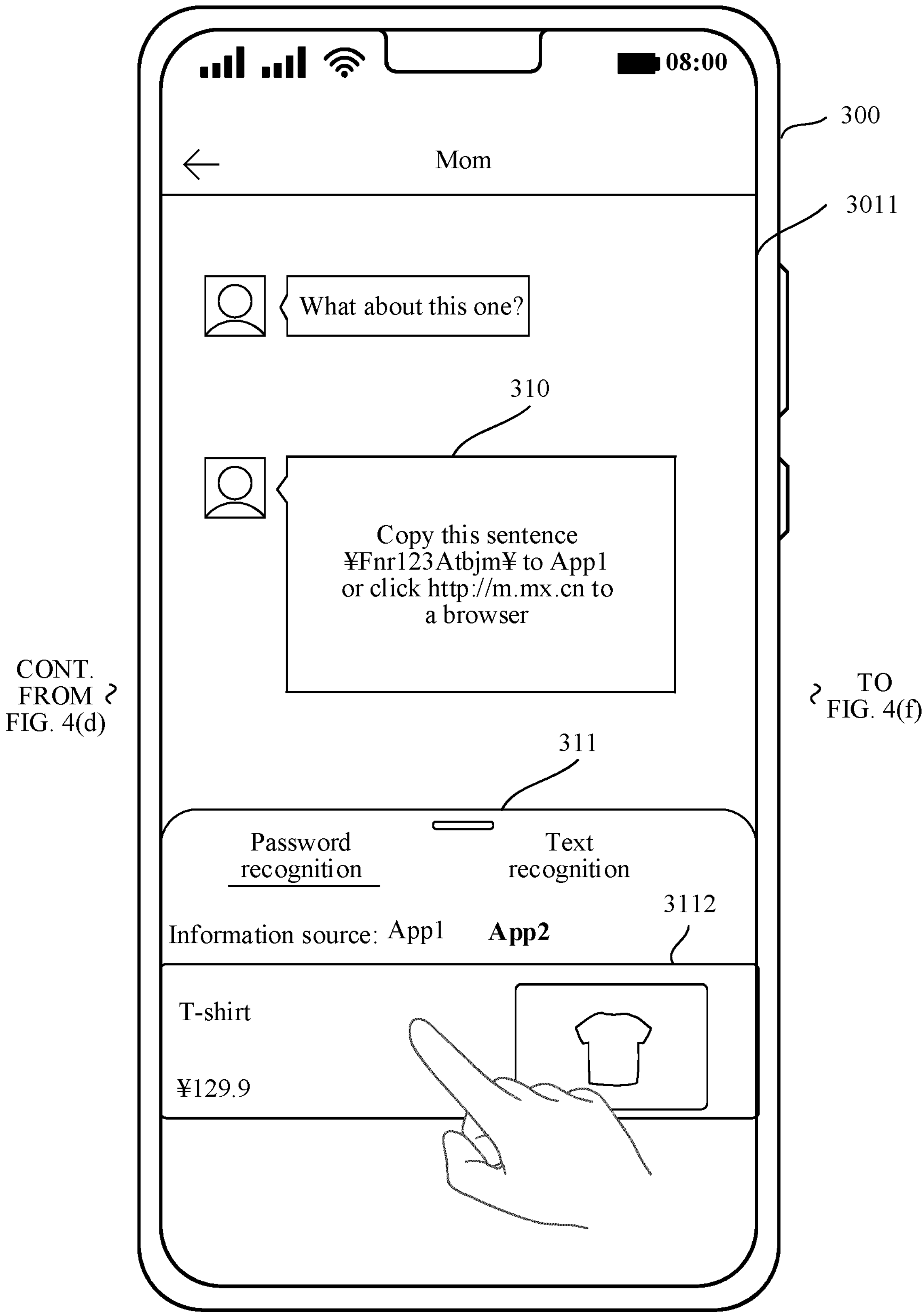
08:00
300
3011
Mom
What about this one?
310
Copy this sentence ¥Fnr123Atbjm¥ to App1 or click http://m.mx.cn to a browser
CONT. FROM FIG. 4(d)
TO FIG. 4(f)
311
Password recognition
Text recognition
3112
Information source: App1 App2
T-shirt
¥129.9

FIG. 4(e)

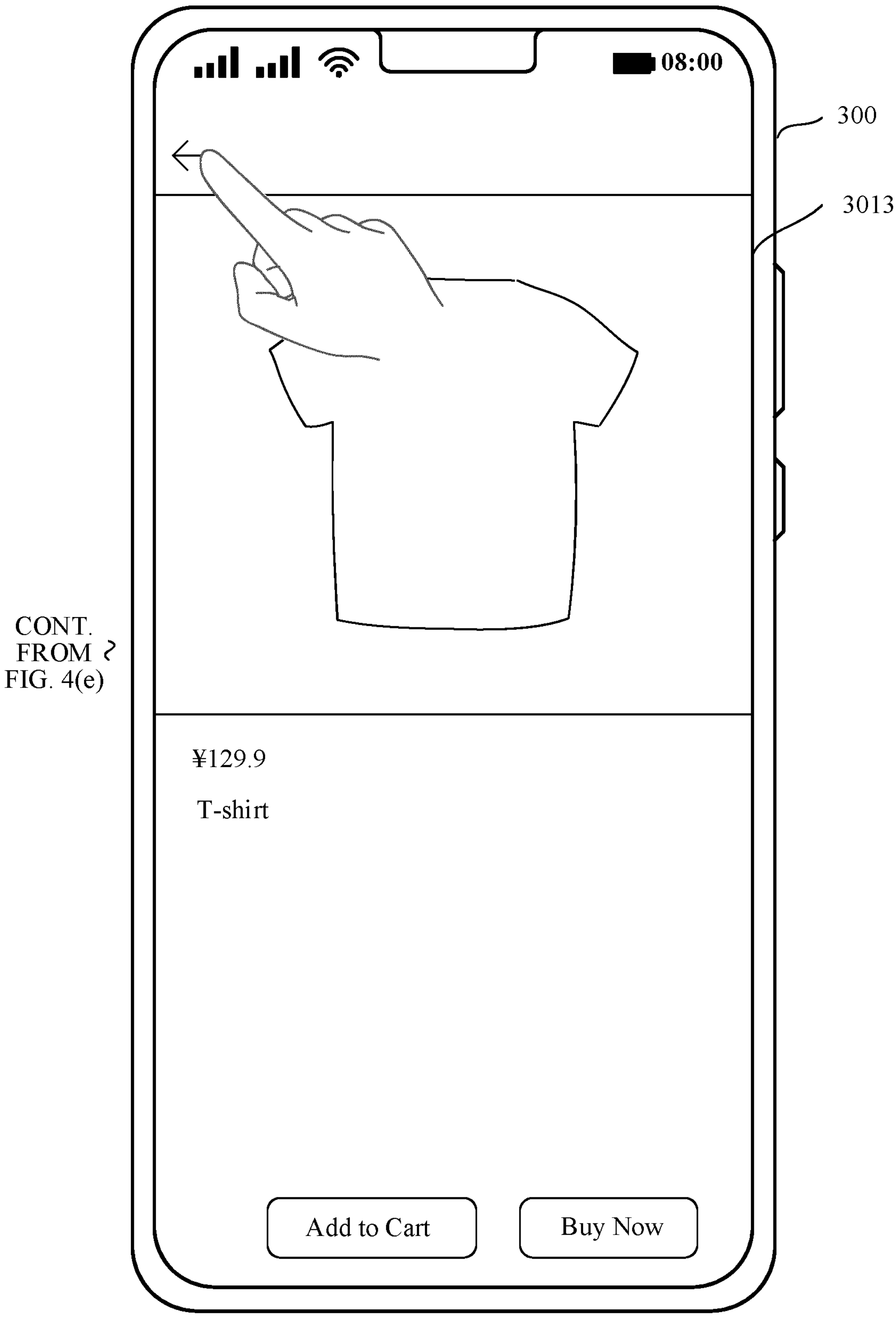


FIG. 4(f)

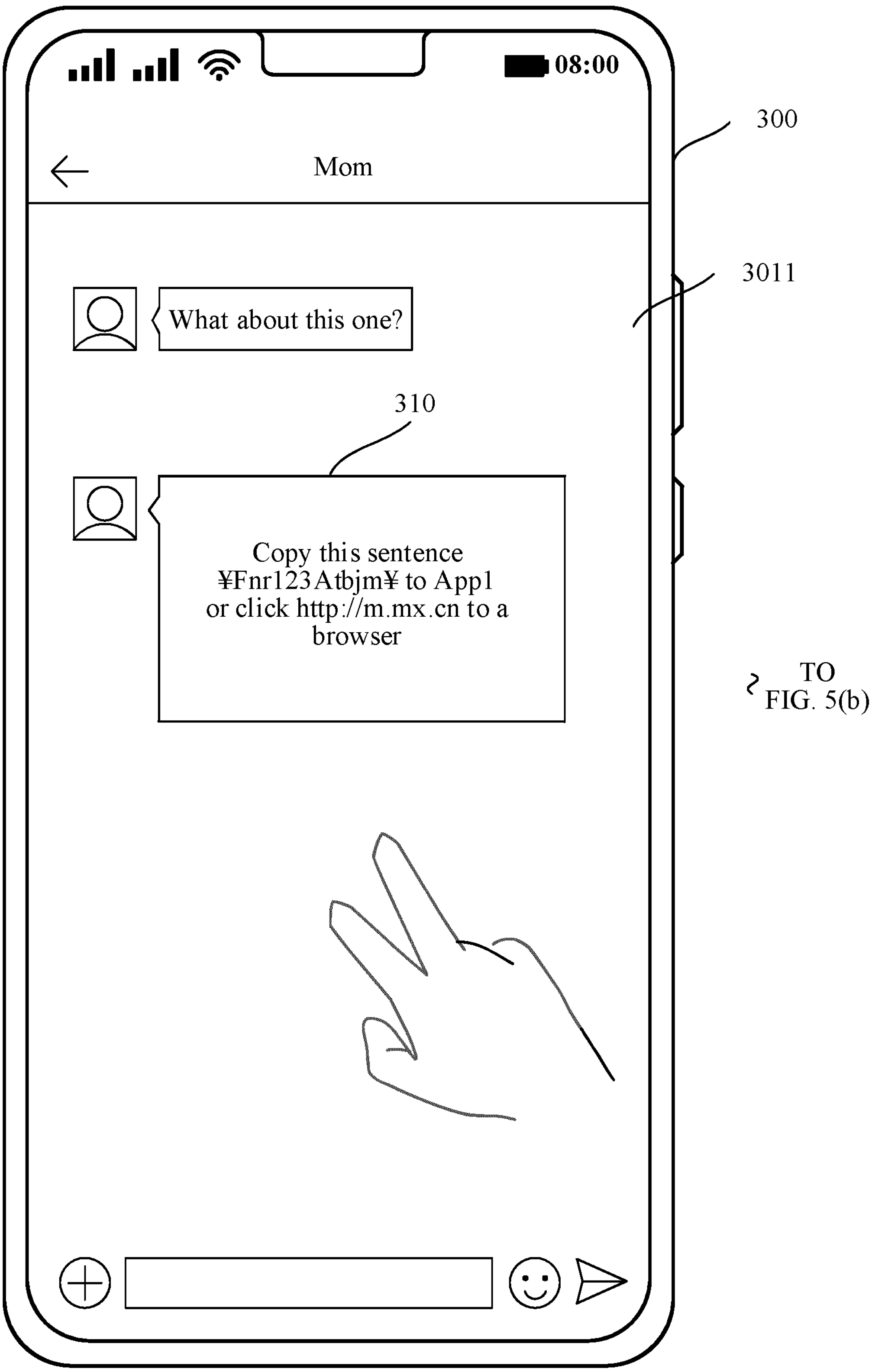
08:00
300
Mom
3011
What about this one?
310
Copy this sentence ¥Fnr123Atbjm¥ to App1 or click http://m.mx.cn to a browser
TO FIG. 5(b)

FIG. 5(a)

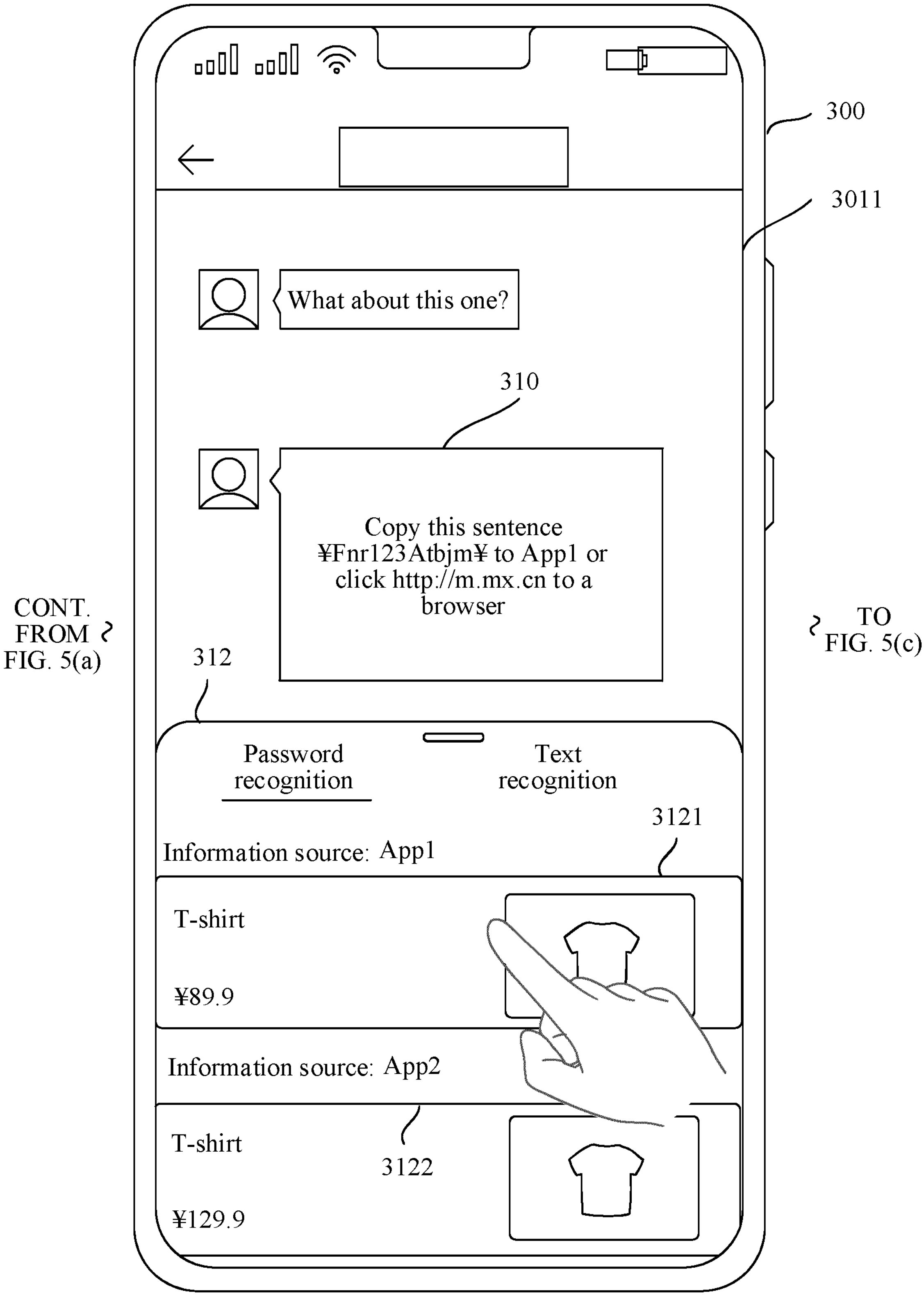
300
3011
What about this one?
310
Copy this sentence ¥Fnr123Atbjm¥ to App1 or click http://m.mx.cn to a browser
CONT. FROM FIG. 5(a)
TO FIG. 5(c)
312
Password recognition
Text recognition
3121
Information source: App1
T-shirt
¥89.9
Information source: App2
T-shirt
3122
¥129.9

FIG. 5(b)

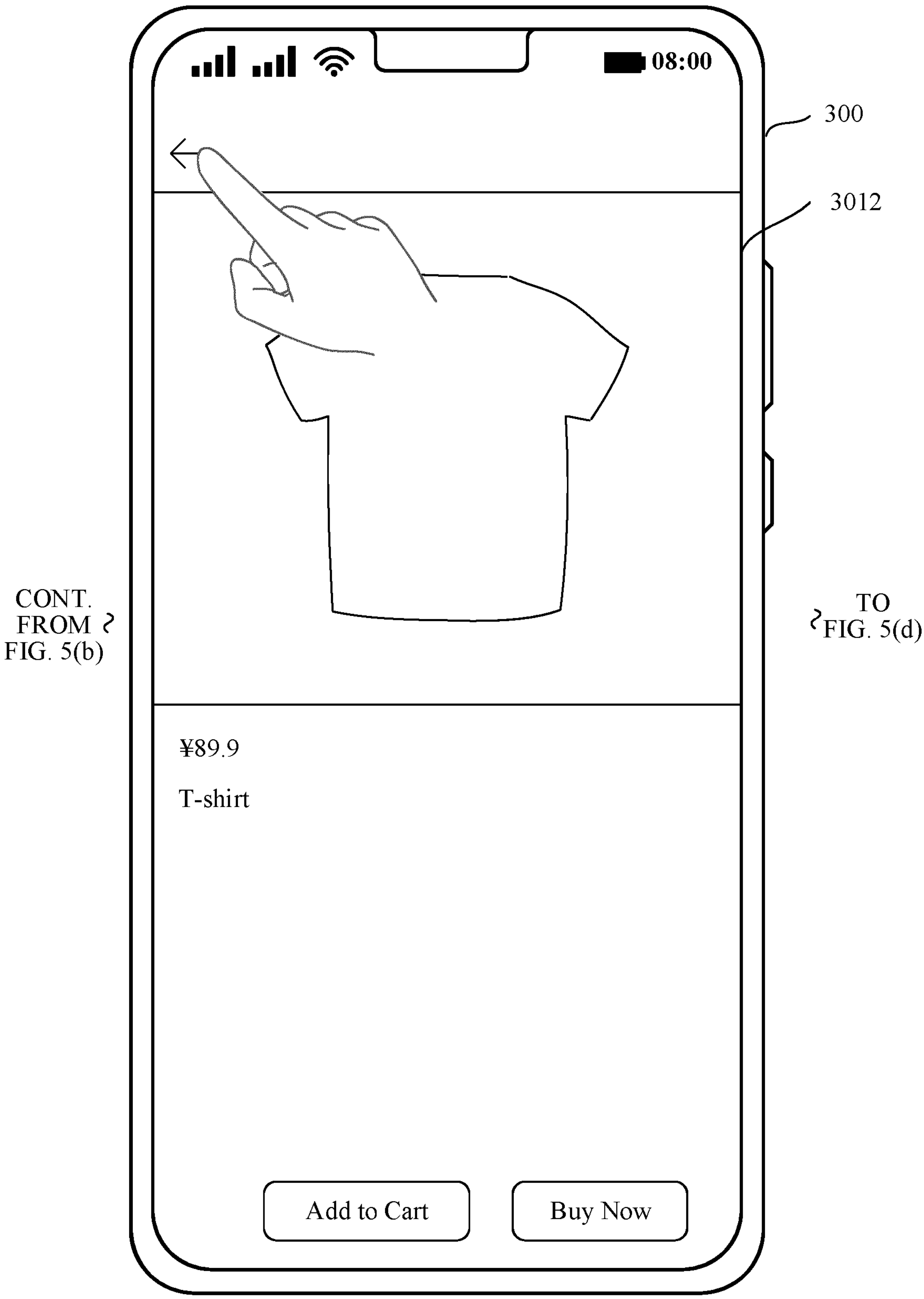
08:00
300
3012
CONT. FROM FIG. 5(b)
TO FIG. 5(d)
¥89.9
T-shirt
Add to Cart
Buy Now

FIG. 5(c)

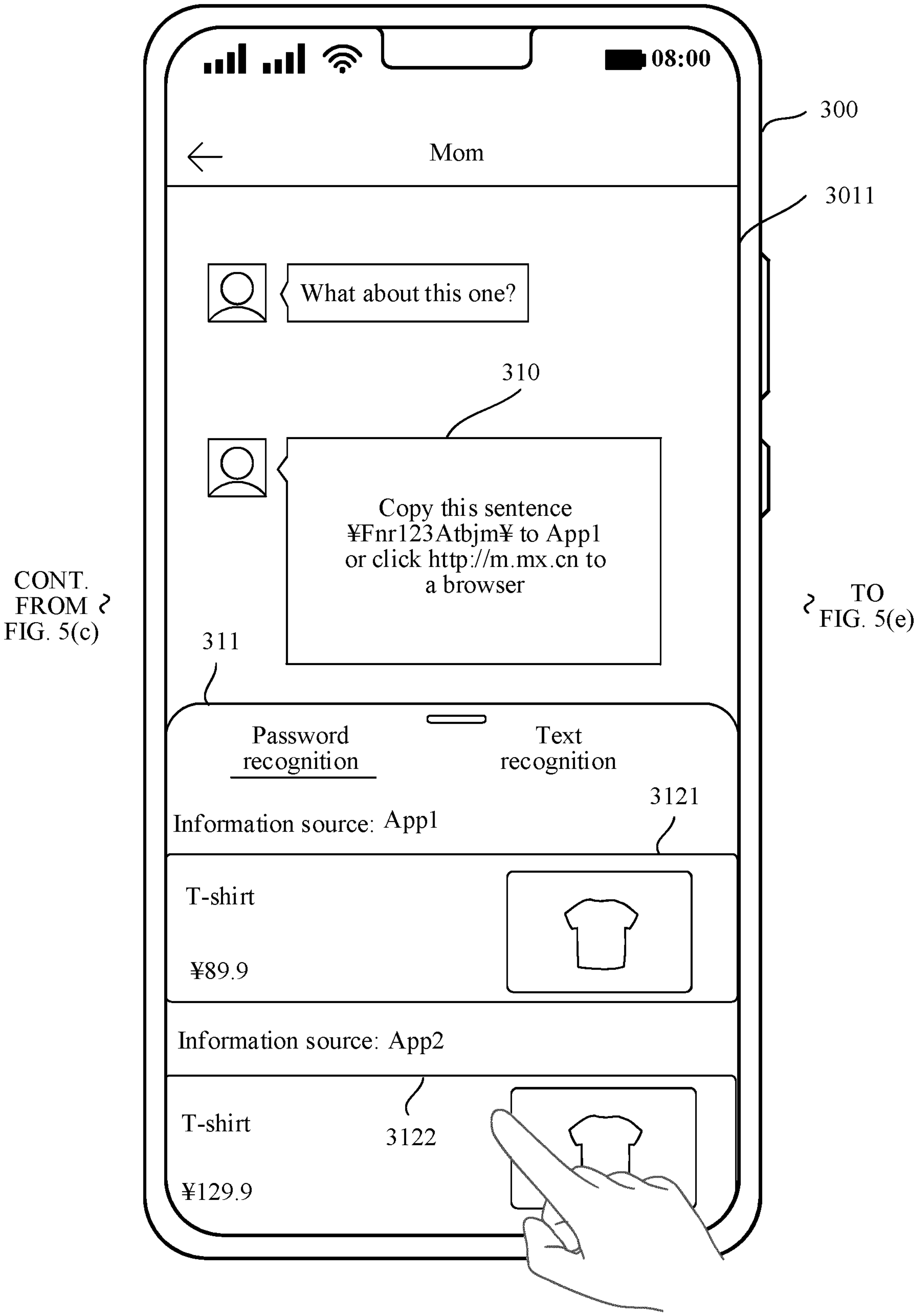
08:00
300
Mom
3011
What about this one?
310
Copy this sentence
¥Fnr123Atbjm¥ to App1
or click http://m.mx.cn to
a browser
CONT.
FROM
FIG. 5(c)
TO
FIG. 5(e)
311
Password
recognition
Text
recognition
3121
Information source: App1
T-shirt
¥89.9
Information source: App2
T-shirt
3122
¥129.9

FIG. 5(d)

CONT.
FROM
FIG. 5(d)

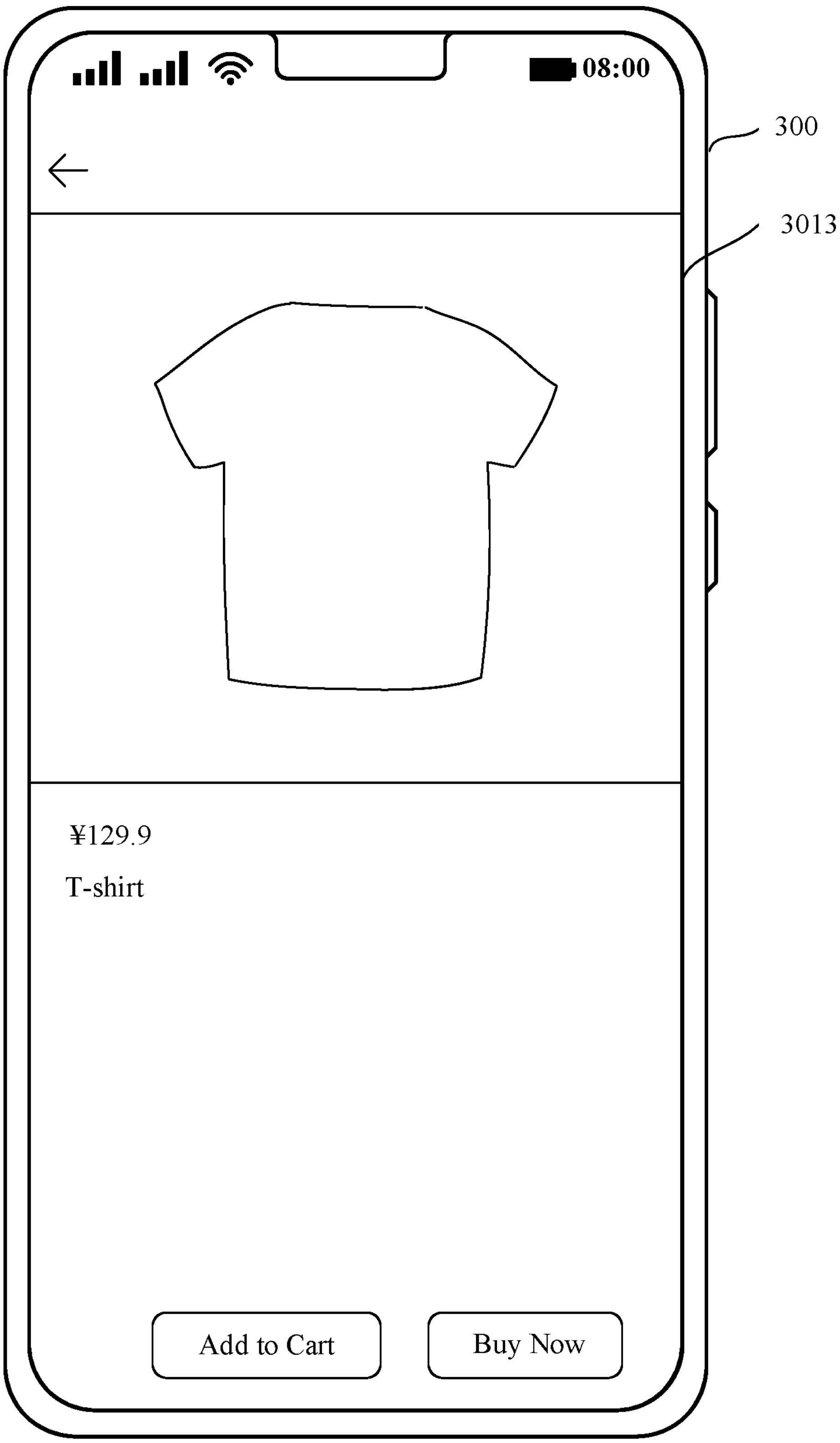


FIG. 5(e)

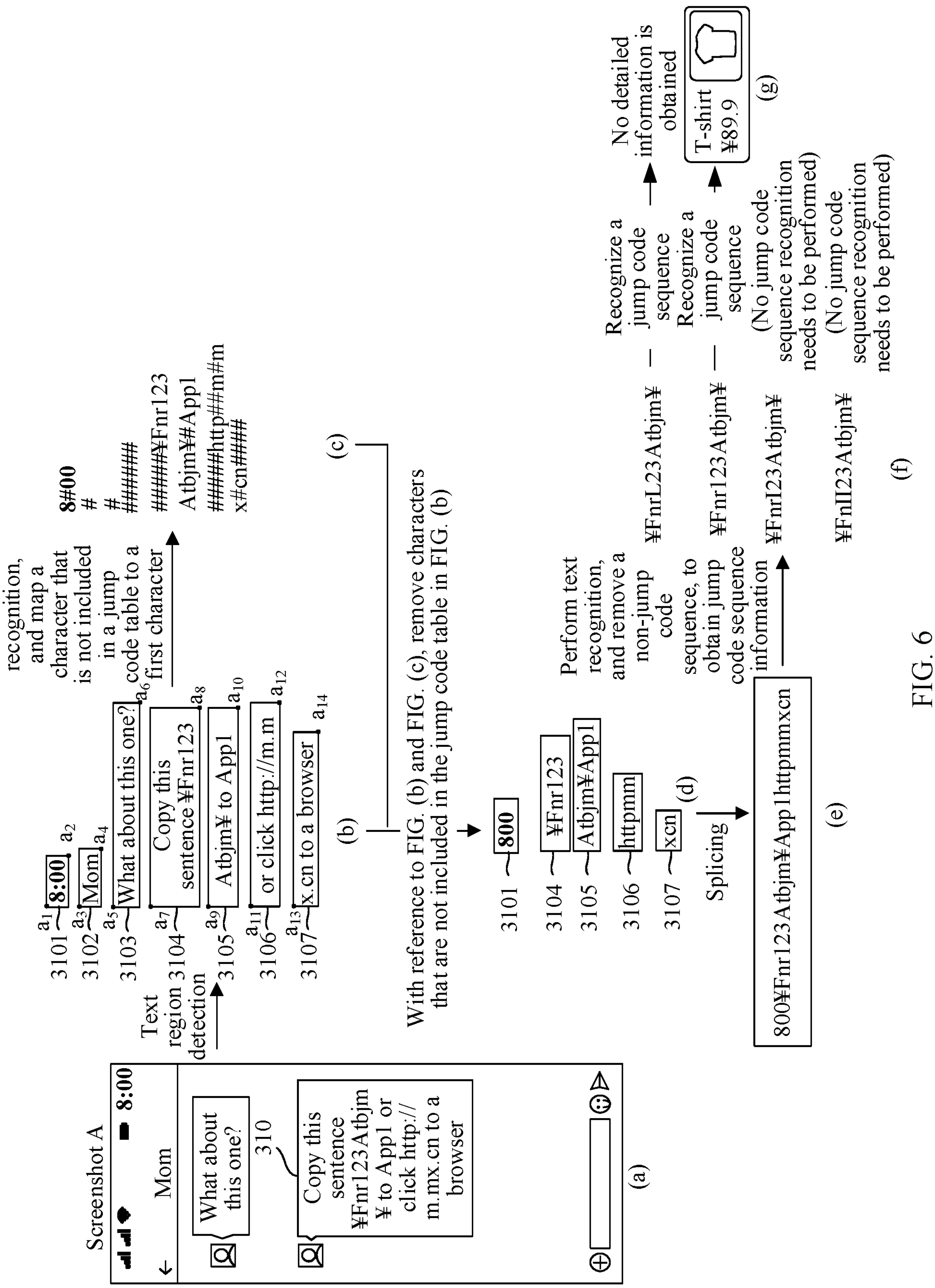
Screenshot A
8:00
Mom
What about this one?
310
Copy this sentence ¥Fnr123Atbjm ¥ to App1 or click http:// m.mx.cn to a browser
(a)
Text region detection
3101 a1 8:00 a2
3102 a3 Mom a4
3103 a5 What about this one? a6
3104 a7 Copy this sentence ¥Fnr123 a8
3105 a9 Atbjm¥ to App1 a10
3106 a11 or click http://m.m a12
3107 a13 x.cn to a browser a14
(b)
Perform text recognition, and map a character that is not included in a jump code table to a first character
8#00
#
#
######
#####¥Fnr123
Atbjm¥#App1
#####http##m#m
x#cn####
(c)
With reference to FIG. (b) and FIG. (c), remove characters that are not included in the jump code table in FIG. (b)
3101 800
3104 ¥Fnr123
3105 Atbjm¥App1
3106 httpmm
3107 xcn
(d)
Splicing
800¥Fnr123Atbjm¥App1httpmmxcn
(e)
Perform text recognition, and remove a non-jump code sequence, to obtain jump code sequence information
¥FnrL23Atbjm¥ — Recognize a jump code sequence → No detailed information is obtained
¥Fnr123Atbjm¥ — Recognize a jump code sequence → T-shirt ¥89.9
¥FnrI23Atbjm¥ (No jump code sequence recognition needs to be performed)
¥FnII23Atbjm¥ (No jump code sequence recognition needs to be performed)
(f)
(g)

FIG. 6

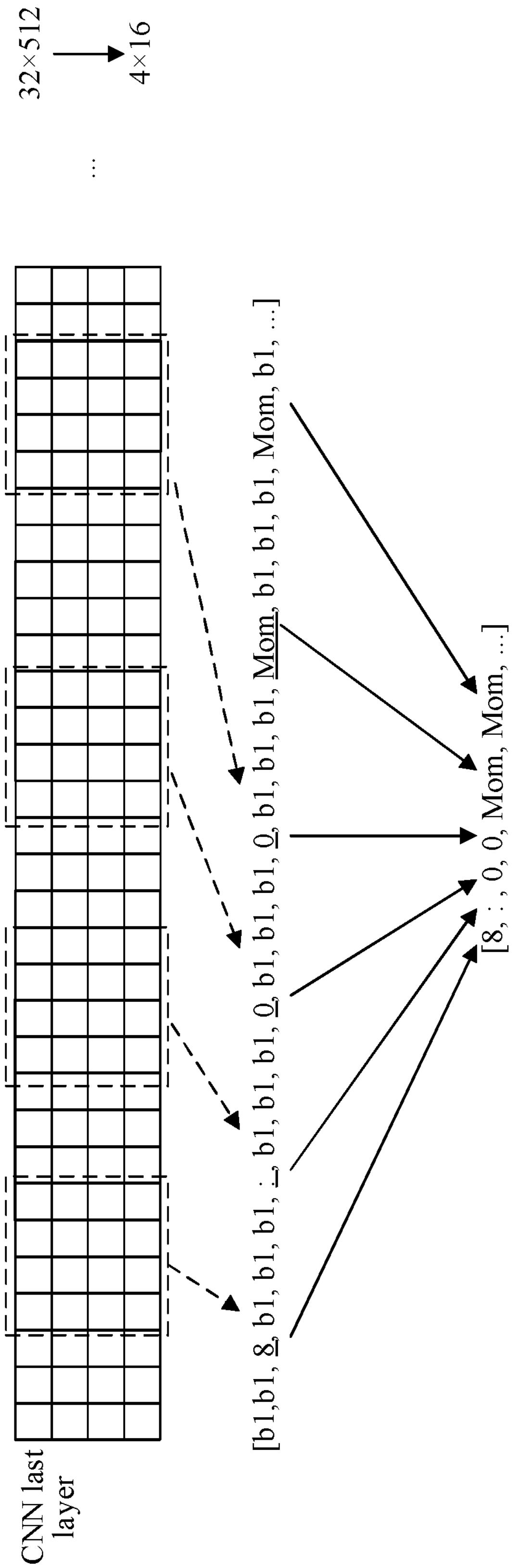
32×512
4×16
…
CNN last layer
[b1,b1, 8, b1, b1, b1, :, b1, b1, b1, b1, 0, b1, b1, b1, b1, 0, b1, b1, b1, b1, Mom, b1, b1, b1, b1, Mom, b1, …]
[8, :, 0, 0, Mom, Mom, …]

FIG. 7

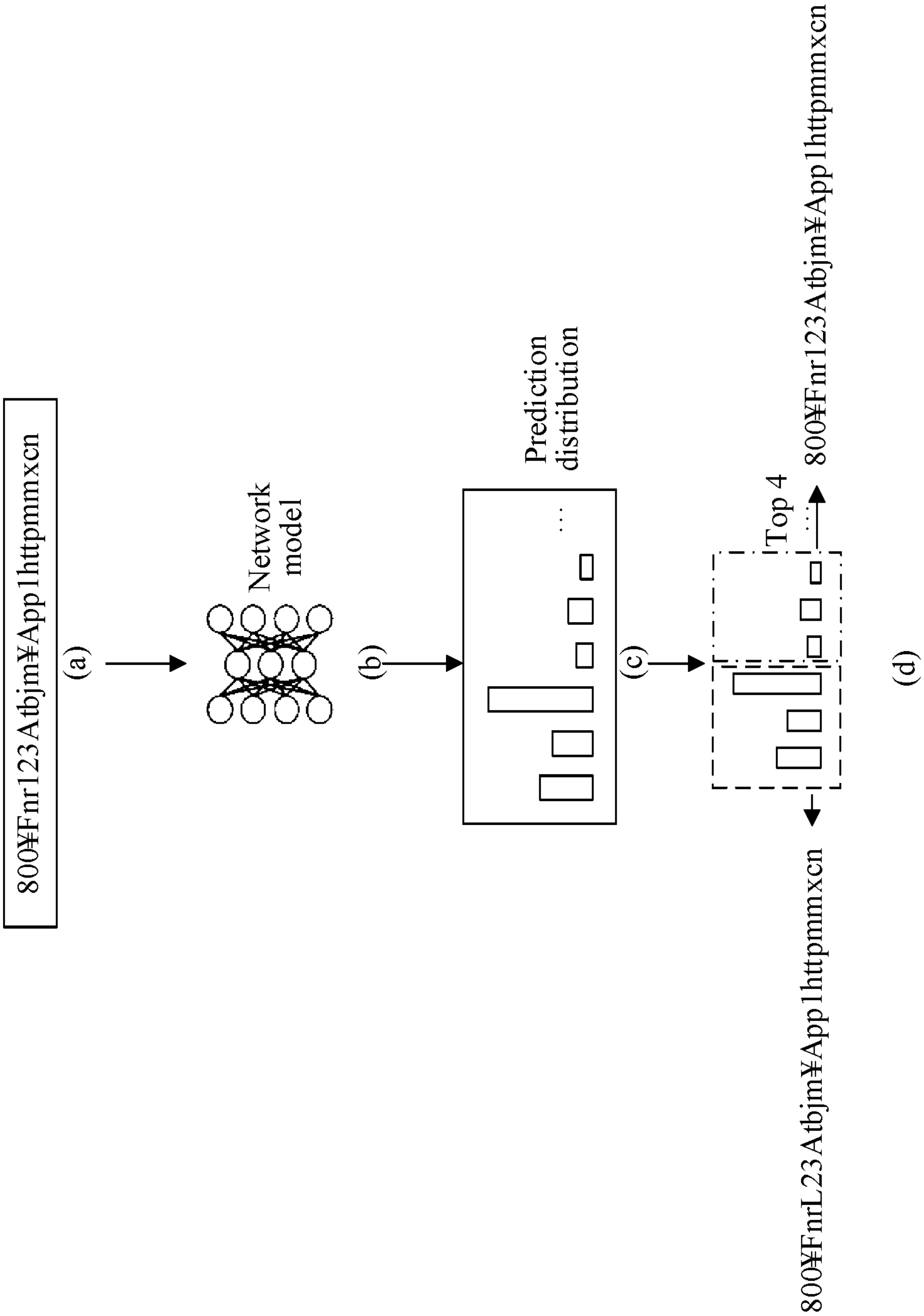
800¥Fnr123Atbjm¥App1httpmmxcn
(a)
Network model
(b)
Prediction distribution
(c)
Top 4
800¥Fnr123Atbjm¥App1httpmmxcn
800¥FnrL23Atbjm¥App1httpmmxcn
(d)

FIG. 8

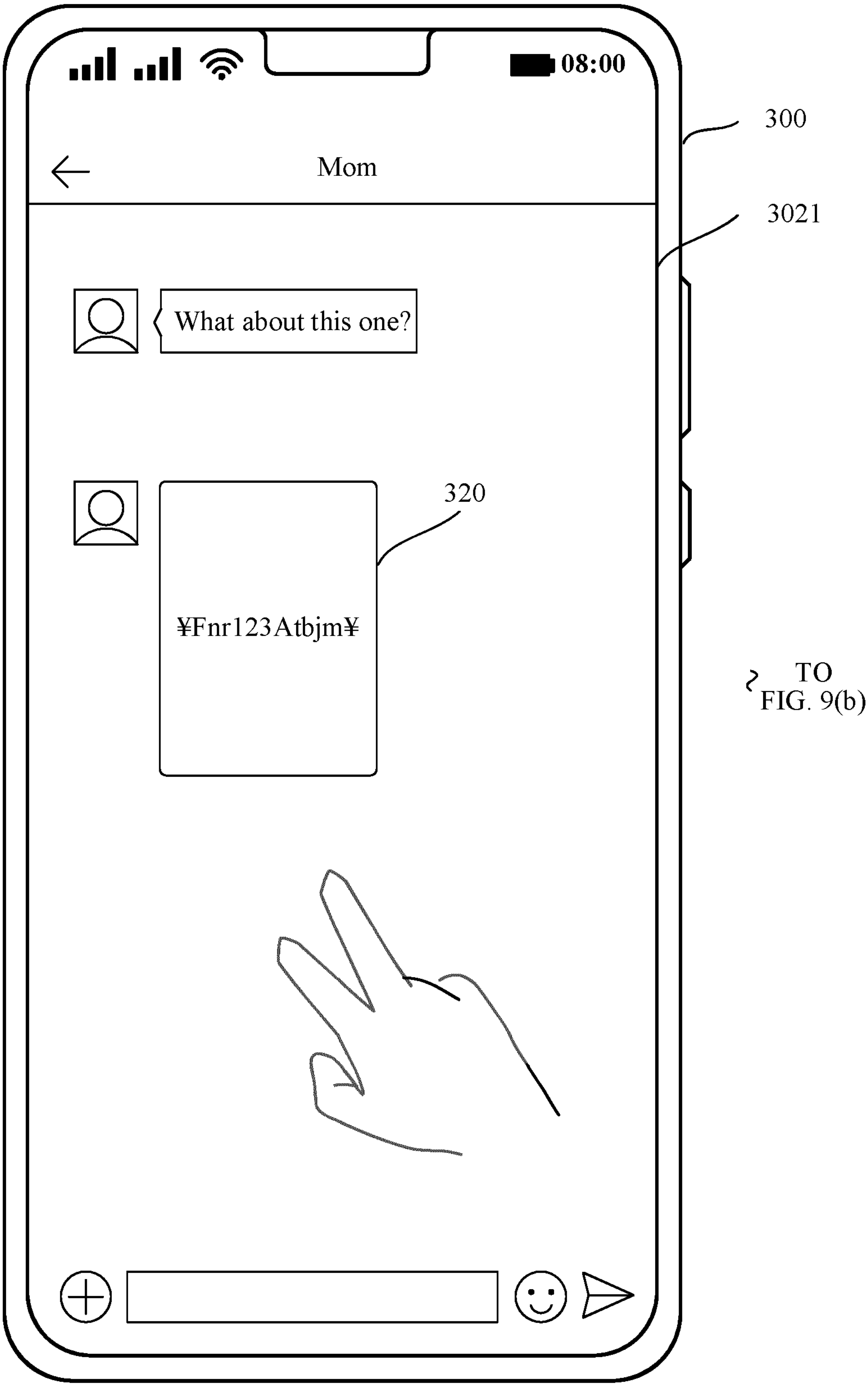
08:00
Mom
What about this one?
320
¥Fnr123Atbjm¥
300
3021
TO
FIG. 9(b)

FIG. 9(a)

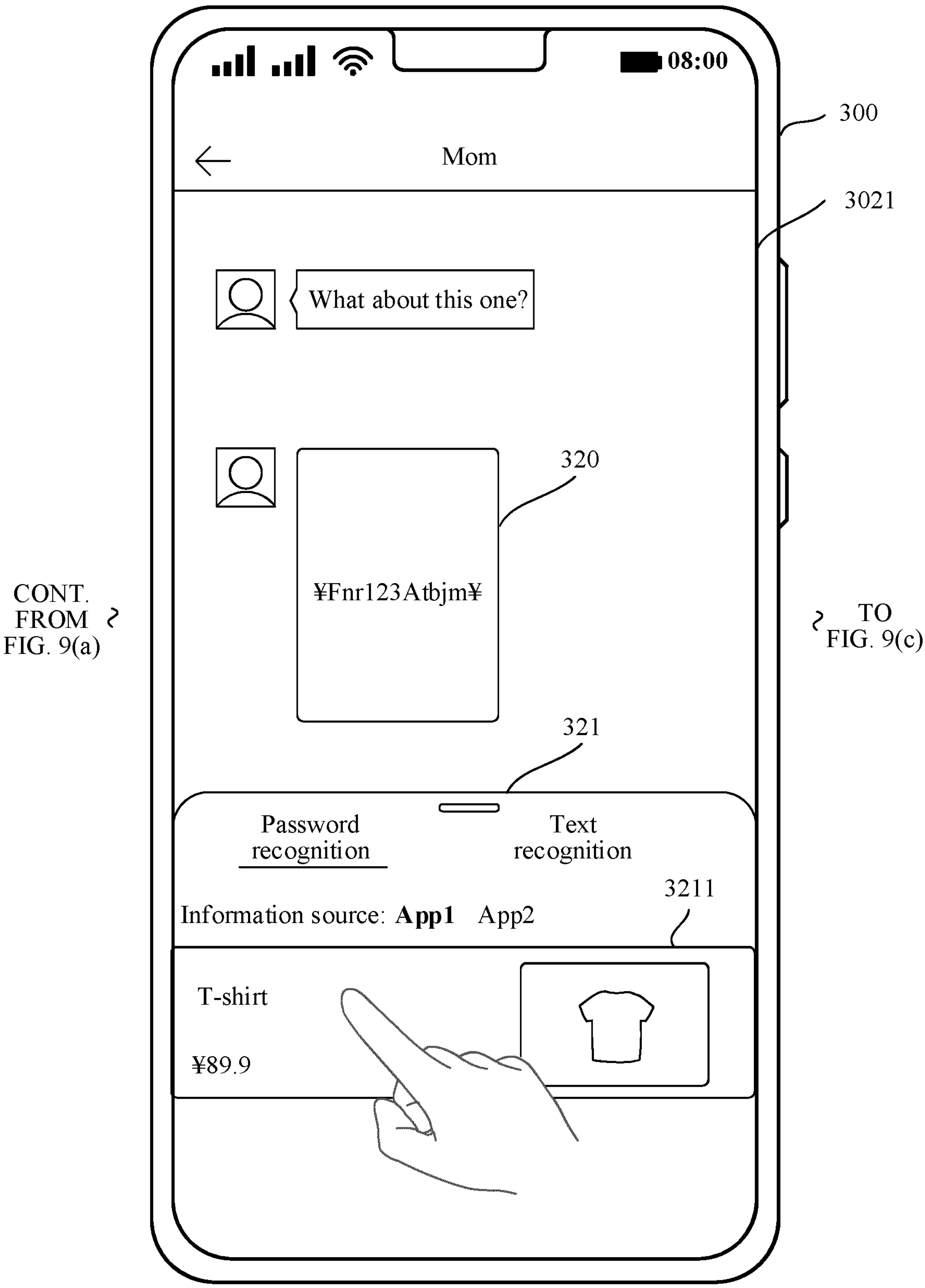

08:00
300
3021
Mom
What about this one?
320
¥Fnr123Atbjm¥
CONT. FROM FIG. 9(a)
TO FIG. 9(c)
321
Password recognition
Text recognition
3211
Information source: **App1** App2
T-shirt
¥89.9


FIG. 9(b)

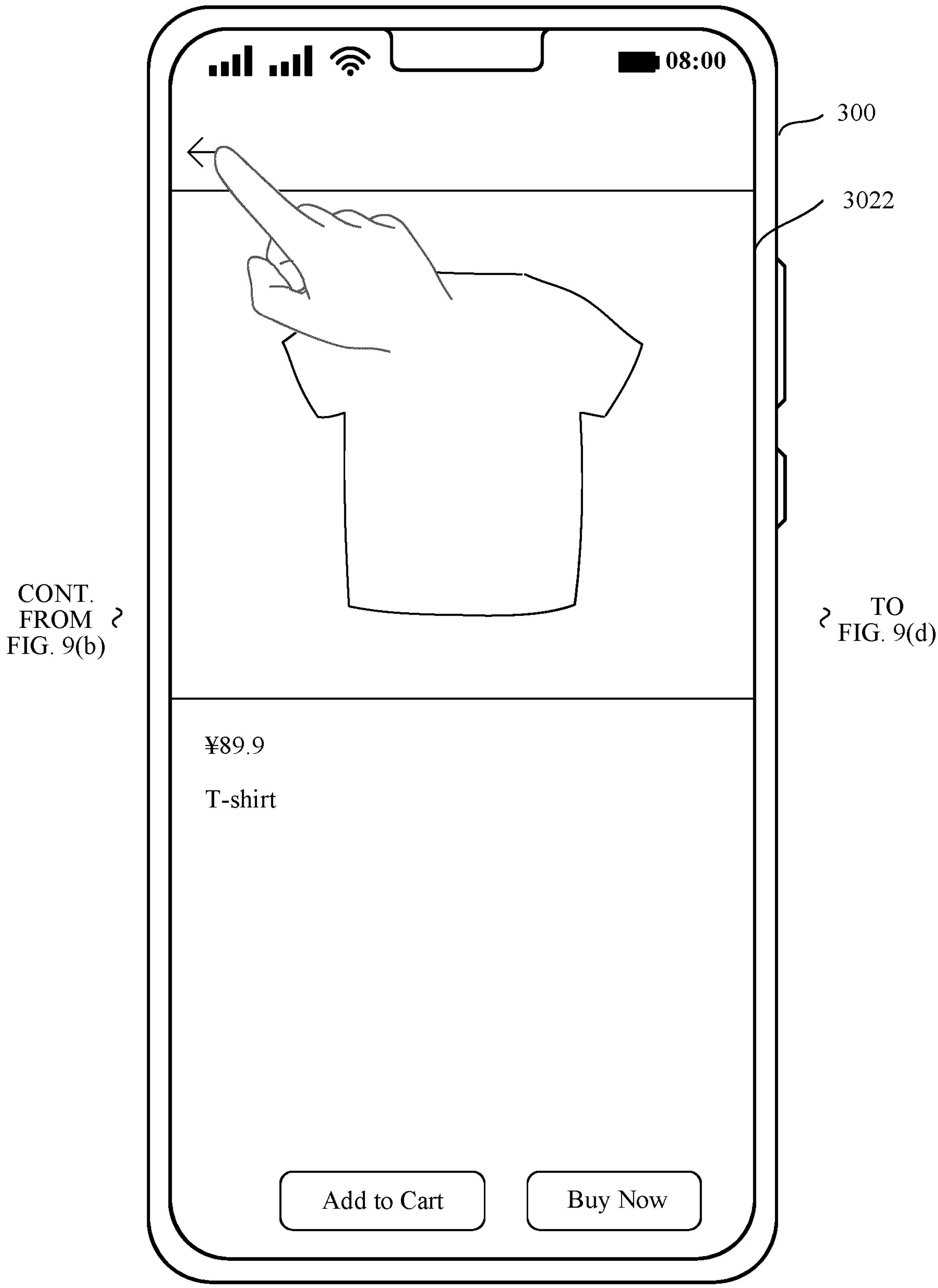
08:00
300
3022
CONT.
FROM
FIG. 9(b)
TO
FIG. 9(d)
¥89.9
T-shirt
Add to Cart
Buy Now

FIG. 9(c)

CONT. FROM FIG. 9(c)

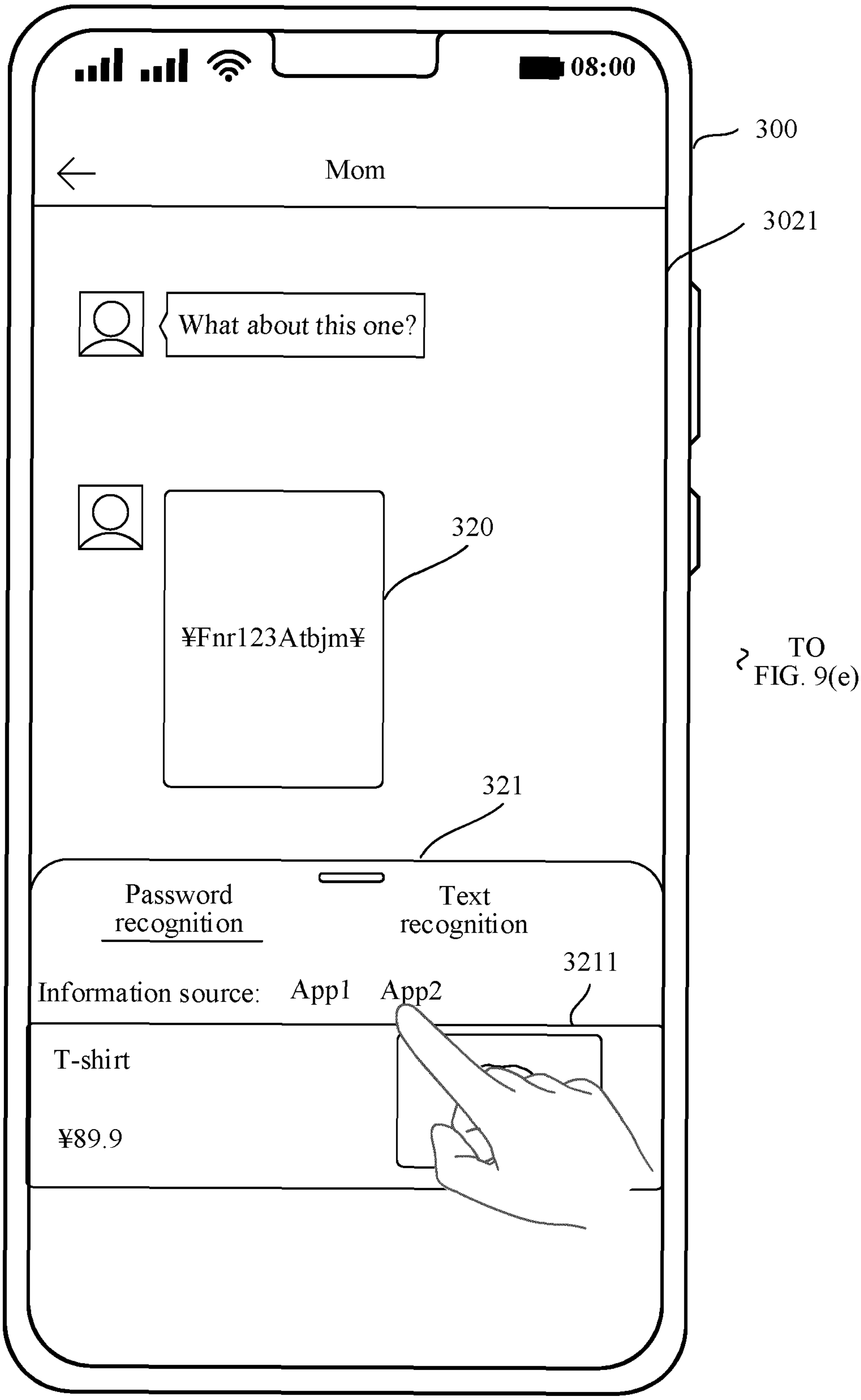


TO FIG. 9(e)

FIG. 9(d)

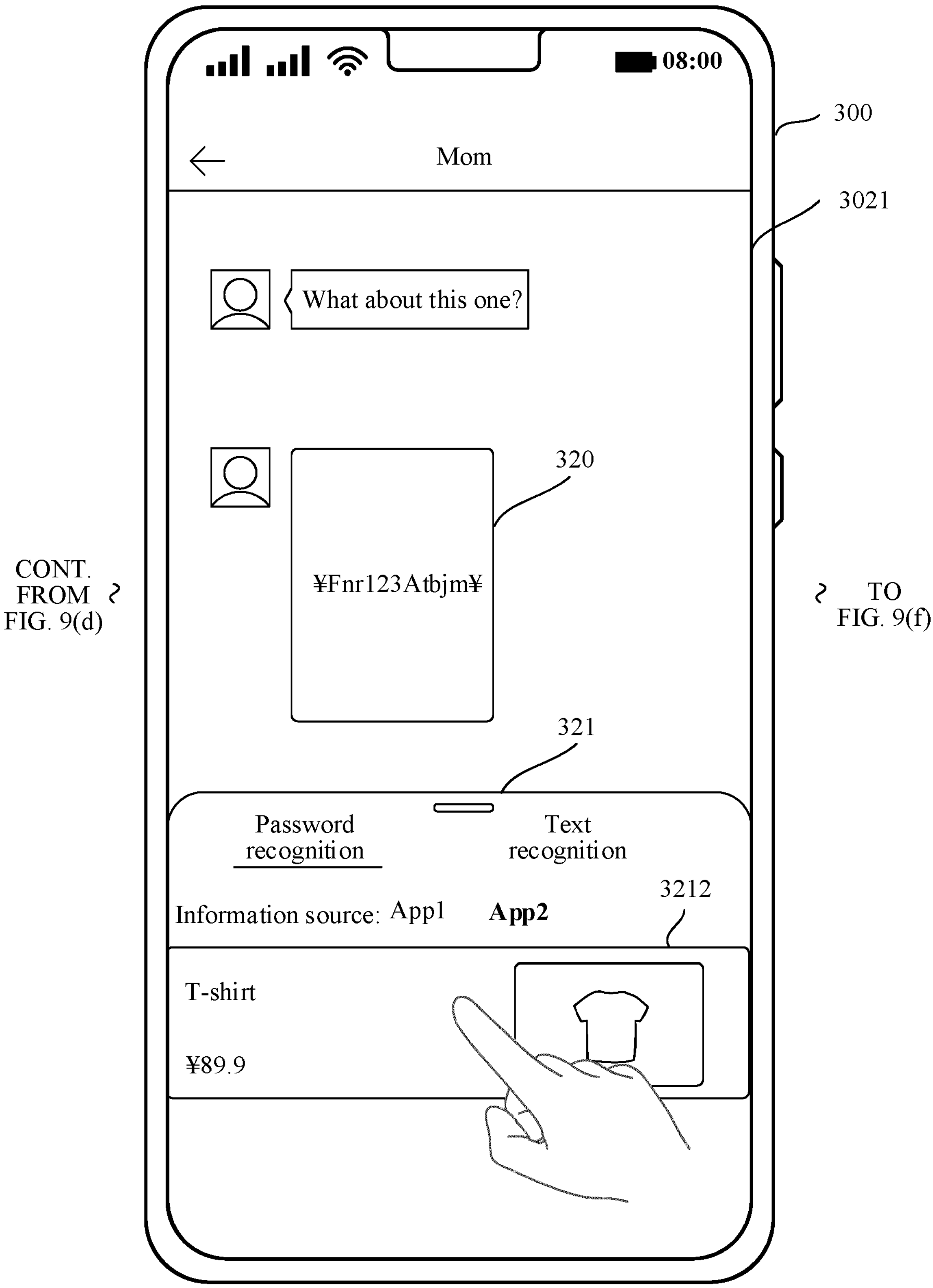
08:00
300
Mom
3021
What about this one?
320
CONT. FROM FIG. 9(d)
¥Fnr123Atbjm¥
TO FIG. 9(f)
321
Password recognition
Text recognition
3212
Information source: App1 App2
T-shirt
¥89.9

FIG. 9(e)

CONT. FROM FIG. 9(e)

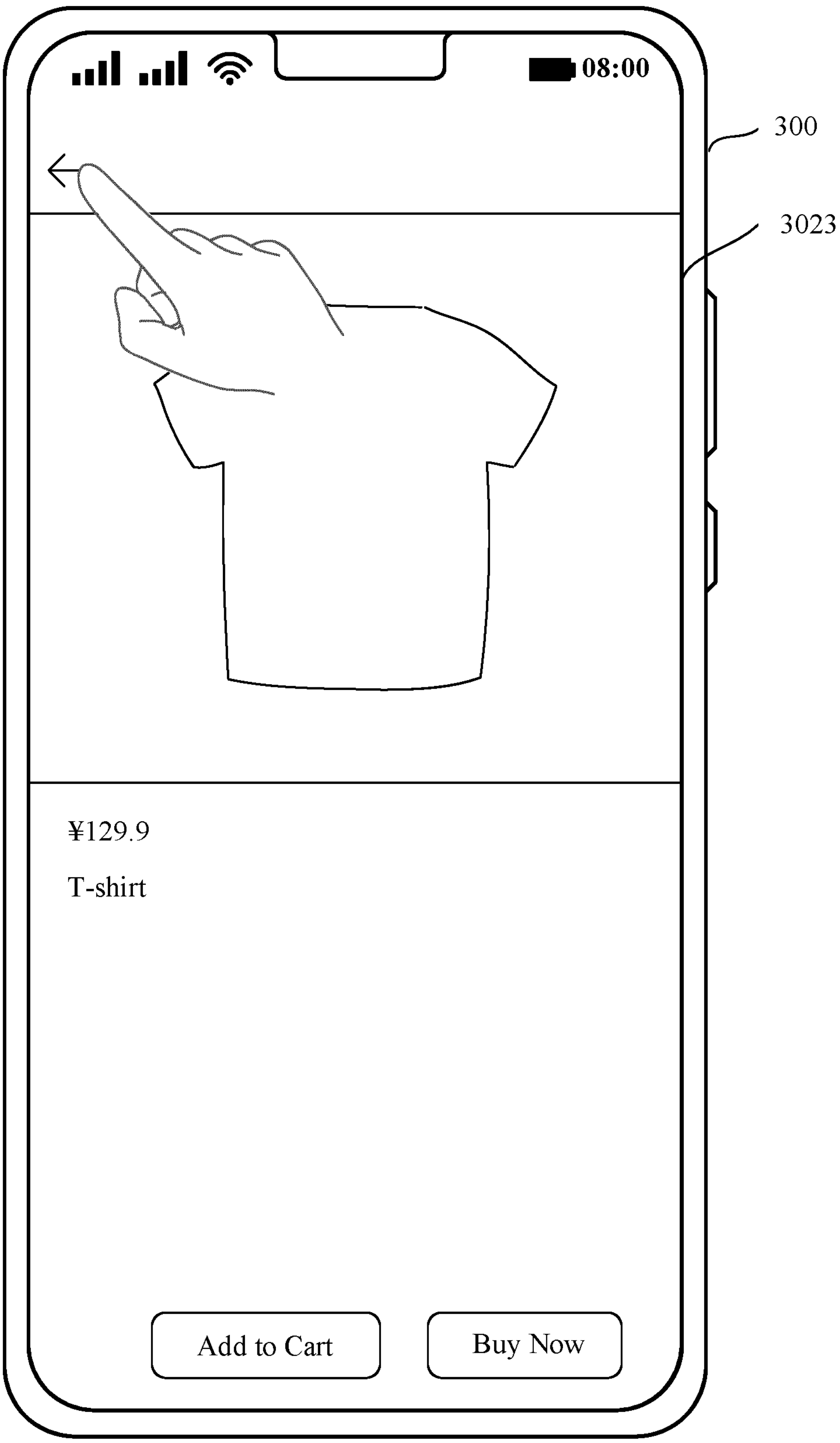


FIG. 9(f)

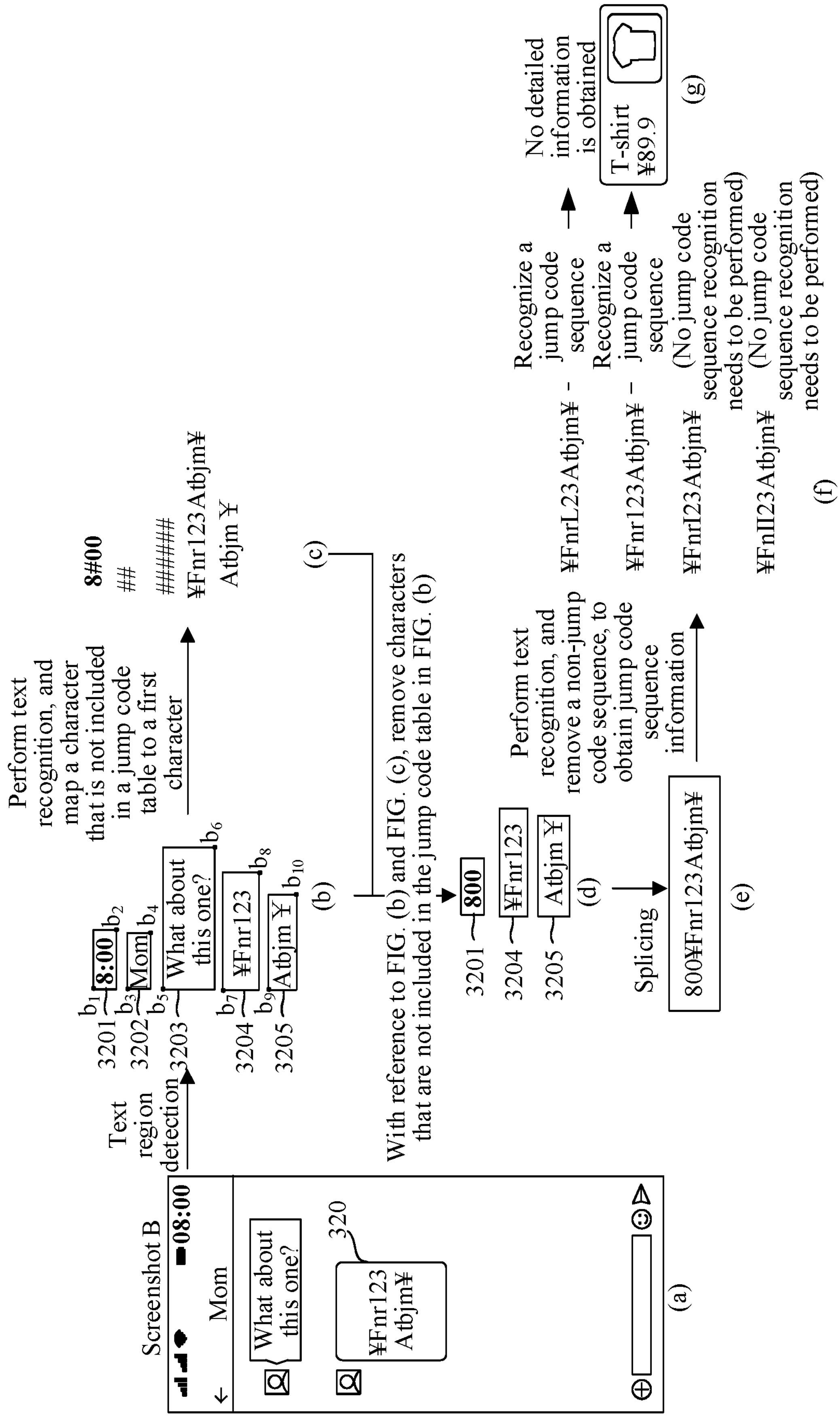

Screenshot B
08:00
Mom
What about this one?
320
¥Fnr123 Atbjm¥
(a)
Text region detection
3201
3202
3203
3204
3205
b1
b2
b3
b4
b5
b6
b7
b8
b9
b10
8:00
Mom
What about this one?
¥Fnr123
Atbjm ¥
(b)
Perform text recognition, and map a character that is not included in a jump code table to a first character
8#00
##
######
¥Fnr123Atbjm¥
Atbjm ¥
(c)
With reference to FIG. (b) and FIG. (c), remove characters that are not included in the jump code table in FIG. (b)
800
¥Fnr123
Atbjm ¥
(d)
Splicing
800¥Fnr123Atbjm¥
(e)
Perform text recognition, and remove a non-jump code sequence, to obtain jump code sequence information
¥FnrL23Atbjm¥
¥Fnr123Atbjm¥
¥FnrI23Atbjm¥
¥FnII23Atbjm¥
(f)
Recognize a jump code sequence
Recognize a jump code sequence
(No jump code sequence recognition needs to be performed)
(No jump code sequence recognition needs to be performed)
No detailed information is obtained
T-shirt ¥89.9
(g)


FIG. 10

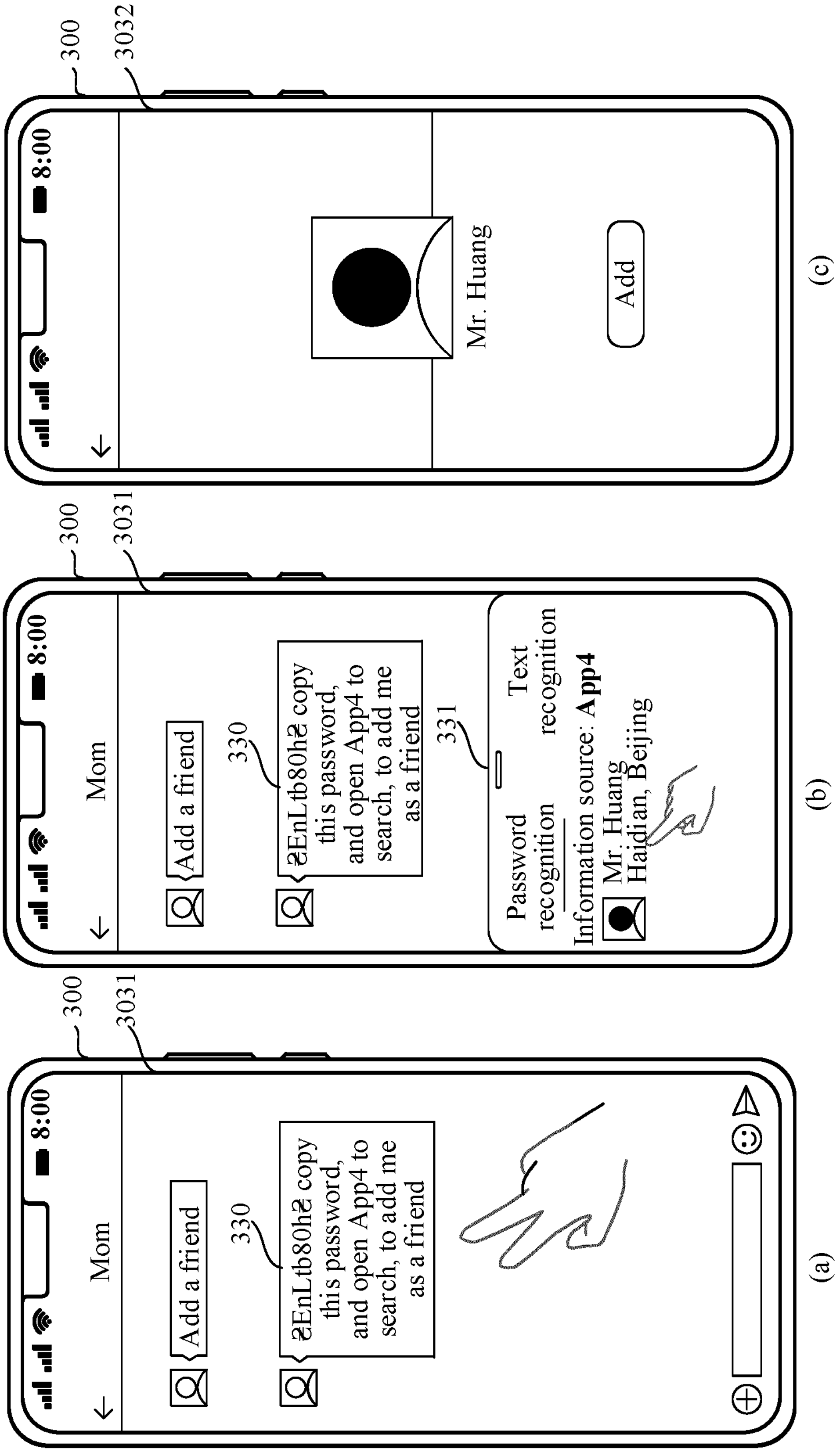
300
3031
8:00
Mom
Add a friend
330
ƺEnLtb80hƺ copy this password, and open App4 to search, to add me as a friend
(a)
300
3031
8:00
Mom
Add a friend
330
ƺEnLtb80hƺ copy this password, and open App4 to search, to add me as a friend
331
Password recognition
Text recognition
Information source: **App4**
Mr. Huang
Haidian, Beijing
(b)
300
3032
8:00
Mr. Huang
Add
(c)

FIG. 11

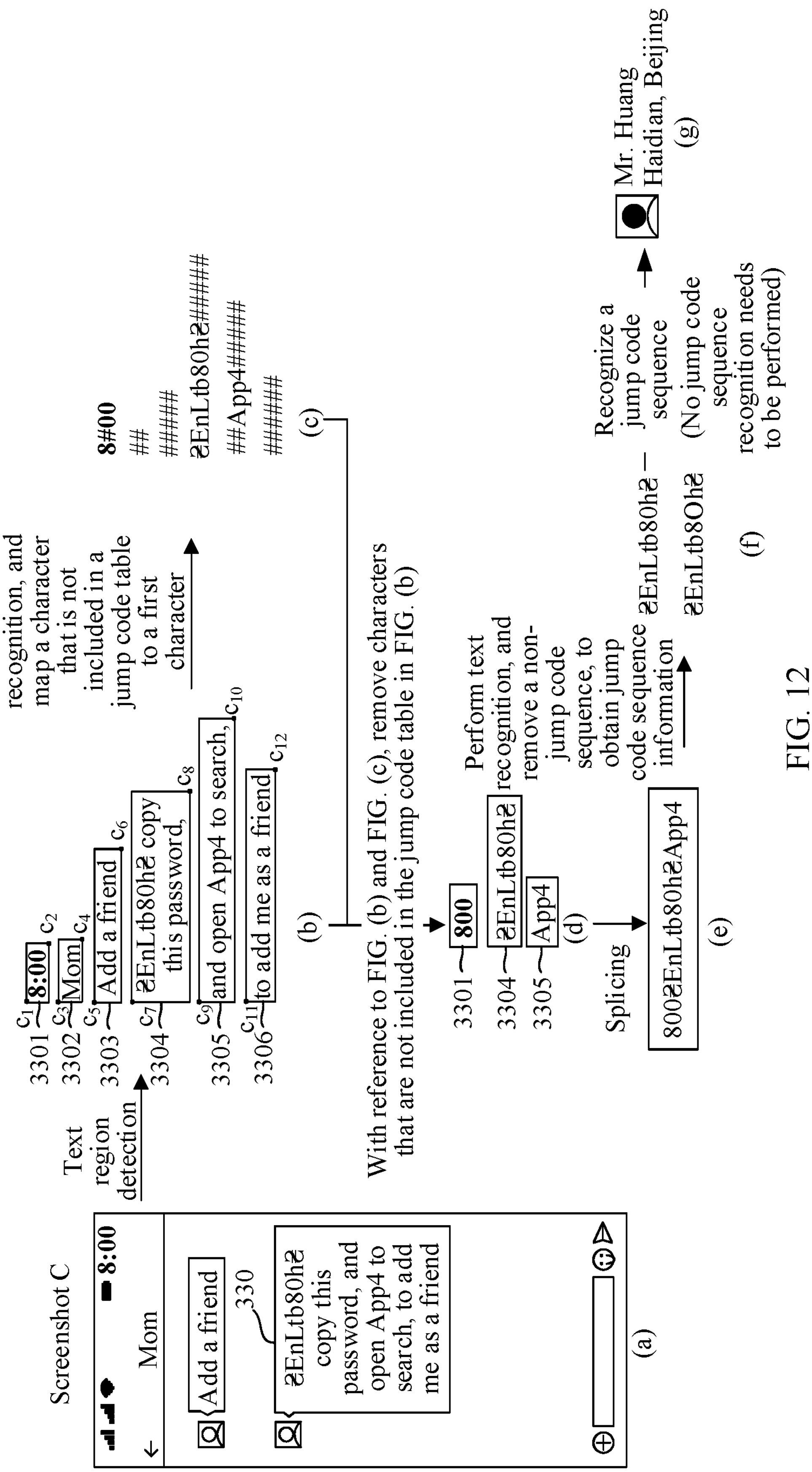

Screenshot C
8:00
Mom
Add a friend
330
ƋEnLtb80hƋ copy this password, and open App4 to search, to add me as a friend
(a)
Text region detection
3301 c1 8:00 c2
3302 c3 Mom c4
3303 c5 Add a friend c6
3304 c7 ƋEnLtb80hƋ copy this password, c8
3305 c9 and open App4 to search, c10
3306 c11 to add me as a friend c12
(b)
Perform text recognition, and map a character that is not included in a jump code table to a first character
8#00
##
#####
ƋEnLtb80hƋ#####
##App4#####
######
(c)
With reference to FIG. (b) and FIG. (c), remove characters that are not included in the jump code table in FIG. (b)
3301 800
3304 ƋEnLtb80hƋ
3305 App4
(d)
Splicing
800ƋEnLtb80hƋApp4
(e)
Perform text recognition, and remove a non-jump code sequence, to obtain jump code sequence information
ƋEnLtb80hƋ
ƋEnLtb8OhƋ
(f)
Recognize a jump code sequence
(No jump code sequence recognition needs to be performed)
Mr. Huang
Haidian, Beijing
(g)


FIG. 12

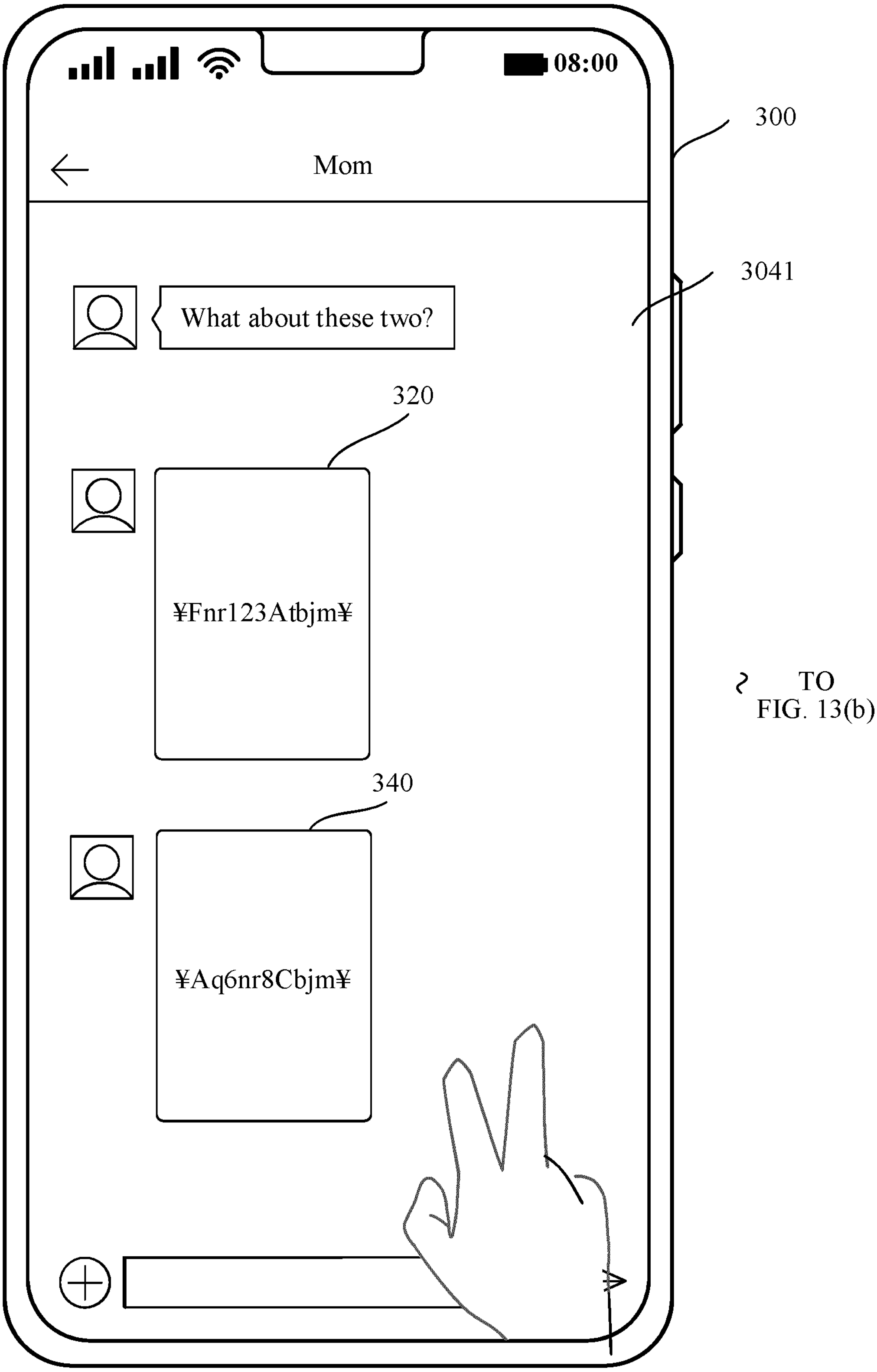
08:00
300
Mom
3041
What about these two?
320
¥Fnr123Atbjm¥
TO
FIG. 13(b)
340
¥Aq6nr8Cbjm¥

FIG. 13(a)

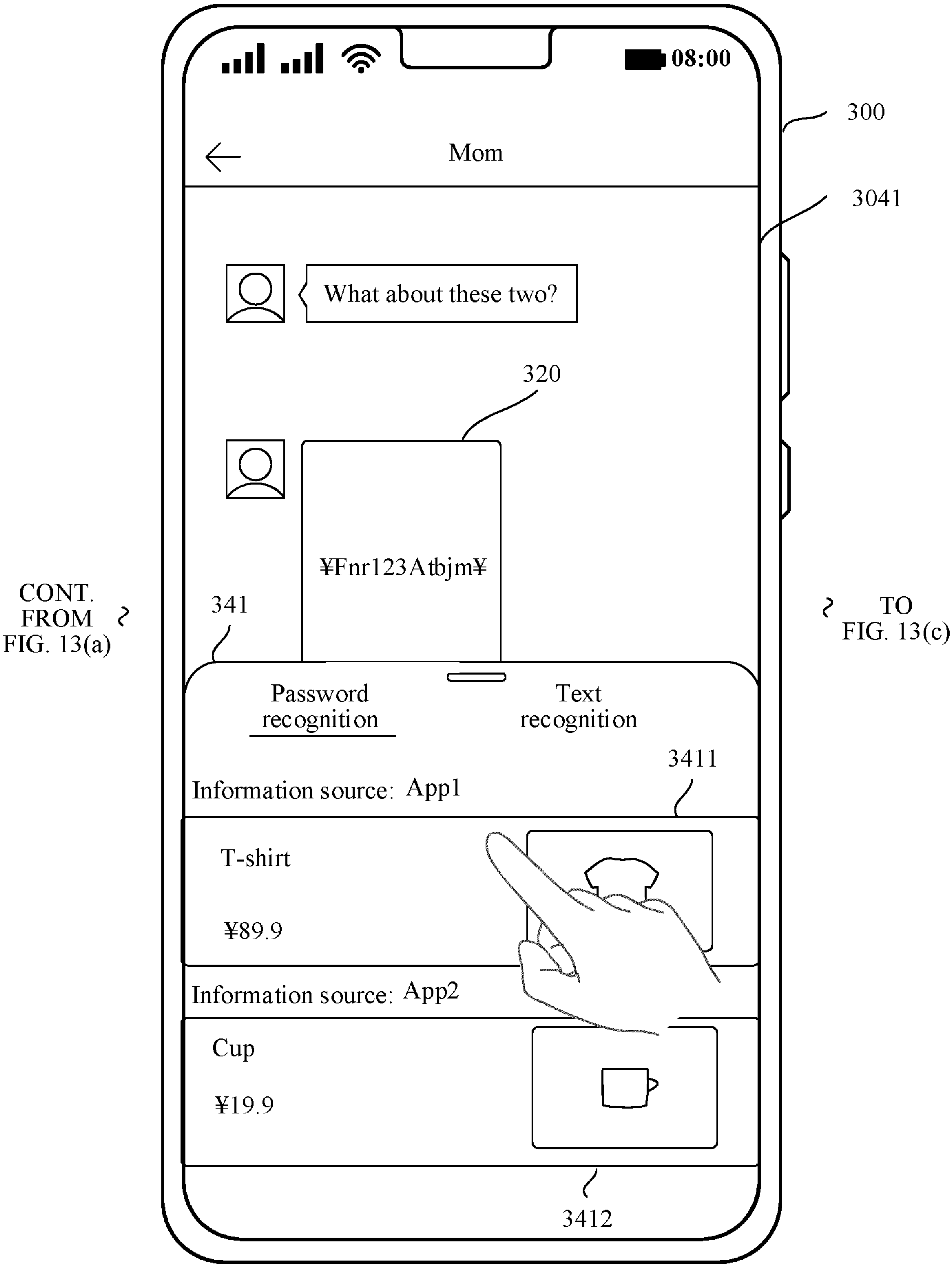
08:00
Mom
What about these two?
320
¥Fnr123Atbjm¥
341
Password recognition
Text recognition
3411
Information source: App1
T-shirt
¥89.9
Information source: App2
Cup
¥19.9
3412
300
3041
CONT. FROM FIG. 13(a)
TO FIG. 13(c)

FIG. 13(b)

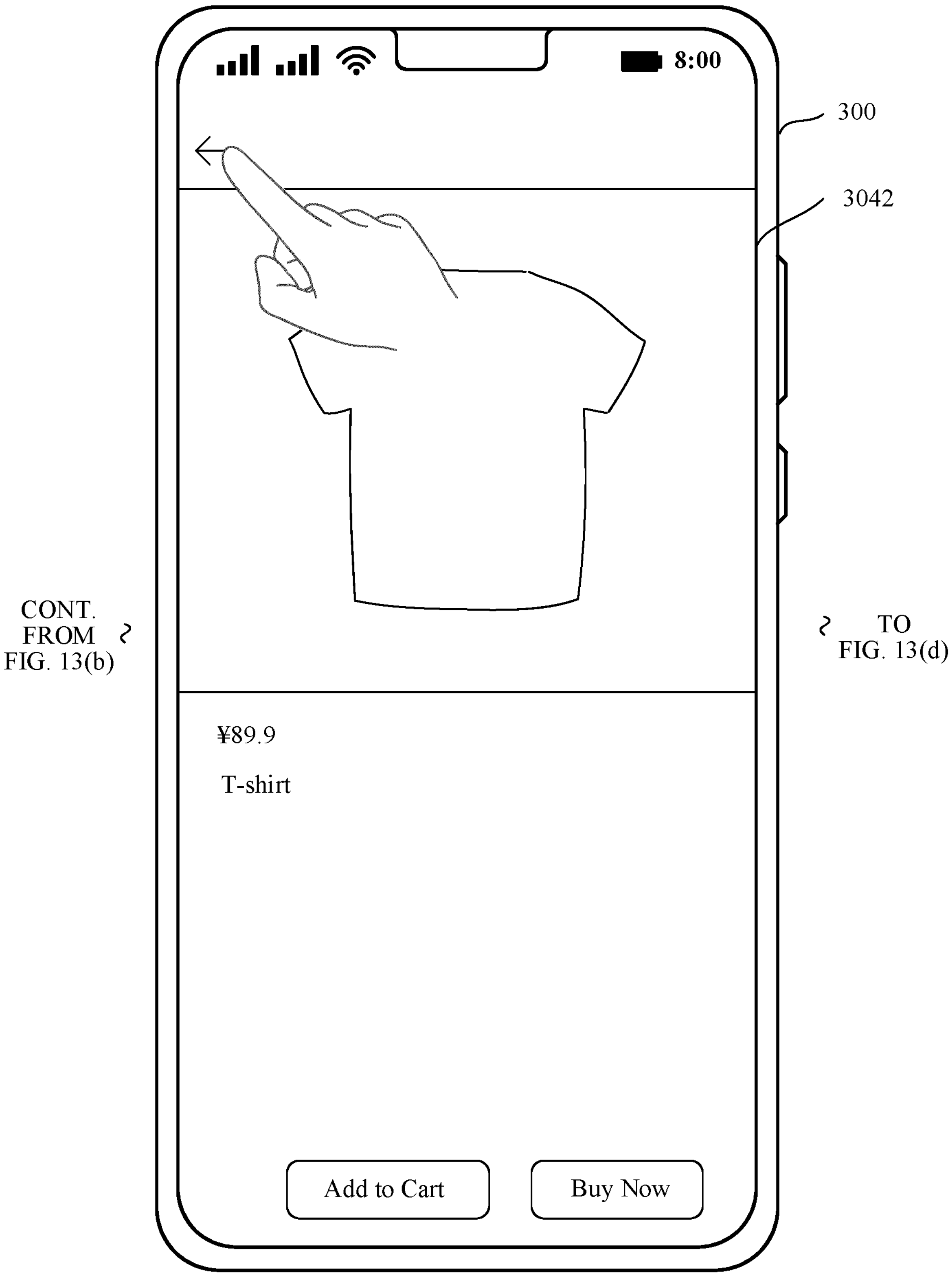
8:00
300
3042
¥89.9
T-shirt
Add to Cart
Buy Now
CONT.
FROM
FIG. 13(b)
TO
FIG. 13(d)

FIG. 13(c)

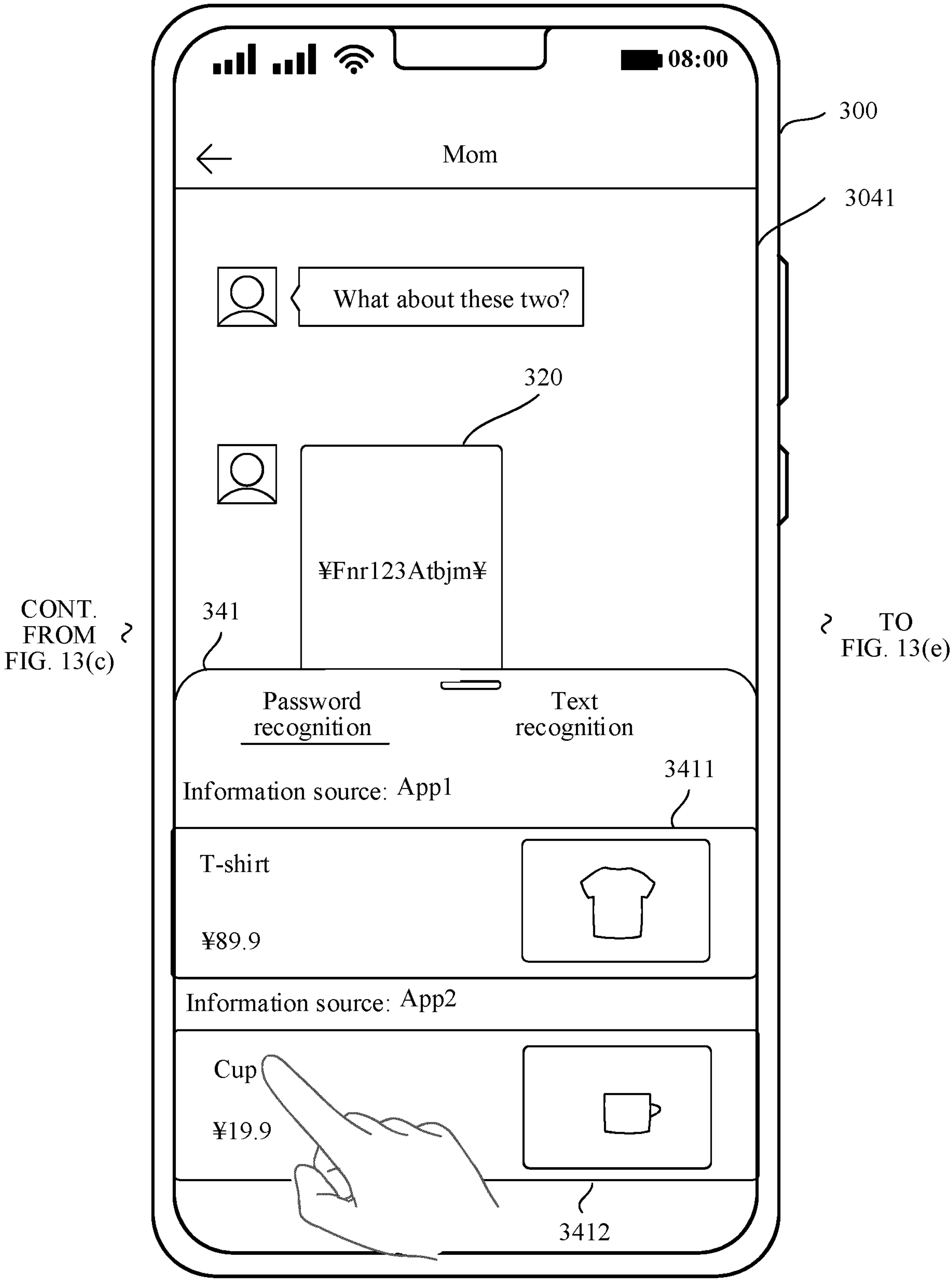
08:00
300
3041
Mom
What about these two?
320
¥Fnr123Atbjm¥
CONT. FROM FIG. 13(c)
341
TO FIG. 13(e)
Password recognition
Text recognition
3411
Information source: App1
T-shirt
¥89.9
Information source: App2
Cup
¥19.9
3412

FIG. 13(d)

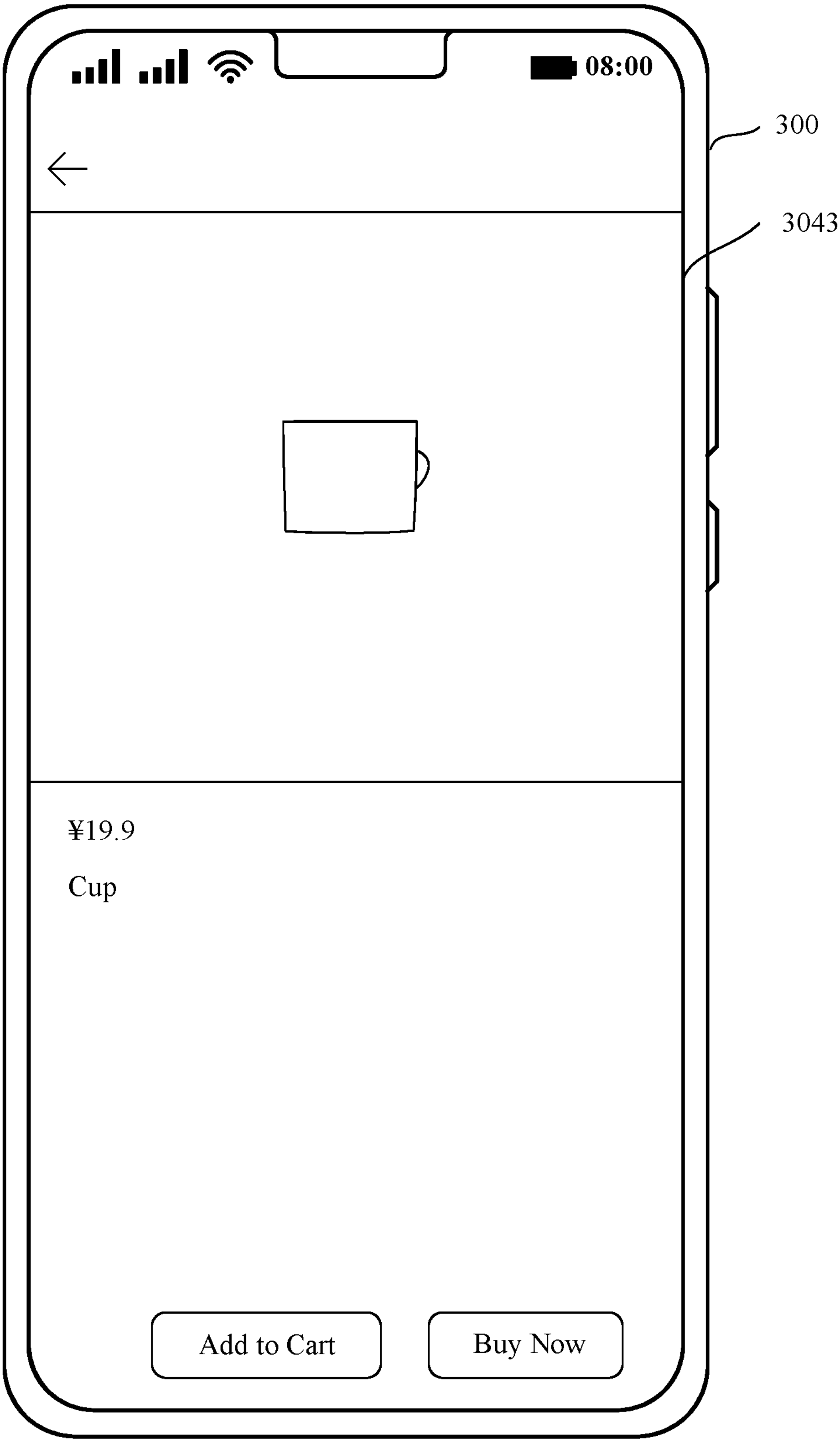


CONT. FROM FIG. 13(d)

FIG. 13(e)

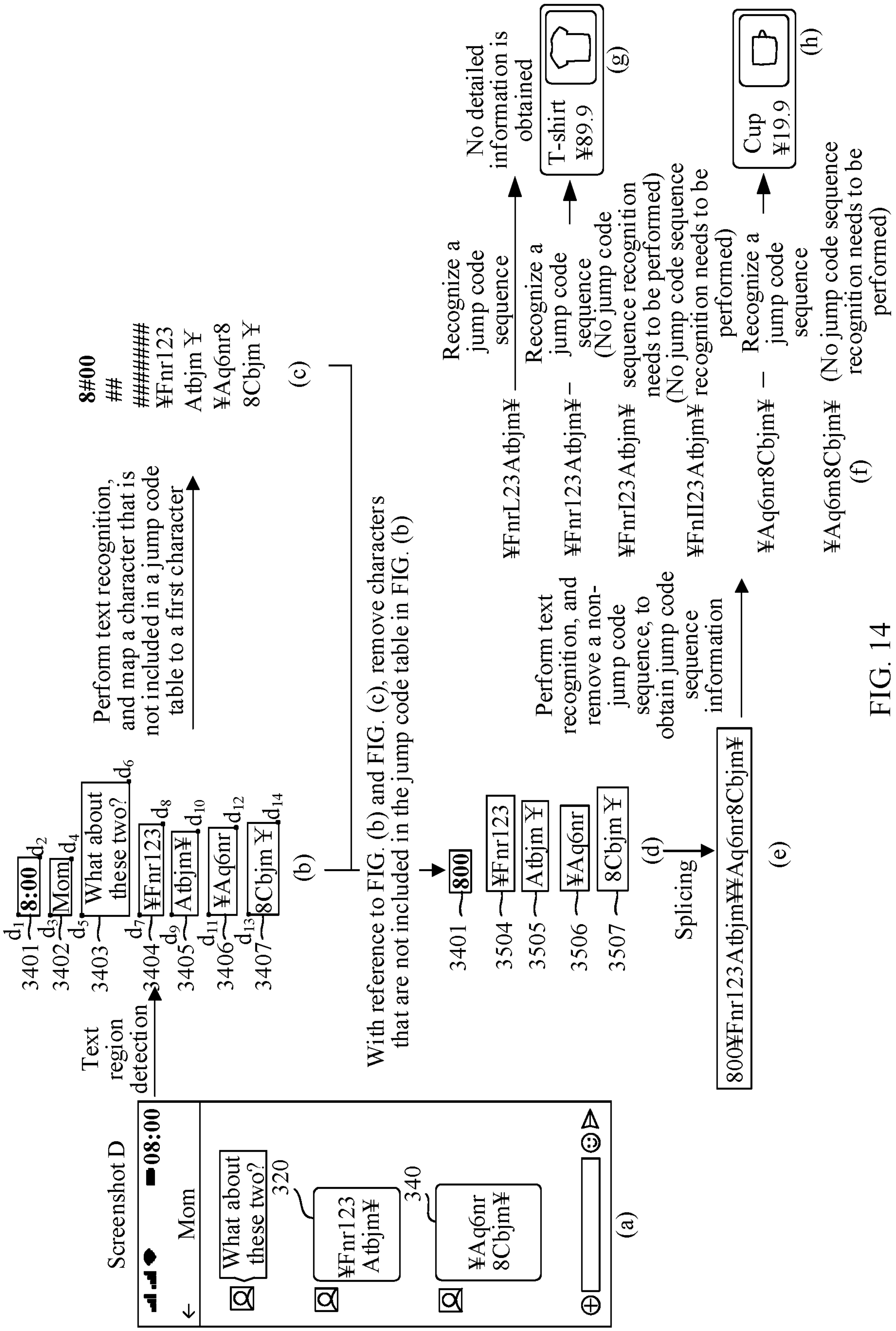
Screenshot D
08:00
Mom
What about these two?
320
¥Fnr123 Atbjm¥
340
¥Aq6nr 8Cbjm¥
(a)
Text region detection
3401 d1 8:00 d2
3402 d3 Mom d4
3403 d5 What about these two? d6
3404 d7 ¥Fnr123 d8
3405 d9 Atbjm¥ d10
3406 d11 ¥Aq6nr d12
3407 d13 8Cbjm ¥ d14
(b)
Perform text recognition, and map a character that is not included in a jump code table to a first character
8#00
##
#######
¥Fnr123
Atbjm ¥
¥Aq6nr8
8Cbjm ¥
(c)
With reference to FIG. (b) and FIG. (c), remove characters that are not included in the jump code table in FIG. (b)
3401 800
3504 ¥Fnr123
3505 Atbjm ¥
3506 ¥Aq6nr
3507 8Cbjm ¥
(d)
Splicing
800¥Fnr123Atbjm¥¥Aq6nr8Cbjm¥
(e)
Perform text recognition, and remove a non-jump code sequence, to obtain jump code sequence information
¥FnrL23Atbjm¥
Recognize a jump code sequence
No detailed information is obtained
¥Fnr123Atbjm¥
Recognize a jump code sequence
T-shirt ¥89.9
(g)
¥FnrI23Atbjm¥
(No jump code sequence recognition needs to be performed)
¥FnII23Atbjm¥
(No jump code sequence recognition needs to be performed)
¥Aq6nr8Cbjm¥
Recognize a jump code sequence
Cup ¥19.9
(h)
¥Aq6m8Cbjm¥
(No jump code sequence recognition needs to be performed)
(f)

FIG. 14

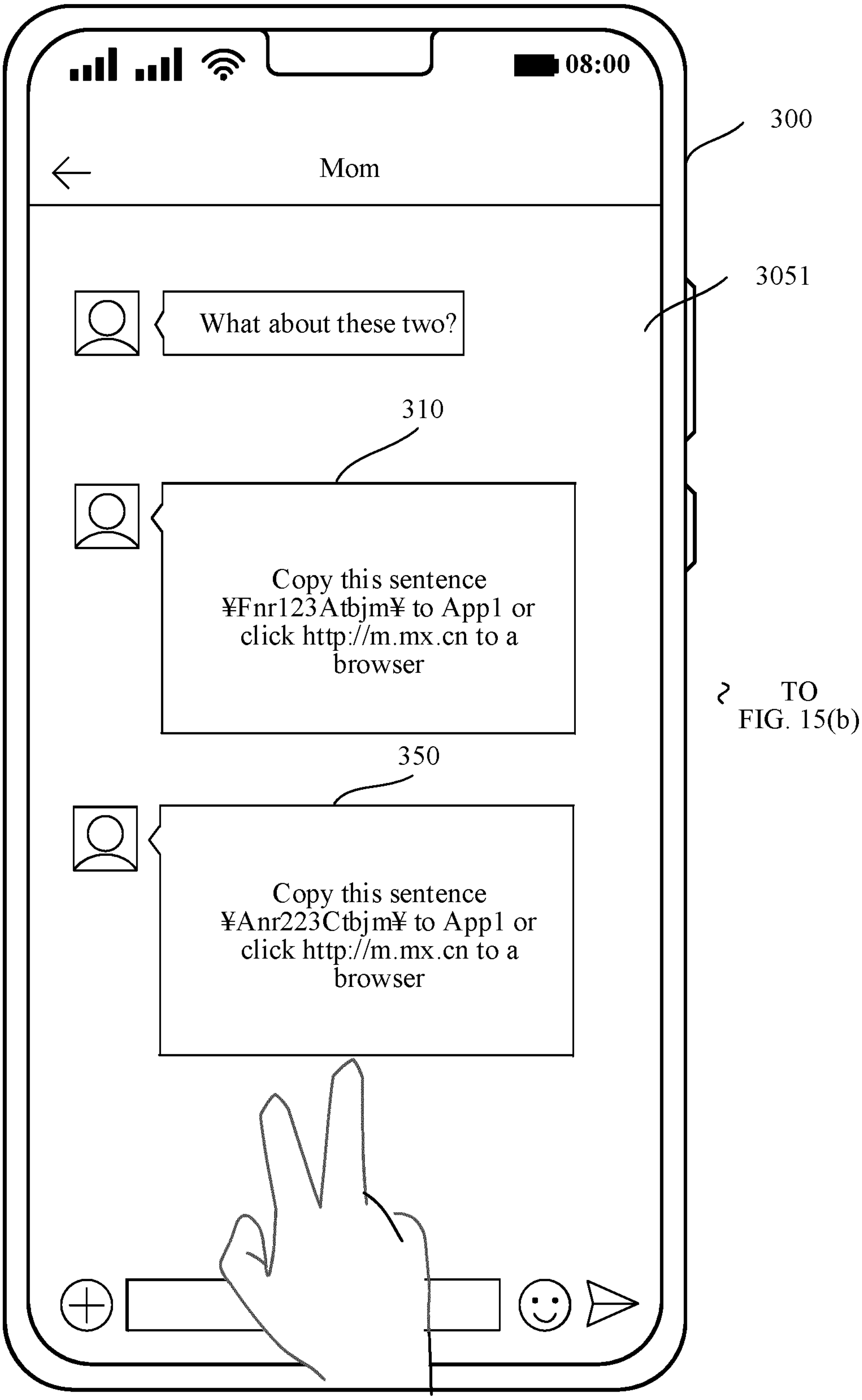
08:00
Mom
What about these two?
Copy this sentence ¥Fnr123Atbjm¥ to App1 or click http://m.mx.cn to a browser
Copy this sentence ¥Anr223Ctbjm¥ to App1 or click http://m.mx.cn to a browser
300
3051
310
350
TO FIG. 15(b)

FIG. 15(a)

CONT.
FROM
FIG. 15(a)

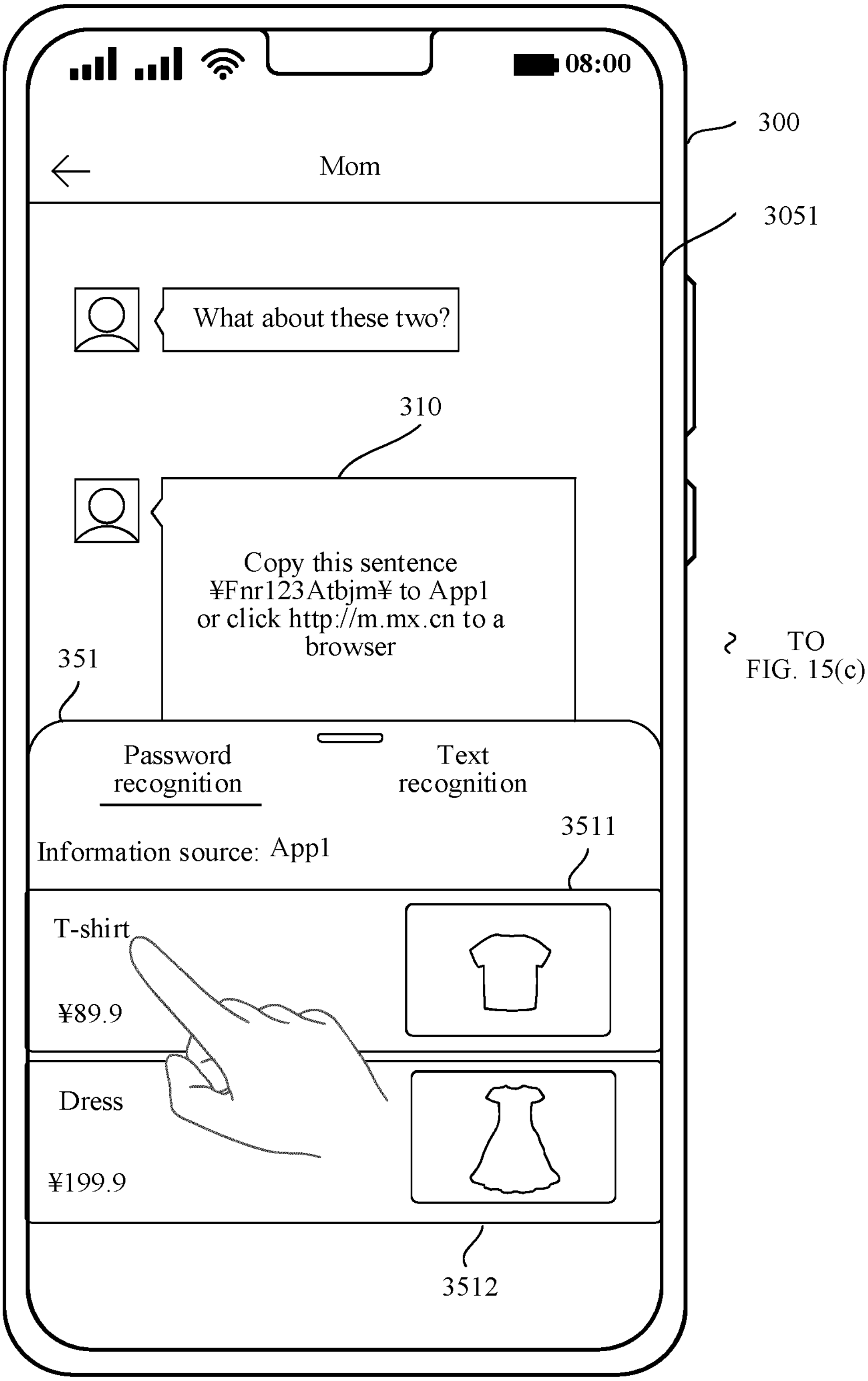


TO
FIG. 15(c)

FIG. 15(b)

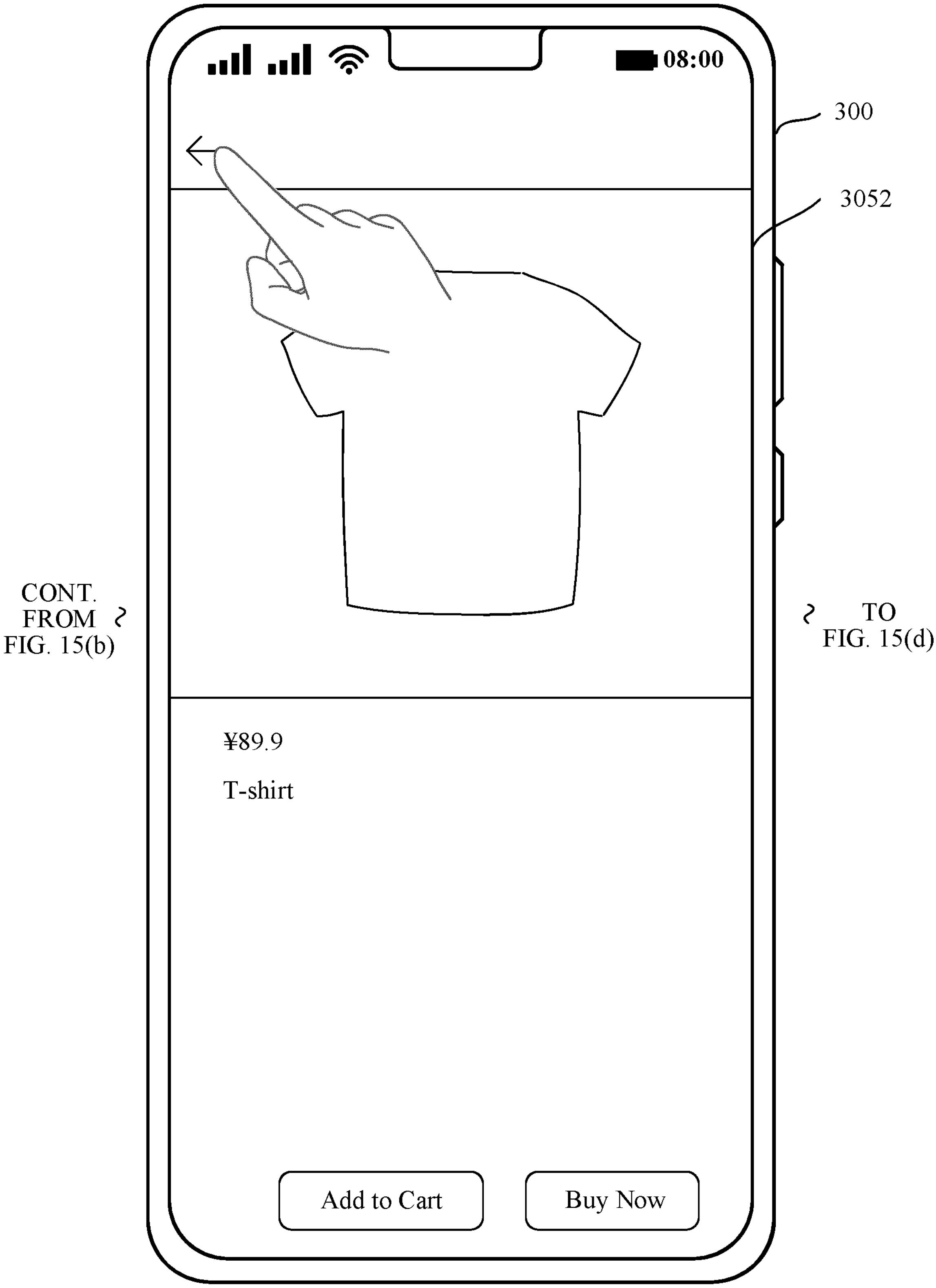
08:00
300
3052
CONT.
FROM
FIG. 15(b)
TO
FIG. 15(d)
¥89.9
T-shirt
Add to Cart
Buy Now

FIG. 15(c)

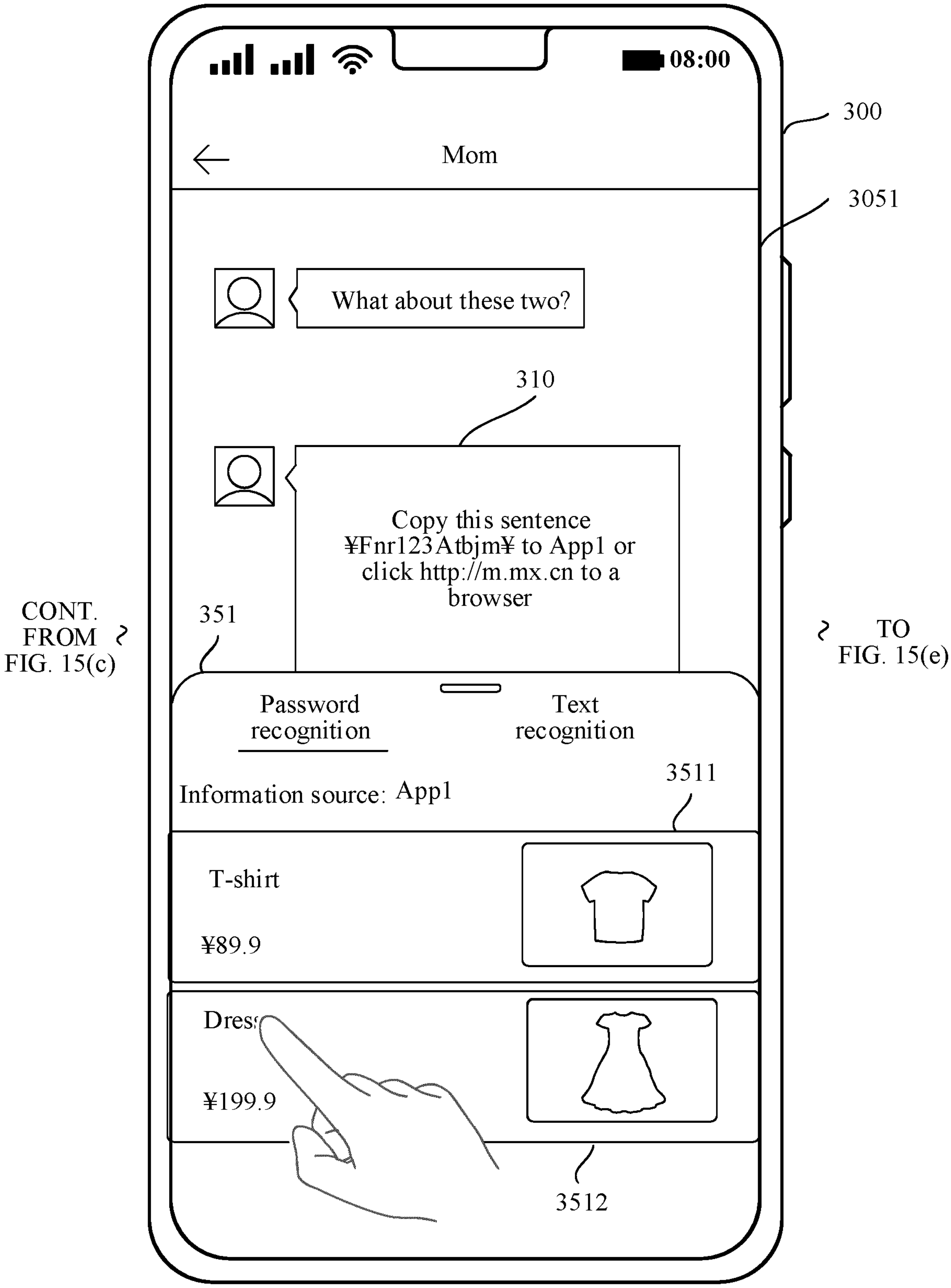
08:00
300
Mom
3051
What about these two?
310
Copy this sentence ¥Fnr123Atbjm¥ to App1 or click http://m.mx.cn to a browser
CONT. FROM FIG. 15(c)
351
TO FIG. 15(e)
Password recognition
Text recognition
3511
Information source: App1
T-shirt
¥89.9
Dress
¥199.9
3512

FIG. 15(d)

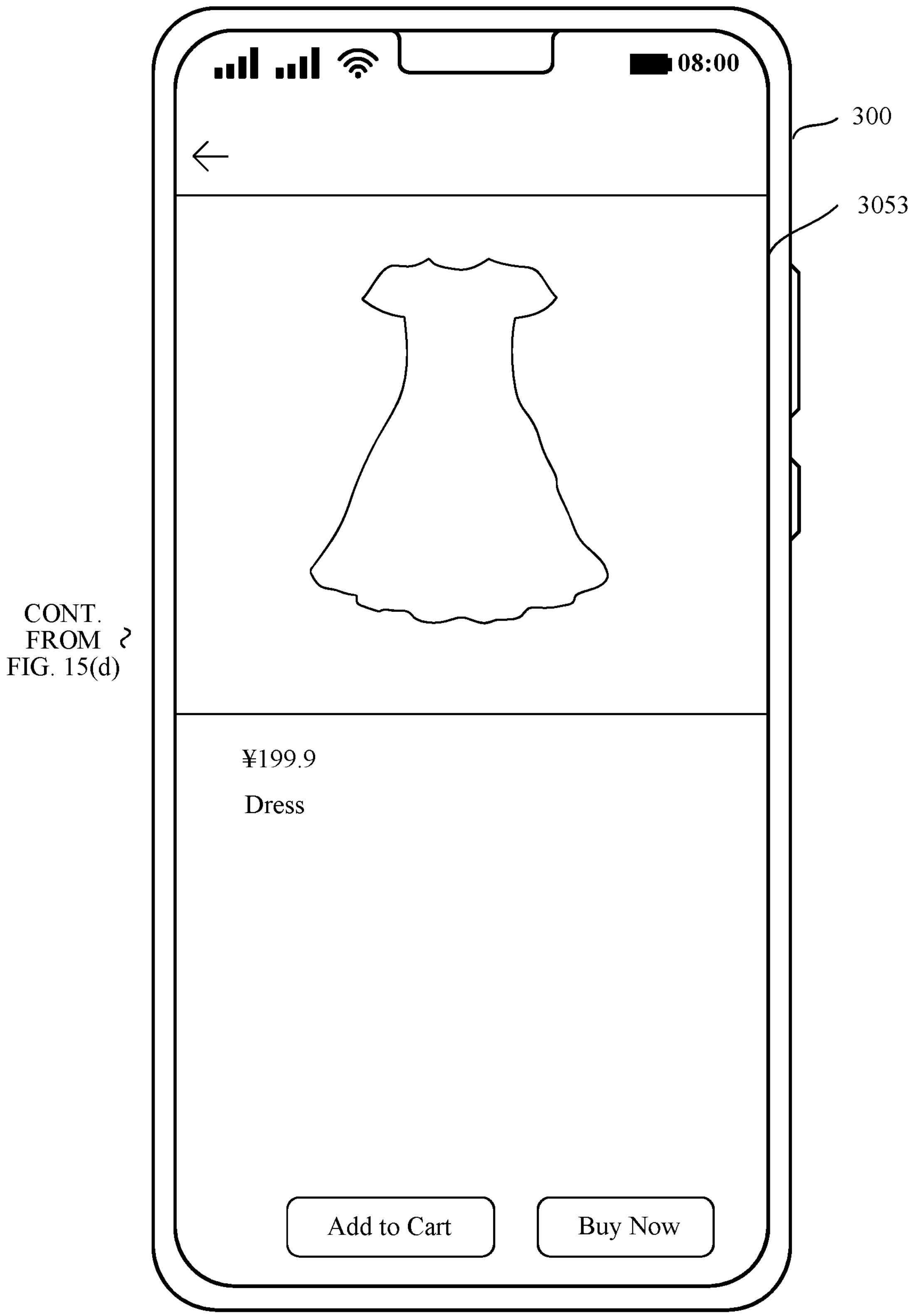


FIG. 15(e)

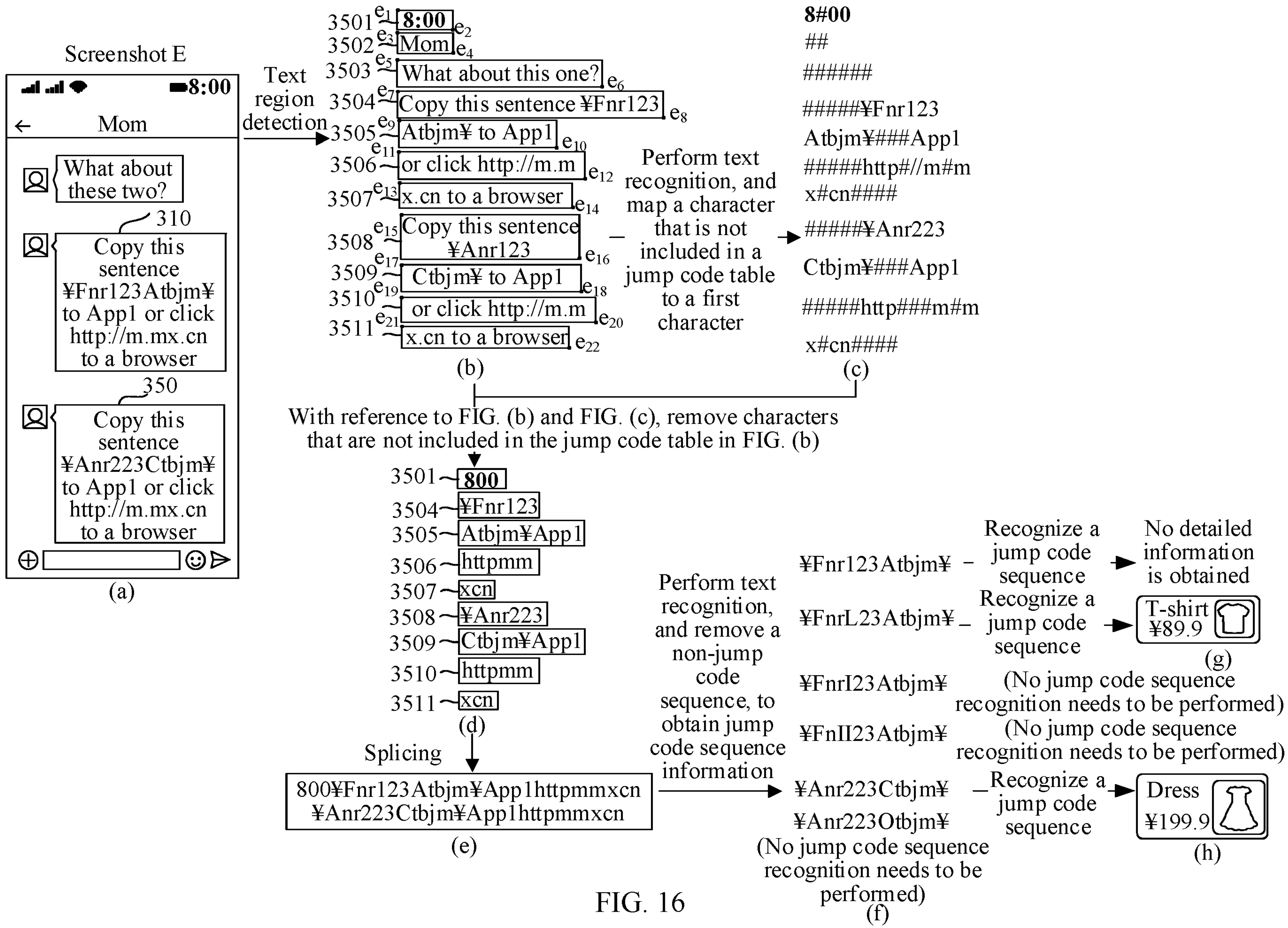
Screenshot E
8:00
Mom
What about these two?
310
Copy this sentence ¥Fnr123Atbjm¥ to App1 or click http://m.mx.cn to a browser
350
Copy this sentence ¥Anr223Ctbjm¥ to App1 or click http://m.mx.cn to a browser
(a)
Text region detection
3501 e1 8:00 e2
3502 e3 Mom e4
3503 e5 What about this one? e6
3504 e7 Copy this sentence ¥Fnr123 e8
3505 e9 Atbjm¥ to App1 e10
3506 e11 or click http://m.m e12
3507 e13 x.cn to a browser e14
3508 e15 Copy this sentence ¥Anr123 e16
3509 e17 Ctbjm¥ to App1 e18
3510 e19 or click http://m.m e20
3511 e21 x.cn to a browser e22
(b)
Perform text recognition, and map a character that is not included in a jump code table to a first character
8#00
##
######
#####¥Fnr123
Atbjm¥###App1
#####http#//m#m
x#cn####
#####¥Anr223
Ctbjm¥###App1
#####http###m#m
x#cn####
(c)
With reference to FIG. (b) and FIG. (c), remove characters that are not included in the jump code table in FIG. (b)
3501 800
3504 ¥Fnr123
3505 Atbjm¥App1
3506 httpmm
3507 xcn
3508 ¥Anr223
3509 Ctbjm¥App1
3510 httpmm
3511 xcn
(d)
Splicing
800¥Fnr123Atbjm¥App1httpmmxcn
¥Anr223Ctbjm¥App1httpmmxcn
(e)
Perform text recognition, and remove a non-jump code sequence, to obtain jump code sequence information
¥Fnr123Atbjm¥
¥FnrL23Atbjm¥
¥FnrI23Atbjm¥
¥FnII23Atbjm¥
¥Anr223Ctbjm¥
¥Anr223Otbjm¥
(No jump code sequence recognition needs to be performed)
(f)
Recognize a jump code sequence
No detailed information is obtained
Recognize a jump code sequence
T-shirt ¥89.9
(g)
(No jump code sequence recognition needs to be performed)
(No jump code sequence recognition needs to be performed)
Recognize a jump code sequence
Dress ¥199.9
(h)

FIG. 16

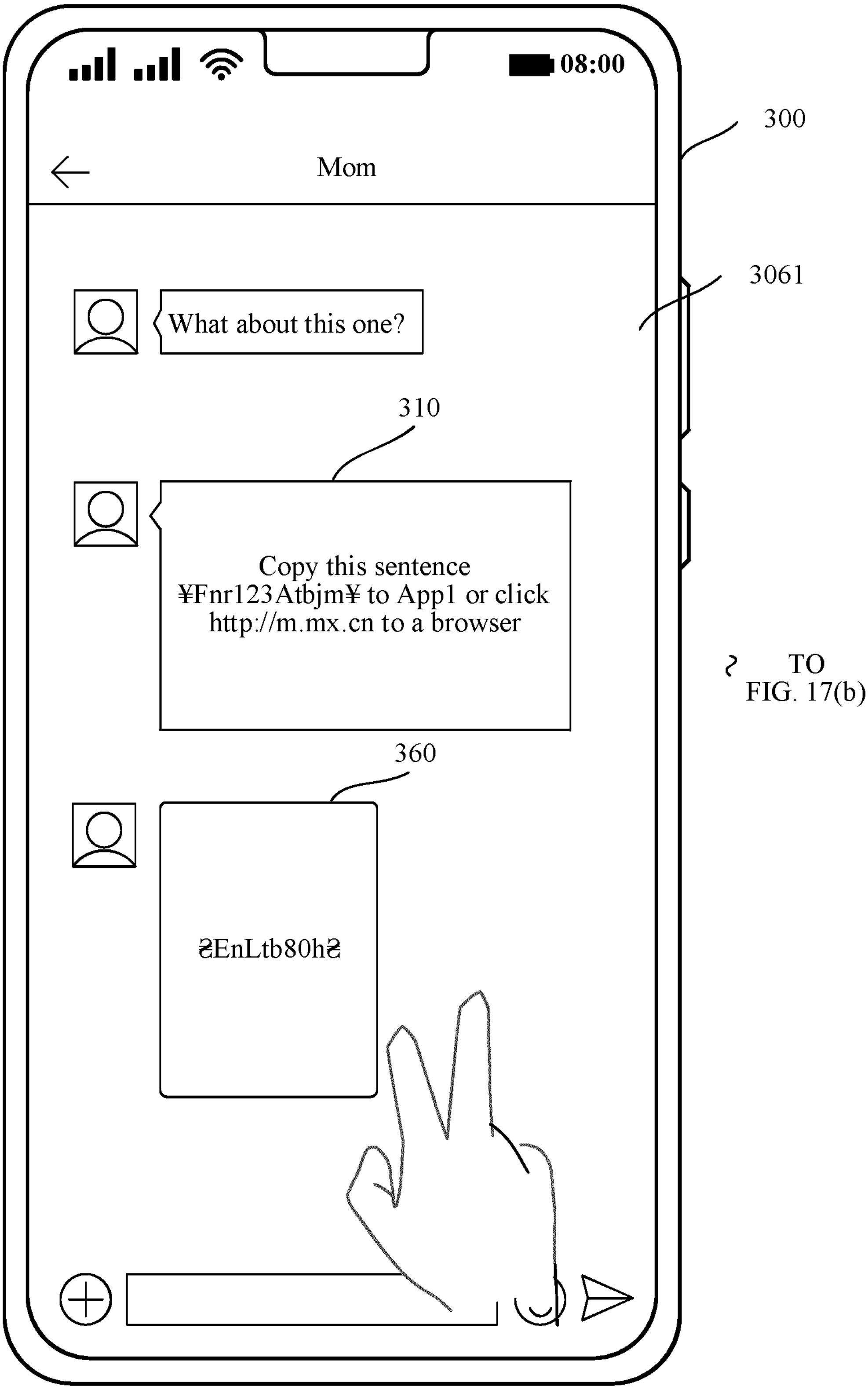
08:00
300
Mom
3061
What about this one?
310
Copy this sentence ¥Fnr123Atbjm¥ to App1 or click http://m.mx.cn to a browser
360
₴EnLtb80h₴
TO FIG. 17(b)

FIG. 17(a)

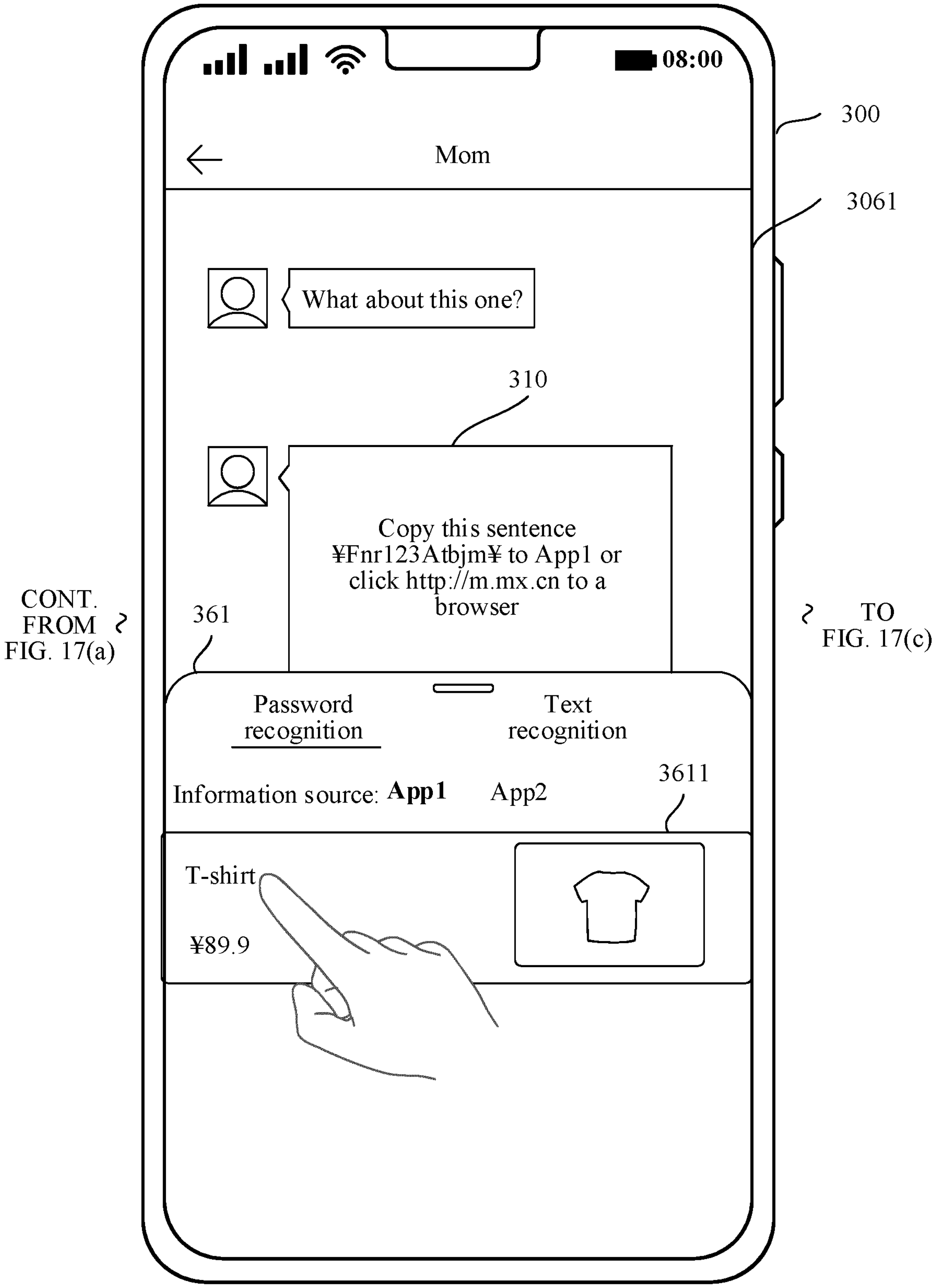

08:00
Mom
What about this one?
310
Copy this sentence ¥Fnr123Atbjm¥ to App1 or click http://m.mx.cn to a browser
361
Password recognition
Text recognition
Information source: **App1** App2
3611
T-shirt
¥89.9
300
3061
CONT. FROM FIG. 17(a)
TO FIG. 17(c)


FIG. 17(b)

CONT.
FROM
FIG. 17(b)

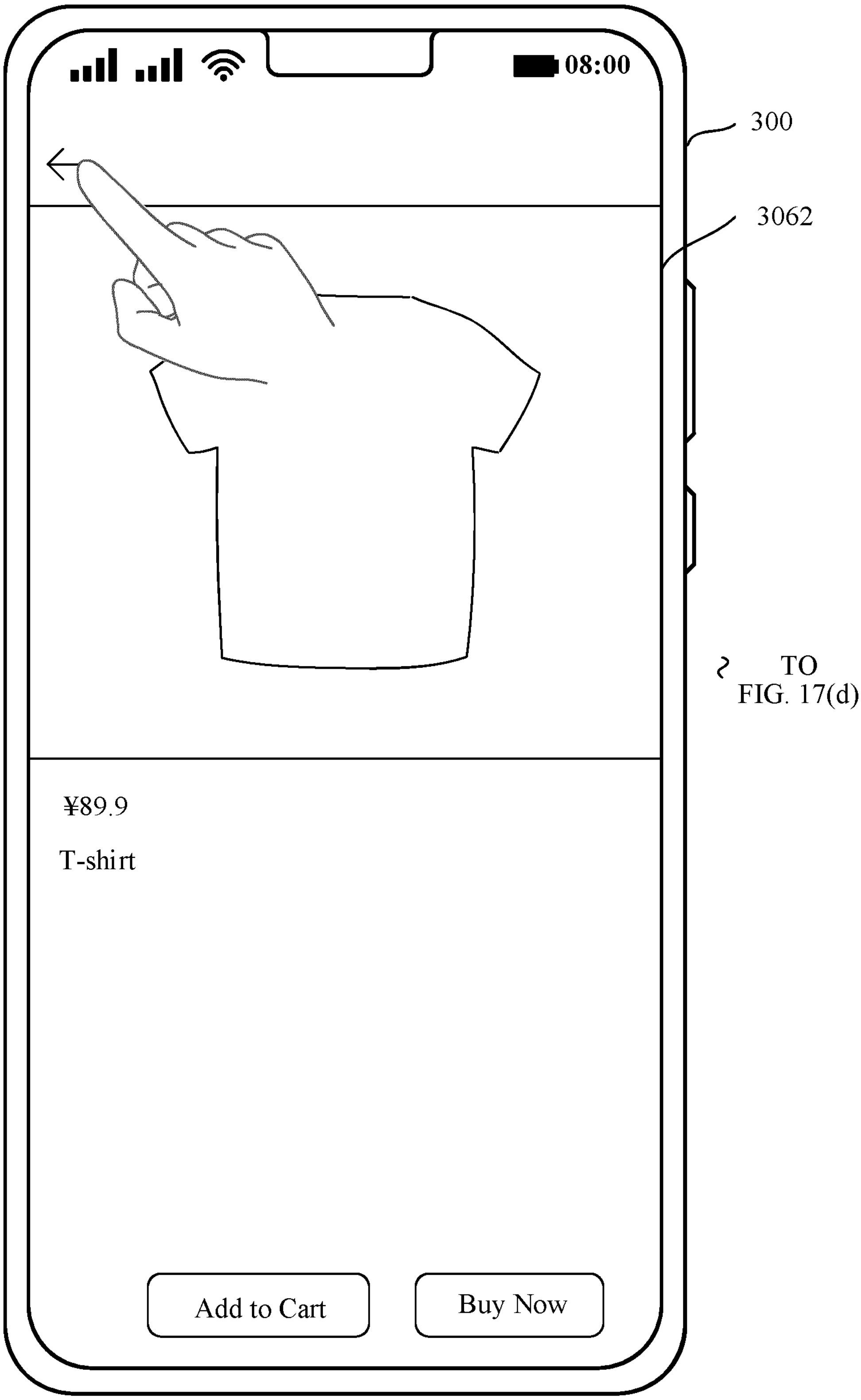


TO
FIG. 17(d)

FIG. 17(c)

CONT. FROM FIG. 17(c)

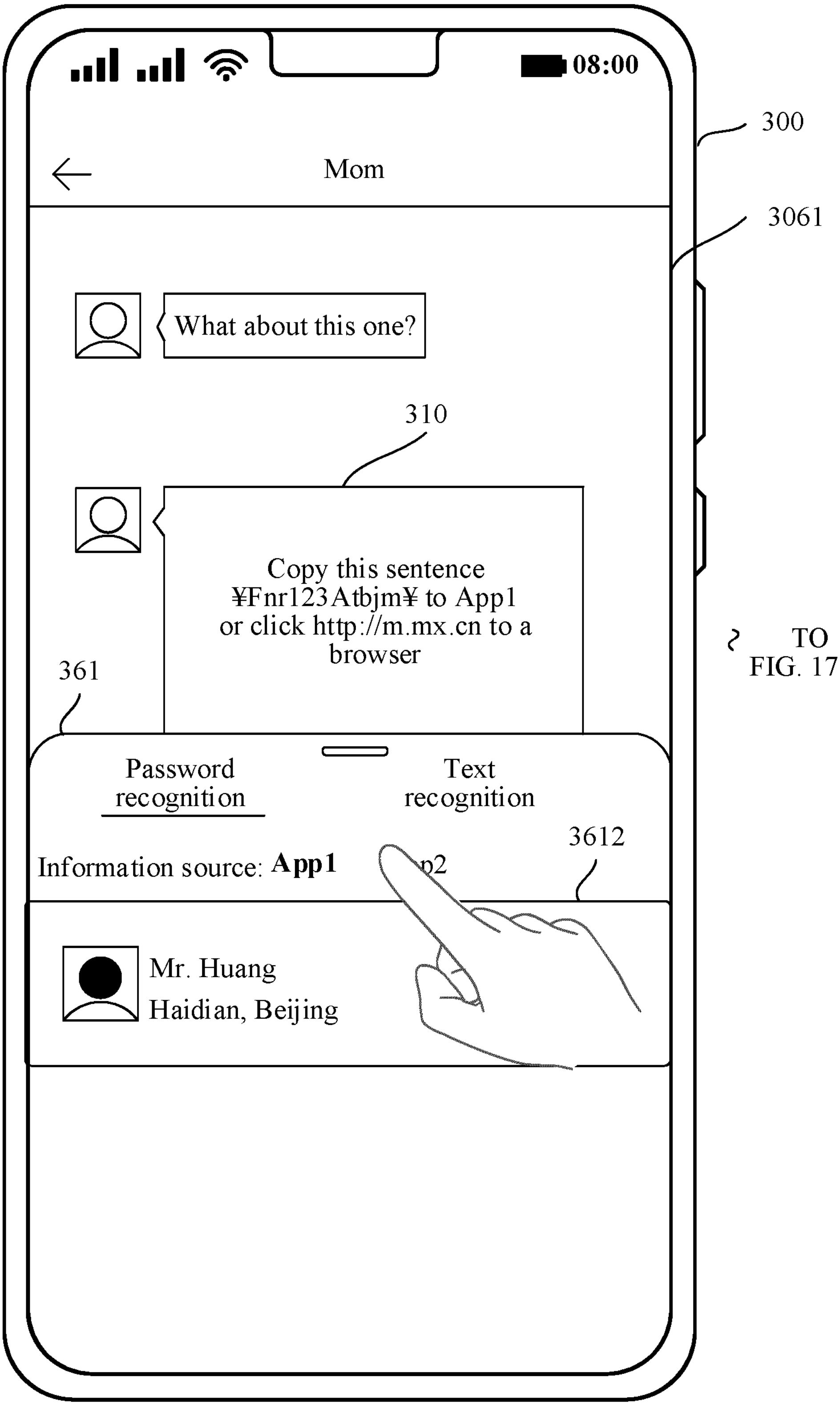


TO FIG. 17(e)

FIG. 17(d)

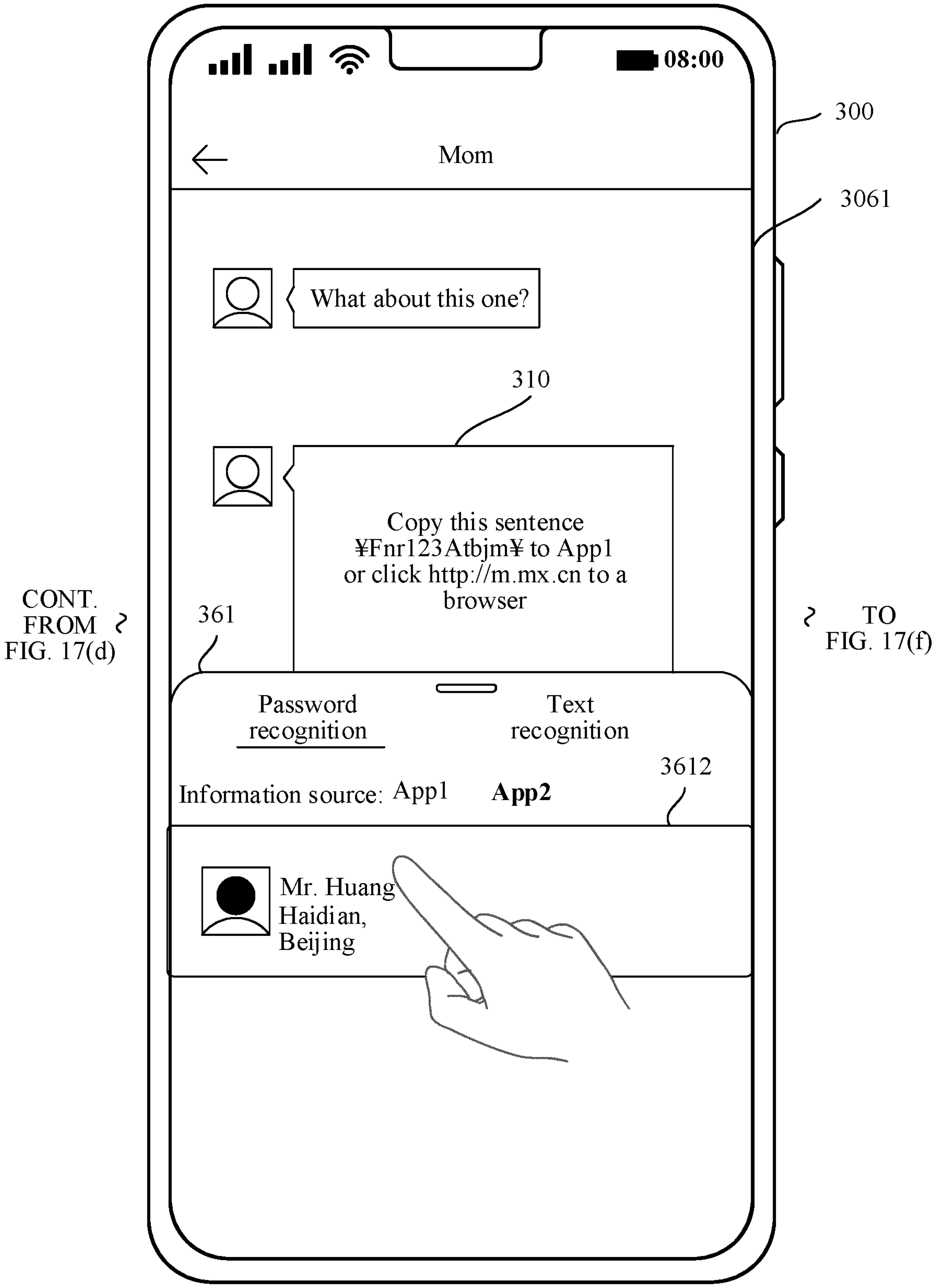
08:00
300
3061
Mom
What about this one?
310
Copy this sentence
¥Fnr123Atbjm¥ to App1
or click http://m.mx.cn to a
browser
CONT.
FROM
FIG. 17(d)
361
TO
FIG. 17(f)
Password
recognition
Text
recognition
3612
Information source: App1
App2
Mr. Huang
Haidian,
Beijing

FIG. 17(e)

CONT.
FROM
FIG. 17(e)

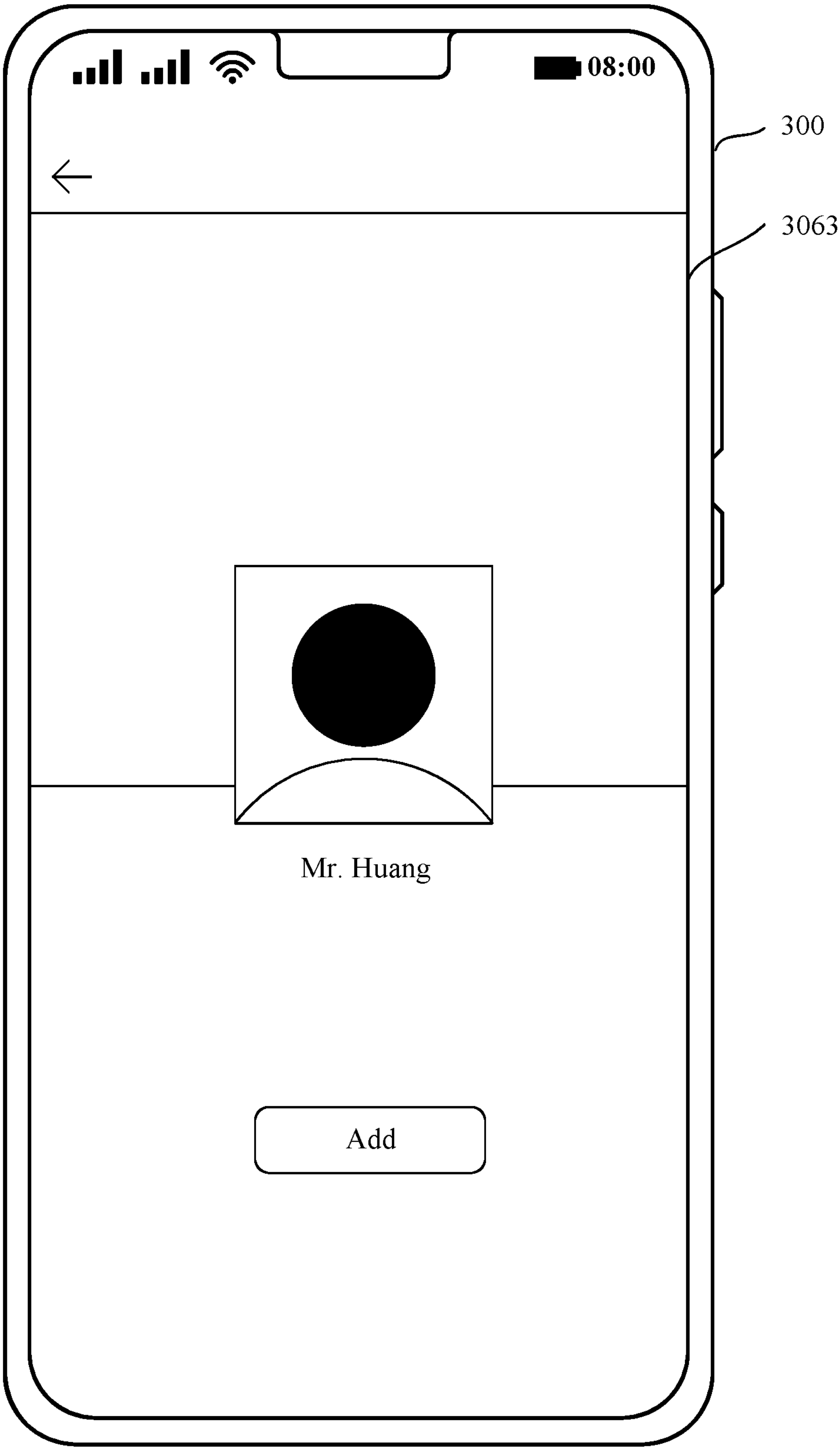


FIG. 17(f)

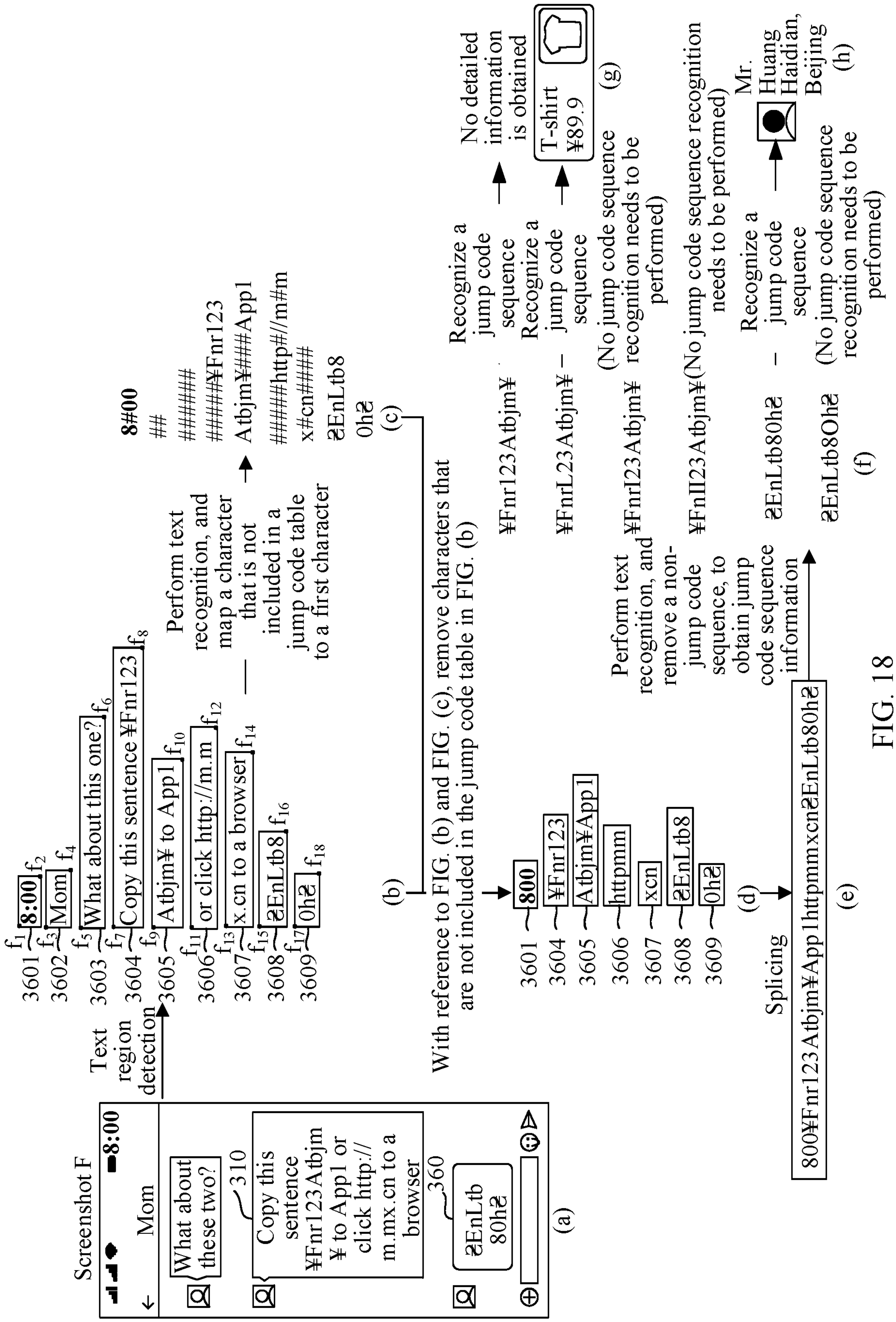
Screenshot F
8:00
Mom
What about these two?
310
Copy this sentence ¥Fnr123Atbjm ¥ to App1 or click http:// m.mx.cn to a browser
360
₴EnLtb 80h₴
(a)
Text region detection
3601 f1 8:00 f2
3602 f3 Mom f4
3603 f5 What about this one? f6
3604 f7 Copy this sentence ¥Fnr123 f8
3605 f9 Atbjm¥ to App1 f10
3606 f11 or click http://m.m f12
3607 f13 x.cn to a browser f14
3608 f15 ₴EnLtb8 f16
3609 f17 0h₴ f18
(b)
Perform text recognition, and map a character that is not included in a jump code table to a first character
8#00
##
######
#####¥Fnr123
Atbjm¥###App1
#####http#//m#m
x#cn####
₴EnLtb8
0h₴
(c)
With reference to FIG. (b) and FIG. (c), remove characters that are not included in the jump code table in FIG. (b)
3601 800
3604 ¥Fnr123
3605 Atbjm¥App1
3606 httpmm
3607 xcn
3608 ₴EnLtb8
3609 0h₴
(d)
Splicing
800¥Fnr123Atbjm¥App1httpmmxcn₴EnLtb80h₴
(e)
Perform text recognition, and remove a non-jump code sequence, to obtain jump code sequence information
¥Fnr123Atbjm¥
¥FnrL23Atbjm¥
¥Fnr123Atbjm¥
¥FnlI23Atbjm¥
₴EnLtb80h₴
₴EnLtb8Oh₴
(f)
Recognize a jump code sequence
No detailed information is obtained
Recognize a jump code sequence
T-shirt ¥89.9
(g)
(No jump code sequence recognition needs to be performed)
(No jump code sequence recognition needs to be performed)
Recognize a jump code sequence
Mr. Huang Haidian, Beijing
(h)
(No jump code sequence recognition needs to be performed)

FIG. 18

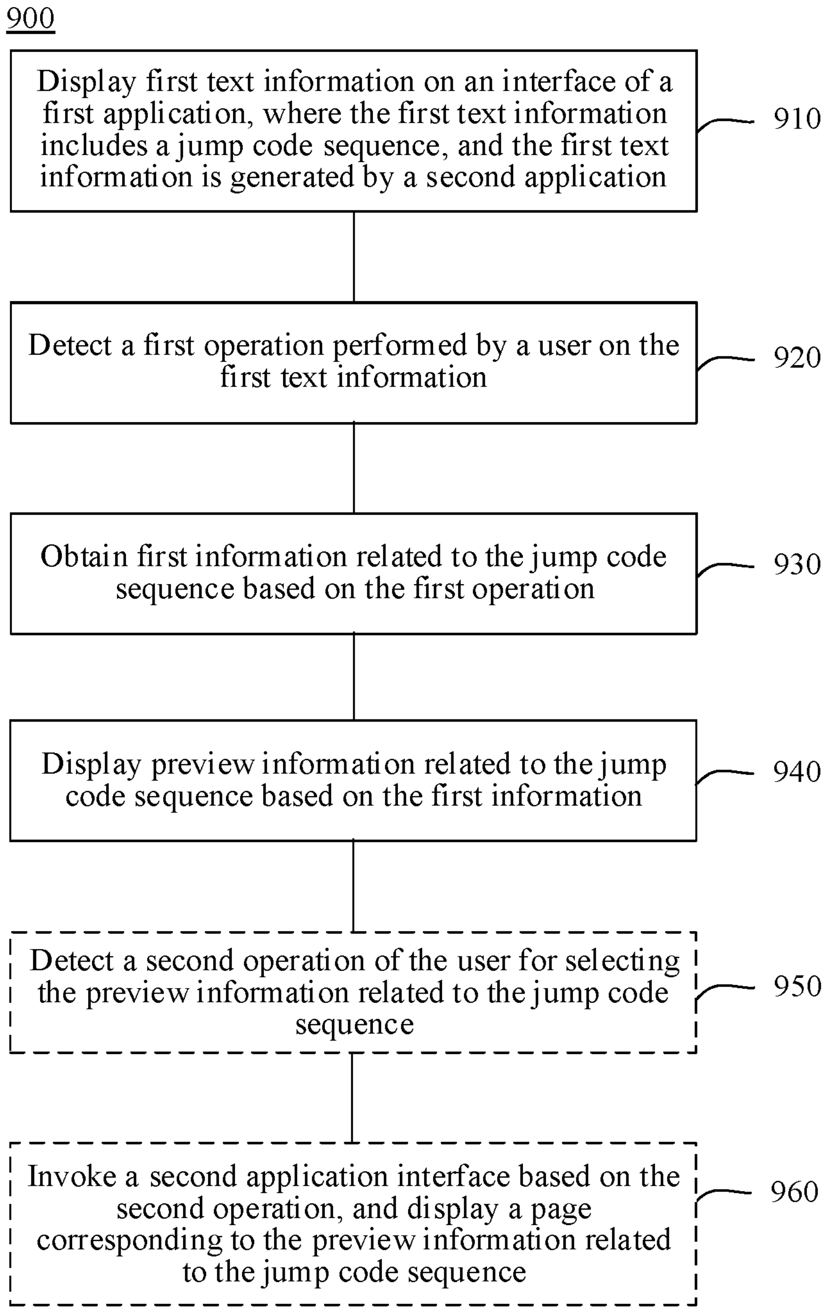
900
Display first text information on an interface of a first application, where the first text information includes a jump code sequence, and the first text information is generated by a second application
910
Detect a first operation performed by a user on the first text information
920
Obtain first information related to the jump code sequence based on the first operation
930
Display preview information related to the jump code sequence based on the first information
940
Detect a second operation of the user for selecting the preview information related to the jump code sequence
950
Invoke a second application interface based on the second operation, and display a page corresponding to the preview information related to the jump code sequence
960

FIG. 19

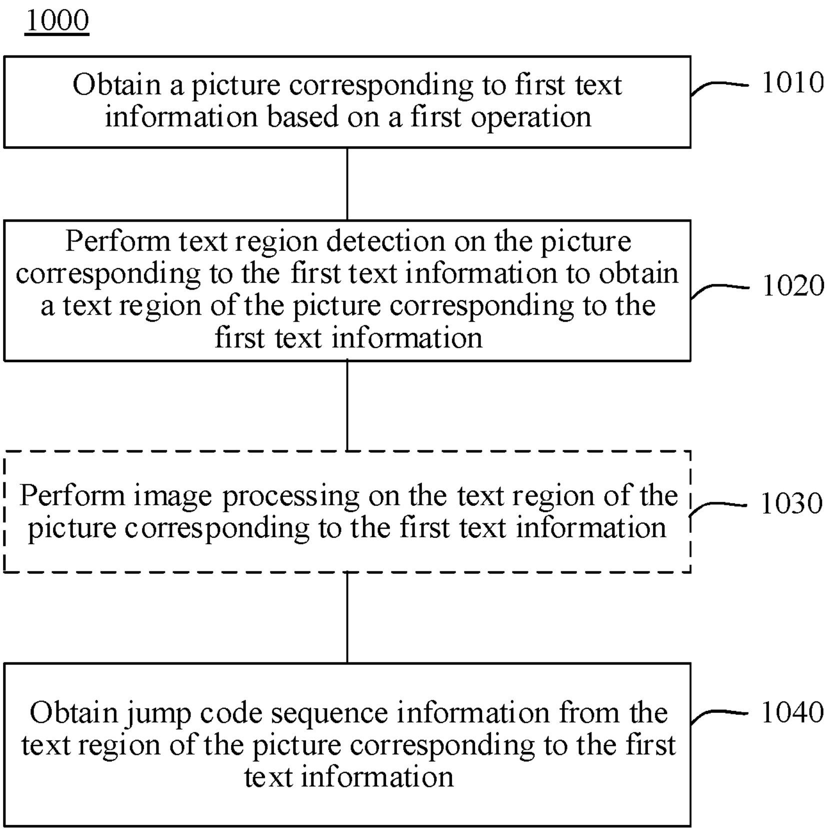
1000
Obtain a picture corresponding to first text information based on a first operation
1010
Perform text region detection on the picture corresponding to the first text information to obtain a text region of the picture corresponding to the first text information
1020
Perform image processing on the text region of the picture corresponding to the first text information
1030
Obtain jump code sequence information from the text region of the picture corresponding to the first text information
1040

FIG. 20

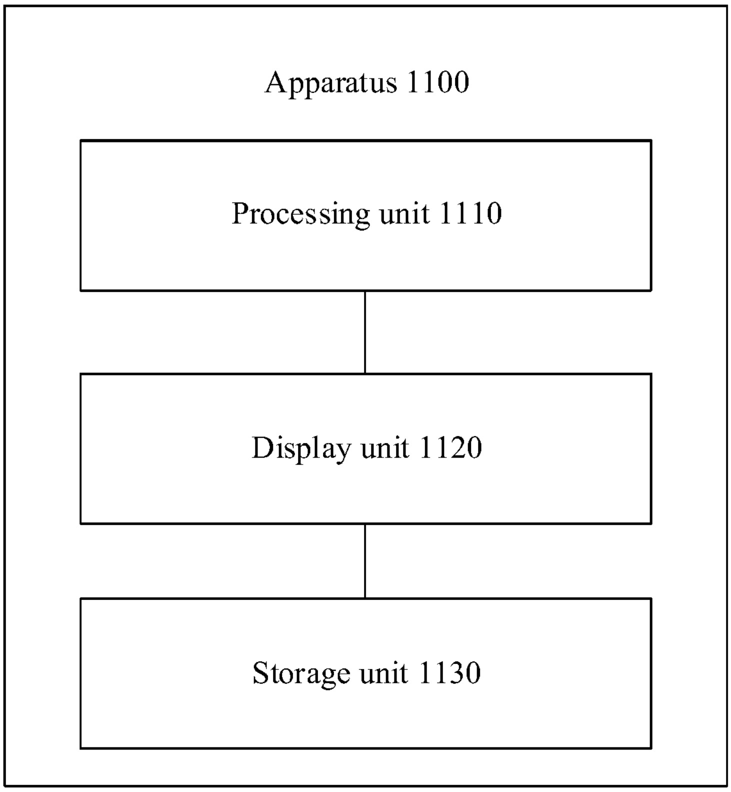
Apparatus 1100
Processing unit 1110
Display unit 1120
Storage unit 1130

FIG. 21

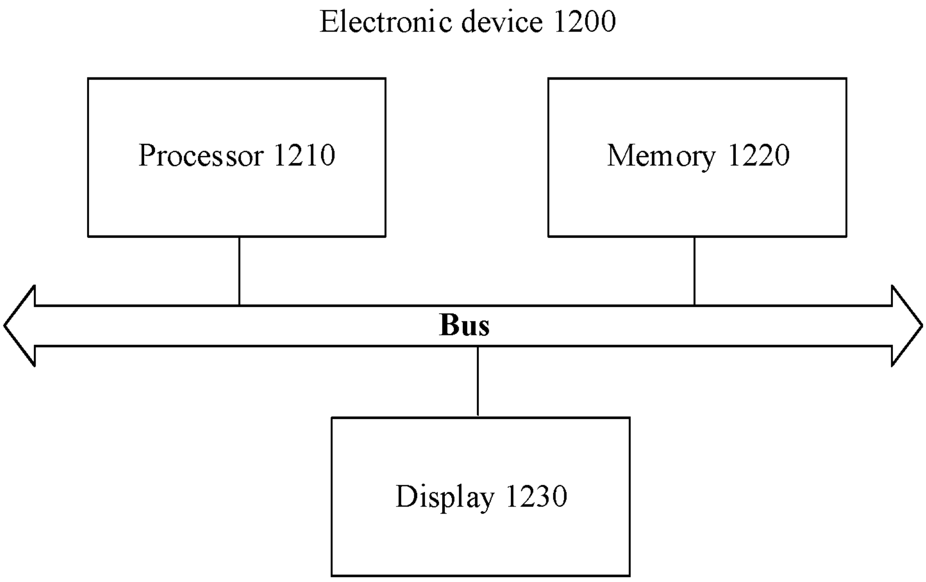
Electronic device 1200
Processor 1210
Memory 1220
Bus
Display 1230

FIG. 22

**INTERNATIONAL SEARCH REPORT**

International application No.
**PCT/CN2021/129728**

**A. CLASSIFICATION OF SUBJECT MATTER**

G06F 9/54(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC: 链接, 分享, 跳转, 应用, 标识, 预览, 序列, 识别, 映射, 界面, link, sharing, jump+, application, identification, preview, sequences, recognition, map, interface

**C. DOCUMENTS CONSIDERED TO BE RELEVANT**

| Category* | Citation of document, with indication, where appropriate, of the relevant passages | Relevant to claim No. |
|---|---|---|
| Y | CN 106339436 A (VIVO COMMUNICATION TECHNOLOGY CO., LTD.) 18 January 2017 (2017-01-18)<br>description, paragraphs [0033]-[0091] | 1-20 |
| Y | CN 106294459 A (ALIBABA GROUP HOLDING LIMITED) 04 January 2017 (2017-01-04)<br>description, paragraphs [0056]-[0072] | 1-20 |
| A | CN 107659603 A (TENCENT TECHNOLOGY (BEIJING) CO., LTD.) 02 February 2018 (2018-02-02)<br>entire document | 1-20 |
| A | US 2014023271 A1 (QUALCOMM INC.) 23 January 2014 (2014-01-23)<br>entire document | 1-20 |

☐ Further documents are listed in the continuation of Box C.  ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 January 2022** | **10 February 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/129728**

| Patent document cited in search report | | | Publication date (day/month/year) | Patent family member(s) | | | Publication date (day/month/year) |
|---|---|---|---|---|---|---|---|
| CN | 106339436 | A | 18 January 2017 | None | | | |
| CN | 106294459 | A | 04 January 2017 | TW | 201642156 | A | 01 December 2016 |
| | | | | WO | 2016196348 | A1 | 08 December 2016 |
| | | | | JP | 2018519575 | A | 19 July 2018 |
| | | | | JP | 6816028 | B2 | 20 January 2021 |
| | | | | US | 2016350265 | A1 | 01 December 2016 |
| CN | 107659603 | A | 02 February 2018 | None | | | |
| US | 2014023271 | A1 | 23 January 2014 | US | 2014023270 | A1 | 23 January 2014 |
| | | | | US | 9183458 | B2 | 10 November 2015 |
| | | | | WO | 2014014687 | A1 | 23 January 2014 |
| | | | | WO | 2014014686 | A1 | 23 January 2014 |
| | | | | CN | 104428792 | A | 18 March 2015 |
| | | | | US | 9014480 | B2 | 21 April 2015 |
| | | | | EP | 2875470 | A1 | 27 May 2015 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202011268409